# EUROPEAN PATENT SPECIFICATION

(11) **EP 0 575 939 B1**
(45) Date of publication and mention of the grant of the patent: **08.09.1999**
(21) Application number: 93109883.4
(22) Date of filing: 21.06.1993
(51) Int. Cl.: F02D 19/02, F02D 45/00, F02D 41/06

(54) **Internal combustion engine and method for operating said engine**
Brennkraftmaschine und Verfahren zum Betrieb der Brennkraftmaschine
Moteur à combustion interne et procédé pour le fonctionnement d'un tel moteur

(30) Priority: 24.06.1992 US 903616; 24.12.1992 JP 34493692; 24.12.1992 JP 34493792; 24.12.1992 JP 34493892; 24.12.1992 JP 34494092
(43) Date of publication of application: 29.12.1993
(73) Proprietor: YAMAHA HATSUDOKI KABUSHIKI KAISHA, Iwata-shi Shizuoka-ken, 438 (JP)
(72) Inventor: Kurihara, Noriyuki, Hamamatsu-shi, Shizuoaka-ken (JP); Matsumoto, Hiromitsu, Hamamatsu-shi, Shizuaoka-ken (JP); Iida, Yoshikatsu, Kakegawa-shi, Shizuoak-ken (JP)
(74) Representative: Grünecker, Kinkeldey, Stockmair & Schwanhäusser Anwaltssozietät

(56) References cited:
- EP-A- 0 346 989
- DE-A- 3 321 424
- GB-A- 1 327 513
- US-A- 4 285 700

## Description

The present invention relates to the field of internal combustion engines which at least temporarily, are fueled with gaseous fuel. More specifically the invention relates to a method of operating such an engine according to the preamble of claim 1. Further, the invention relates to an internal combustion engine comprising the features of the preamble of claim 9.

The quest for developing internal combustion engines which can operate on fossil fuels and still preserve not only natural resources, but also protect the economy and environment from pollution, are well known.

In order to meet future clean air requirements, the automobile industry must adjust to the production of vehicles having no or ultra-low emission properties with drastically reduced hydrocarbon emissions as well as reduced carbon monoxide and nitrogen oxide emissions. One way in which these goals can be accomplished is to power internal combustion engines either completely or at least temporarily by a gaseous fuel stored under regulated vacuum or pressure as a compressed gas (including natural gas) or liquified petroleum. Hereinafter such engines are called as liquified petroleum gas engines or "LPG" engines. Liquified petroleum gas (LPG) or compressed gas as gaseous fuel for powering internal combustion engines is one of the promising alternatives to the use of gasoline when used in a gaseous state for the spark ignited internal combustion engine. Normally, a mixture of butane and propane as liquified petroleum gas is used, As such gaseous fuels tend to burn cleaner than liquid hydrocarbons such as gasoline, prolonged engine life results as well as increased intervals between service visits, particularly oil change intervals, as no dilution of the oil occurs. In addition, these fuels give rise to the possibility of improved emmission control for a number of reasons. Thus, the carbon dioxide exhaust emission is reduced by 11% compared to gasoline per same calorific value because of the high heating value which results from the H/C ratio of butane and/or propane. A better fuel economy due to higher anti-knock quality and better combustion properties could be obtained with such fuels. Moreover, no lead, suplhur dioxide or soot is produced through LPG engines. Due to the closed fuel system no evaporation of the fuel or condensation of a fuel film on the intake manifold takes place, even under cold start conditions. . Due to the quite different properties of such an evaporated gaseous fuel in comparison to liquid gasoline, metering and regulating of fuel supply in order to accurately meet a desired air/fuel ratio is more complicated. Evaporated gaseous fuel from an LPG source has a bigger volume per unit heating value than liquid gasoline (about 330 times more) and, accordingly, normally a very large fuel control valve is required when a feedback control of the air/fuel ratio is to be established for an LPG engine. Such a metering fuel control valve is not commercially available so that, until now, no successful fuel injection system for powering an internal combustion engine is widely used on the market.

Moreover, LPG regularly consists of propane and butane. So there is a wide variety of mixing ratios. Consequently, an LPG mixing device must have a very wide control level range of the air/fuel ratio of the charge supplied to the combustion area of the engine. For example, in order to acquire a stoichiometric mixture for propane, a ratio of 41.7:1000 (air) by volume is required, while for butane a ratio of 32.2:1000 (air) by volume is necessary. Thus, there is a difference of 30% resulting from the type of liquified gas used.

Another obstacle to a broader use of LPG for fueling engines is the fact that it is difficult to prevent the induction air from bleeding into an idle circuit through a metering nozzle when the load responsive throttle valve is in a small opening condition since there is no liquid surface which normally prevents said air bleeding in a conventional gas line engine.

Accordingly, it is necessary to look for an improved internal combustion engine, specifically an improved induction system which allows a precise metering of even gaseous fuel to be adjusted in response to engine running and engine environmental conditions. Moreover, a similar need exists to perfect the method for operating such an internal combustion engine.

By the way, within the framework of this application, the term LPG engine is understood in a broad sense, that means the present invention is directed to engines, charge-forming systems, or a method for operating an internal combustion engine which either permanently (under all running conditions) or only temporarily (for example, under starting conditions) is fueled by means of a gas stored under regulated vacuum or pressure as a compressed gas (including natural gas) or vaporized from a liquified pressurized gas (liquified petroleum) as a source of fuel for powering the engine.

Previously, it has been proposed to employ as a charge former for internal combustion engines using gaseous fuels, a generally conventional type of carburetor having a fixed venturi section into which the main fuel circuit discharges. However, there is a specific disadvantage with such a type of system. Conventionally, the fixed venturi section cooperates with a fuel discharge circuit in which metering jets are allowed for metering the amount of fuel and air blended at the main fuel discharge. However, the amount of fuel discharge will depend upon the air flow through the venturi section and a fixed metering jet for both air and fuel will not give the desired control over the air/fuel ratio under all circumstances.

Although employing gaseous fuel for engines having carburetors of the air valve type as indicated in US-A-4,285,700 are already known, these systems have not been completely successful in controlling and providing the desired air/fuel ratio under all engine running and engine environmental conditions. Particularly in the low load range, i.e., in the transistion from idle to off-idle, gaseous fueled air valve carburetors have had difficulties in maintaining the desired air/fuel ratio.

As already mentioned for providing good emission control as well as good fuel economy, it is essential to provide a very accurate control of the air/fuel ratio. This is normally performed by controlling the amount of fuel that is supplied to the engine. At times, either fixed or variable air bleeds for atomising fuel well may be employed in the fuel discharge circuit, as it is known from concepts being normally applied to liquid fueled engines. With a gaseous fueled engine, it is the normal practice to regulate the pressure of the fuel that is delivered from a source in which it is contained under pressure as a gas or liquid to a pressure in which the fuel becomes gaseous and at which it is at or slightly above atmospheric pressure. Normally, these systems include fuel and air controls that have fixed settings. However, such controls do not always provide adequate and immediate control of the air/fuel ratio of the engine.

Normally the air/fuel ratio of an engine is controlled by using some form of sensor in the engine that will sense either the air/fuel ratio directly, or an oxygen content in the exhaust gases, to arrive at a determination of an air/fuel ratio. These type of systems are so-called "feedback" control systems in that the resultant output of the engine is sensed and measured and this sensed output signal is then fed back to the fuel system to control the air/fuel ratio. Such systems can be highly effective if the sensor provides an accurate indication of the oxygen content.

However, one of the most critical time periods in engine emission control is during start-up of the engine. During start-up, the oxygen sensor which does not operate below certain temperatures, cannot be relied upon to provide the initial control during starting and during cold warm-up of the engine. As a result, it is very difficult with conventional engines to maintain air/fuel ratios under these starting and warming-up conditions. Thus, an improved internal combustion engine or charge forming system comprising a gaseous fuel supply should be focused on quickly assuring that the sensor is in the appropiate operating condition to provide an accurate signal, and to immediately initiate a feedback air/fuel control on the basis of the output of said sensor. In addition to the afore-noted problems with sensors for the air/fuel ratio control, many exhaust systems employ catalytic convertors for treating the exhaust gases to render certain pollutants more acceptable in order to reduce them. As is well known, many of these catalytic convertors also require operation under elevated temperature. Hence, these convertors are not effective during cold starting and cold warm-up and, therefore, the exhaust emission control problems are further magnified. Added to these difficulties is the fact that liquid fuel tends to condense out in the induction system of an conventional gasoline internal combustion engine during start-up at low temperatures and during running at low temperatures. In order to accommodate this condition, it has been the practice to supply a richer air/fuel mixture under cold starting and cold warm-up. Fuel enriching under starting conditions is also taught by US-A-4,285 700. This not only adversely affects the fuel economy, but can also have serious effects on the exhaust emission control.

Thus, an improved internal combustion engine and charge forming device thereof, as well as an improved method for operating the engine, should allow not only a feedback control of the air/fuel ratio to be initiated as soon as possible after starting of the engine, but also the catalytic convertor should be heated as rapidly as possible without requiring overly-rich fuel/air mixtures. An internal combustion engine and method of operating same as mentioned above is known from EP-A-346 989. The LPG engine shown there uses air/fuel ratio control on the basis at a fully mechanical air fuel control which is corrected by a pre programmed part of the device. No feed back control is used for the correction. Only if a catalytic converter is used a λ-feed back control is implemented. Further, this prior art reference teaches diluting a flow of fuel with air to control λ.

From GB-A-1 327 513 a lean mixture operated engine is known wherein a lean mixture is supplied also during engine startup conditions.

The objective of the present invention is to provide an improved method for operating an internal combustion engine which, at least temporarily, is fueled with gaseous fuel from a source of LPG which allows to reduce the content of harm full components in the exhaust gas at the earliest possible timing of engine operation. Further, the present invention intends to provide an internal combustion engine which shows improved composition of the exhaust gas when starting the engine.

In order to peform said objective, the present invention provides a method of operating an internal combustion engine comprising the features of claim 1.

The advantageous effects of said measure, namely supplying a fuel/air mixture which is leaner than stoichiometric at first idle operation (after the first burning occurs), the catalytic converter, more specifically the catalyst therein, is heated quickly. As a result, not only the time until the catalyst is partially activated but also the time until the catalyst is completely activated are shortened.

According to another preferred development of said method, at first idle operation, an idle speed control valve is opened for introducing additional mixture which maintains the air/fuel ratio in the comsution chamber in the lean range. This procedure is useful for heating the catalyst of the catalytic converter quickly to its completely activated condition and working temperature.

In further detail, the method according to yet another embodiment of the present invention, is characterized in that a lean fuel/air mixture of λ > 1 is supplied in response to at least cold starting of the engine, specifically after first burning, for rapidly heating the catalyst of the catalytic convertor to its completely activated temperature. This mixture is leaner than stoichiometric at first idle position, i.e., after the first burning occurs. Moreover, during cranking (period between closing the ignition switch and first burning) in the starting operation (before the first burning occurs), there is adequate fuel supply (lean or stoichiometric) for starting.

At this time, a mixture which is supplied from a charge forming device can be used in the combustion chamber as it is, i.e. without enrichment under cold starting conditions, said mixture serves for exact first burning and reducing hydrocarbons in the exhaust gas.

According to another preferred embodiment of the method of the present invention, a lean fuel/air mixture of λ > 1 is supplied to the combustion chamber until an oxygen sensor starts operating which is disposed in the exhaust gas arrangement, said oxygen sensor outputting a control signal for feedback control of the supply of stoichiometric fuel/air mixture of λ = 1 to the combustion chamber. In this way, an early commencement of the feedback control of the air/fuel ratio by bleeding air into the supply of evaporized gaseous fuel is obtained soonest to adjust a stoichiometric fuel/air mixture of λ = 1 for further engine operation.

According to yet other preferred embodiments of the method according to the present invention, the period of supplying a lean fuel/air mixture of λ > 1 is equal to or longer than the period until the catalytic convertor commences operation.

Preferably, at least until the catalytic converter is partially activated, additional fuel mixed with an excessive amount of air, rendering the fuel/air mixture to be leaner than stoichiometric λ > 1, is supplied to the combustion chamber of the engine.

According to yet another preferred embodiment, the amount of fuel introduced into the intake manifold to mix with the intake air is basically pre-adjusted through a first fuel control valve upstream of a further regulation of the amount of fuel being mixed into the intake air by a controlled flow of bleed air into a fuel supply passage.

Moreover, according to yet another aspect of the method of the present invention, a controlled amount of fuel is supplied continuously into the intake passage of a charge forming system through a variable venturi-type mixing device, said variable venturi-type mixing device being controlled automatically in response to engine load.

For a precise exhaust emission control along the stoichiometric ratio of λ = 1, after the intial transient warming-up phase of starting engine operation is terminated, a feedback control of an air-bleed valve is performed in response to an output of an oxygen sensor disposed in the exhaust gas arrangement to perform a fine tuning of bleeding air into the flow of gaseous fuel upstream of the main regulator valve for adjusting the air/fuel ratio, while in a condition wherein the oxygen sensor does a basic pre-adjustment of a step value of a step motor which does not output a signal, which controls the air bleed control valve for maintaining the air/fuel ratio stoichiometric, is substantially kept constant, at any amount of air flow in the induction passage.

In this way, since a control of the air/fuel ratio feedback control is performed by the bleed air control valve which is separated from the valve which controls the amount os fuel supply corresponding to the amount of air flow in the induction passage, the feedback control can be peformed without controlling the amount of fuel supply to correspond to the amount of air flow through the induction passage. Therefore, although a large amount of fuel is to be supplied an accurate control of the fuel/air mixture is achieved and the air/fuel ratio can be controlled with a narrow window, specifically around the stoichiometric air/fuel ratio of λ = 1 and a three-way catalytic convertor can be used with high conversion ratio. Thus, despite the large amount of volume per a certain calorific value which is about 300 times that of gasoline, the air/fuel ratio can be precisely adjusted to the stoichiometric value taking the engine running and/or engine environmental conditions into consideration.

Under cold starting conditions or warming-up conditions of the engine, the place where the lean fuel/air mixture (leaner than stoichiometric) is supplied at first idling is at least the place where the burning of the mixture takes place, namely, the combustion chamber of the engine.

Accordingly, another preferred embodiment of the method according to the present invention comprises the discharge of additional mixture into the intake passage between the charge forming device and the combustion chamber of the engine, i.e. upstream of the combustion chamber when the engine is started by means of an idle speed control valve (ISC valve).

In this regard, heating of the catalytic converter and the catalyst to its working temperature of complete activation while simultaneously reducing the contents of hydrocarbons, nitrogen oxide (NOₓ) and carbon monoxide (CO), in the exhaust gas can be promoted by means of discharging oxygen into the exhaust passage to burn with small amounts of residual fuel present in the catalytic converter or the exhaust manifold.

Preferably in the present invention the air/fuel control is achieved by controlling the amount of bleed air and controlling the amount of fuel supplied upstream of the main regulator valve provided in conjunction with preferably a variable venturi-type mixing device (carburetor). The controlled fuel is supplied into the intake passage through said variable venturi continuously and sufficient vacuum is generated at the venturi for drawing fuel. Thus, when the feedback control in response to an output of the oxygen sensor, disposed at the exhaust gas arrangement, takes place and an appropriately controlled amount of fuel is continuously and exactly supplied into the intake passage and the air/fuel ratio in the intake passage is uniformed. Thus, also under low load conditions a sufficient vacuum is produced through the variable venturi-type mixing device.

According to yet another preferred aspect of the method according to the present invention, a unique response characteristic of the valve means used for adjusting the amount of fuel discharged into the intake passage of the charge forming device is obtained in that a main regulator valve of a variable venturi-type mixing device (carburetor) is designed to maintain a desired fuel/air mixture, specifically a stoichiometric mixture of λ = 1, with a substantially constant step value of a step motor controlled air bleed control valve while there is another fuel control valve which provides for compensating the amount of fuel supplied to the charge forming device in response to the engine running and/or engine enviromental conditions, adjusting the amount of fuel such that an average of the step value of the step motor controlled air bleed control valve becomes substantially constant.

The above object is achieved by an internal combustion engine comprising the features of claim 9.

Preferably the air intake passage of the engine comprises a load responsive throttle valve and an air/fuel ratio regulating main regulating means which is controlled automatically in response to a flow of atmospheric air into the air intake passage to maintain substantially constant a vacuum in the intake passage at a charge forming area thereof. An exhaust gas arrangement for discharging the exhaust gas from said combustion chamber of the engine and a fuel delivery system for at least temporarily supplying vaporized fuel from the source of liquified pressurized gaseous fuel are also provided. Such an internal combustion engine is characterized in that said main regulator of which is communicated to atmospheric air whereas the downstream end supplies the fuel/air mixture towards the combustion chamber. Said air intake passage comprises a load responsive throttle valve and an air/fuel ratio regulating main regulating means which is controlled automatically in response to a flow of atmospheric air into the air intake passage to maintain substantially constant a vacuum in the intake passage at a charge forming area thereof. An exhaust gas arrangement for discharging the exhaust gas from said combustion chamber of the engine and a fuel delivery system for at least temporarily supplying vapourized fuel from the source of liquified pressurised gaseous fuel are also provided. Such an internal combustion engine is characterised in that said main regulator means comprises a variable venturi-type mixing device having a displaceable valve member for controlling a main metering jet of a fuel supply chamber, and that at least one fuel supply control valve is provided to assure a lean or stoichiometric air/fuel ratio of a charge supply to the combustion chamber in response to engine operating and/or engine environmental conditions (including variable congestion of the gaseous fuel).

Preferably, the fuel supply control valve is an air bleed control valve which is controlled in response to an output signal of an oxygen sensor disposed at the exhaust gas arrangement. According to yet another preferred embodiment of the present invention is that an oxygen sensor is disposed upstream of a catalytic convertor in an exhaust manifold.

According to another preferred embodiment of the present invention, the step motor controlled air bleed control valve is adapted to control an amount of gaseous fuel flowing through an air supply passage which opens upstream of the main metering jet into the fuel supply chamber, said air bleed control valve being preset to a midway valve position an average of which is substantially kept constant while said constant valve characteristic of the air bleed valve is superimposed by air controlled signal of the oxygen sensor.

According to yet another preferred embodiment, the main regulator valve of the variable venturi-type mixing device (carburetor) comprises a needle valve co-operating with the main metering jet wherein the configuration of the needle valve is that to maintain the desired air/fuel ratio, specifically the stoichiometric condition of λ = 1, with a substantially constant average step value of the step motor for the air bleed control valve at any amount of air flow.

A particularly broad control range of the fuel control upstream of the intake passage is obtained by means of another step motor controlled fuel control valve which is provided in addition to the air bleed control valve, said other fuel control valve is adapted to control the flow of fuel from the source of gaseous fuel into the fuel supply chamber. Preferably said main fuel control valve is provided upstream of the main metering jet to adjust the fuel supply to the main fuel chamber in response to the engine operating and/or environmental conditions. According to this arrangement, an accurate control of the air/fuel ratio is achieved even if various forms of gaseous fuels are used since a sufficiently broad control range from reacting on a signal from the oxygen sensor is maintained. That means the air/fuel ratio can easily be maintained at a stoichiometric value of λ = 1 even if engine environmental conditions including the composition of the gaseous fuel mixture changes. If only the air bleed control valve is provided as a single fuel supply control valve without providing the additional main fuel control valve the control range becomes narrow when the engine running and/or environmental characteristics change since the step value of the step motor of the air bleed control valve for maintaining the stoichiometric value of λ = 1 is moved to the fully opened position of said air bleed control valve or the fully closed position of said air bleed control valve and any feedback control is achieved based upon that varying step value.

According to yet another preferred embodiment of the present invention an idle passageway is provided between the main fuel chamber and an idle part positioned downstream of an idle position of the load responsive throttle valve to control the idle fuel flow. More specifically, the idle passageway guideing a mixture is provided between the upstream and downstream sides of the load responsive throttle valve and is controlled by means of an idle control valve which assumes an open position under idling conditions.

In order to provide a rapid shut-off of fuel supply under certain engine running conditions, specifically under rapid deceleration, at least one fuel shut-off valve is provided for rapidly supplying additional air into the amin fuel chamber of the charge forming system.

Other preferred embodiments of the present invention are laid down in the further sub-claims.

In the following, the present invention is explained in greater detail by means of several embodiments thereof in conjunction with the accompanying drawings wherein:
Figure 1 is a partially schematic cross-sectional view taken through a portion of an internal combustion engine constructed and operated in accordance with an embodiment of the present invention,
Figure 2A, 2B is a block diagram flow chart showing the starting procedure for an engine in accordance with a first embodiment of the present invention,
Figure 3A, 3B is a block diagram flow chart showing the starting operation in accordance with another embodiment of the present invention,
Figure 4 is a graphical view showing the various control regions during the running of the engine,
Figure 5 is a block diagram of the feedback control of the air/fuel ratio established during the running of the engine,
Figure 6 is a block diagram showing the determination of the feedback control of the air/fuel ratio depending upon whether the engine is operating at idle or at off-idle,
Figure 7 is a block diagram explaining a control routine of the feedback control during rapid acceleration of the engine,
Figure 8 is a graphical representation showing the control strategy of the feedback control of the air/fuel ratio during rapid acceleration of the engine,
Figure 9 is a graphical view showing the control routine for the feedback control of the air/fuel ratio during extreme decelerations,

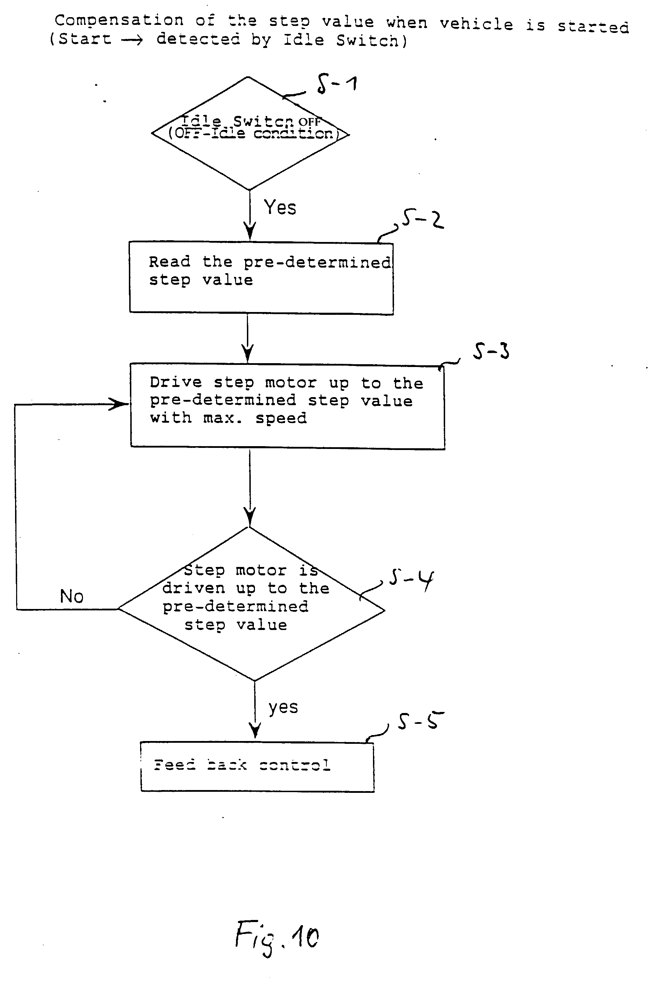

Figure 10 is a block diagram showing compensation of the step value of a step motor controlled fuel control valve under engine starting conditions,

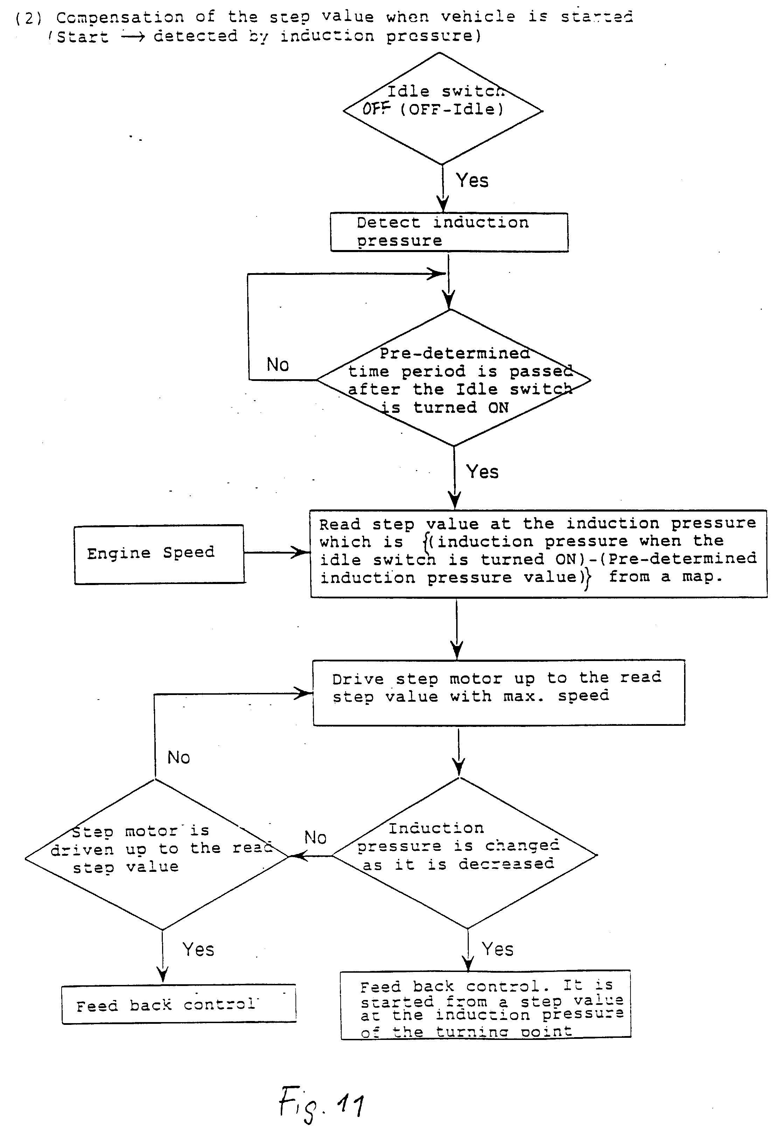

Figure 11 is a block diagram similar to that of Figure 10, but for another embodiment of the present invention wherein the starting condition is detected by monitoring the induction pressure, whereas the routine according to Figure 10 is based on a detection of the starting condition by means of monitoring the idle switch,
Figure 12 is a graphical representation of the compensation routine for the step value of a stepping motor controlled fuel control valve associated with the block diagrams of Figures 10 and 11,
Figure 13 is a graphical representation of the characteristics of the different parameters and sensor means under engine starting conditions in compliance with the first embodiment of the present invention as exemplified through Figure 2A, 2B,
Figure 14 is a graphical view similar to that of Figure 13, but for a second embodiment of the present invention as exemplified in Figures 3A, 3B,
Figure 15 is a diagram showing the step value versus the time for movement of a step motor of the stepping motor controlled fuel control valve with the engine operation condition as parameter,
Figures 15a to 15c show the control of the step value for operating a step motor of a stepping motor controlled fuel control valve in response to different engine operating conditions (idling, off-idle, and rapid acceleration),
Figure 16 is a block diagram for an alternative of adjusting a step value of a step motor of a stepping motor controlled fuel injection valve detecting the cooling water temperature as another parameter for detecting engine starting,
Figure 17 is a map for a determination of a step value for a step motor of a step motor controlled fuel control valve during cranking in response to the induction pressure,
Figure 18 is a graphical view related to Figures 16 and 17 showing the compensation of the step value on the basis of the cooling water temperature detected,
Figure 19 is a graphical view showing the effects of lean mixture supplied during the inital warming-up phase of the engine in order to render a catalytic convertor to assume its working temperature more rapidly than conventional,
Figure 20 is a graphical representation disclosing the inter-relationship between a first and second fuel supply control valve in order to keep a step value of at least one of said valves substantially constant, rendering the air/fuel ratio control highly effective,
Figure 21 is a diagram ellucidating the control of the fuel/air mixture by means of an air/fuel ratio control performed by a main system (variable venturi-type mixing device) and a slow system by bleeding air to preadjust the amount of fuel prior to the adjustment of the appropriate air/fuel ratio through the main system,
Figure 22 discloses schematically in (a) and (b) the influence of a variable venturi-type mixing device to the air/fuel ratio control in conjunction with a bleed air pre-control of the fuel amount,
Figures 23 are equivalent schemes for explaining the effects of air bleed control of the amount of fuel upstream of a main control by a variable venturi carburetor (Figure 23a), and without such a bleeding of air into the flow of fuel (Figure 23b),
Figure 24 is a graphical view showing schematically the effects of air bleeding to vary the fuel supply in conjunction with a variable venturi-type carburetor comprising a step value of 45 for the air bleed valve (Figure 24a) and a step value of 55 for the air bleed valve in Figure 24b,
Figure 25 is a graphical view showing schematically a control of the fuel/air mixture of the engine according to the present invention under idling conditions,
Figure 26 is a graphical view, similar to that of Figure 25, for a condition after a manually-operated, load-responsive throttle valve is slightly opened,
Figure 27 is a graphical view, similar to that of Figures 25 and 26, for a condition wherein the manually-operated, load responsive throttle valve is opened further,
Figure 28 is a graphical view showing the various control regions in conjunction with supplying additional sub-fuel into the exhaust gas arrangement of the engine,
Figure 29 is a partially schematic cross-sectional view, in part similar to Figure 1, showing another embodiment of the present invention.
Figure 30 is a partially schematic cross-sectional view, of a portion of an engine, simlar to Figure 29, showing another embodiment of the present invention,
Figure 30A and Figure 30B showing alternative control schemes of the twin injector of Figure 31.
Figure 31 is a partially schematic cross-sectional view, similar fo Figure 29 and Figure 30 showing another embodiment of the present invention,
Figure 31a is a diargram showing the effect of the staggered carburetor arrangement of the embodiment of Figure 31,
Figure 32 to Figure 34 partially schematic cross-sectional views, in part similar to Figure 1, showing other embodiments of the present invention.

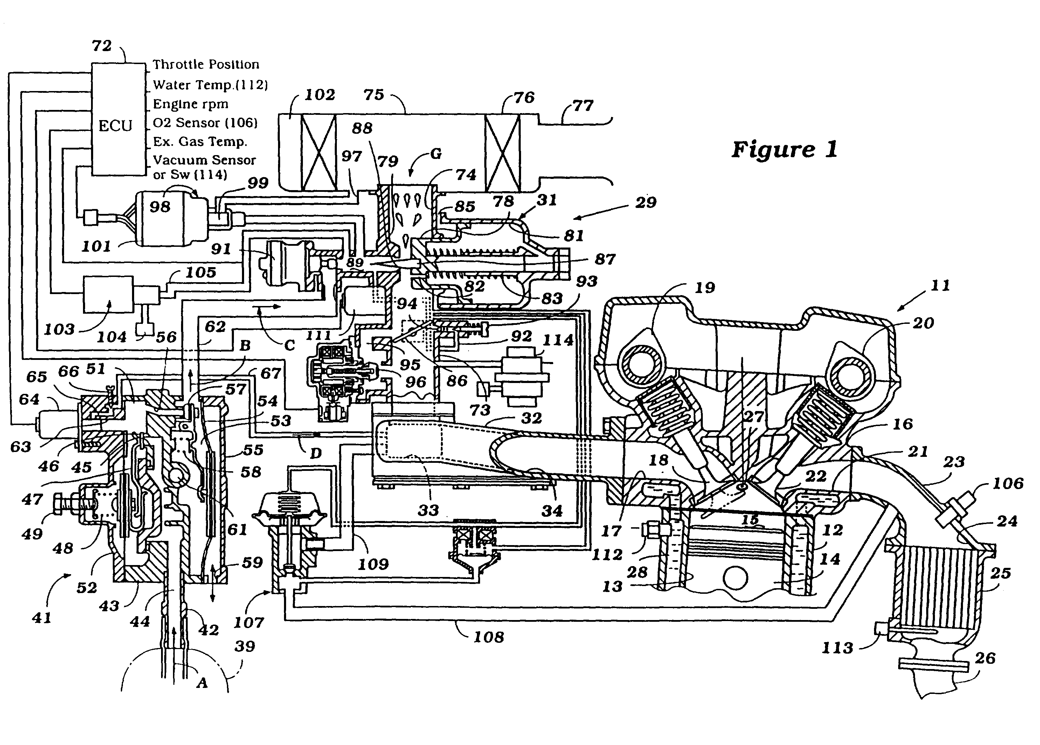

Referring now in detail to the drawings, and initially to Figure 1, an internal combustion engine provided with a fuel supply system constructed in accordance with an embodiment of the present invention is shown partially and indentified generally by the reference numeral 11. The engine 11 is only shown partially because the internal details of the engine, except for its induction and charge forming system and the controls therefore, form no part of the invention. However, a portion of the engine 11 is depicted for ease in understanding how the invention may be practiced in conjunction with any known types of internal combustion engines. It also should be noted that the charge forming system is not limited to use in reciprocating engines of the type depicted, but may also be employed with rotary type of engines. Also, the invention is described in conjunction with only a single cylinder of a multi-cylinder engine as it is believed that those skilled in the art can readily understand how the invention is practiced in conjunction with multiple cylinder engines and engines of varying configurations.

The engine 11 includes a cylinder block 12 having one or more cylinder bores 13 in which pistons 14 are slidably supported. The pistons 14 are connected in a known manner by connecting rods (not shown) to a crankshaft for providing an output from the engine 11. The cylinder bore 13 and head of the piston 14 form a combustion chamber 15 along with a cylinder head 16 that is affixed in a known manner to the cylinder block 12.

One or more intake passages 17 extend through one side of the cylinder head assembly 16 and have their communication with the combustion chamber 15 controlled by poppet valves 18 that are slidably supported in the cylinder head 16 in a well known manner.

One or more exhaust passages 21 extend through the opposite side of the cylinder head 16 from each combustion chamber 15. The flow through the exhaust passage 21 is controlled by poppet type exhaust valves 22 which are also operated by an overhead mounted exhaust camshaft 20 in a well known manner.

An exhaust manifold 23 is affixed to the exhaust side of the cylinder head 16 and receives the exhaust gases from the exhaust passages 21. An outlet 24 of the exhaust manifold 23 communicates with a catalytic convertor 25 having a catalyst bed that includes a so-called "three-way catalyzer" for oxidizing carbon monoxide (CO) and hydrocarbons (HC) while deoxiding nitrous oxide (NOₓ) to render the exhaust gases as harmless as possible. The exhaust gases thus treated are then discharged to the atmosphere through an exhaust pipe 26 and appropriate exhaust and muffler system (not shown).

In the illustrated embodiment, the engine 11 is of the four valve per cylinder type (i.e., two intake valves 18 and two exhaust valves 22 per cylinder). Of course, it should be readily apparent to those skilled in the art that certain features of the invention can be employed with engines having other types of valving or porting systems. A spark plug 27 is mounted in the cylinder head 16 and has its spark gap disposed centrally in the combustion chamber 15 for firing the charge therein in a well known manner.

The engine 11 is also water cooled in the illustrated embodiment and to this end, the cylinder block 12 and cylinder head 16 are provided with a cooling jacket or cooling jackets 28 through which liquid coolant is circulated by means of a coolant pump (not shown). This coolant is then passed through an external heat exchanger (not shown) for cooling in a well known manner.

A fuel/air charge is supplied to the combustion chambers 17 by means of an induction and charge forming system, indicated generally by the reference numeral 29 and which includes a charge former in the form of a mixing device 31 which is mounted in the inlet section of an intake manifold 32 that extends along the intake side of the engine and which includes a plenum section 33. A plurality of individual runner sections 34 extend from the plenum section 33 to supply each of the intake ports 17 of the engine 11.

In accordance with the invention, the engine 11 is fueled with a gaseous fuel that is stored under pressure as a liquid in a pressure source, show in phantom at 39. The fuel stored within the source may be of any of the known hydrocarbon types of gaseous fuel such as butane, propane, or a mixture thereof, or any of the other well known and used gaseous fuels. As is well known, the heat content and burning characteristics of these gases vary from one to another and this is accommodated for in the system to be described in a manner which will become apparent. The fuel from the high pressure source 39 is delivered to a vaporizer and pressure regulator, indicated generally by the reference numeral 41 through an inlet conduit 42 of the regualtor 41 as shown by the arrow A.

The regulator 41 is comprised of an outer housing assembly including a main body portion 43 in which an inlet passage 44 is formed that communiates with the inlet fitting 42. The passage 44 extends to a first pressure stage regulating port 45 which has its opening and closing controlled by a valve 46 that is operated by an assembly 47 which is biased by a spring 48 having its pre-load adjusted by a screw 49. The valve 46 opens and closes communication with a chamber 51 formed by the housing 43 and a first cover plate 52 so as to reduce the pressure of the gaseous fuel in a first stage to a pressure of about 0.3Kg/cm² gage.

The first regulating chamber 51 communicates with a second regulating chamber 53 formed by a cavity in the side of the main housing member 43 opposite the cover plate 52 and which is closed by means of a diaphragm 54 held in place by second cover plate 55. A passageway 56 communicates the chamber 53 with the chamber 51 and a second pressure regulating valve 57 operated by the diaphragm 54 controls the opening and closing of the passageway 56 so that gas will flow in the direction of the arrow B. A biasing spring 58 acts against the diaphragm 54 and the backside of the diaphragm 54 is opened to atmospheric pressure through an atmospheric port 59 so that the second regulating stage will reduce the pressure of the gaseous fuel in the chamber 53 to just slightly below atmospheric pressure.

The liquid coolant which has been heated in the engine cooling jacket 28 is also circulated through the regulator 41 and to this end there is provided an internal heating passage 61 formed in the main housing 43 which is in communication both with the gas entering the inlet passage 44 and the second regulating chamber 53 so as to maintain a more uniform temperature of the gas in the regulator 41 so as to insure better vaporization, regulation and better control of the pressure of the gaseous fuel delivered to the charge former 31.

An outlet conduit 62 delivers the two stage pressure regulated gaseous fuel to the main fuel circuit of the carburetor 31 as shown by the arrow C. This main fuel circuit will be described later.

Gaseous fuel through a sub-fuel supply circuit, is also supplied from the regulator 41 to an enrichment circuit in the manifold plenum chamber 33, but at a slightly higher pressure than the fuel pressure supplied to the main fuel circuit. To accomplish this, a second delivery passage 63 is formed in the cover plate 52 and communicates with the first regulating chamber 51. An electrically operated sub-fuel supply valve 64 controls the communication of the passage 63 with a further supply passage 65 formed in the cover 52. A flow controlling needle valve 66 communicates the passage 65 with a conduit 67 which extends to the plenum chamber 33 of the intake manifold 32 as indicated by the arrow D.

A CPU, indicated generally by the reference numeral 72, is provided for controlling the fuel system including the enrichment valve 64.

Moreover, depending on the type of oyxgen sensor being used, said sub-fuel supply valve 64 also serves for a brief testing operation during warm-up of the oxygen sensor if the oxygen sensor is of a type which senses when the air/fuel ratio is on the rich side (λ sensor). Such a supply of additional sub-fuel into the plenum chamber 33 of the intake manifold 32 is not required when, instead of such a stoichiometric oxygen sensor, a lean burn universal exhaust gas oxygen sensor (lean sensor) is used which senses when the air/fuel ratio is on the lean side.

The mixing device 31 is of the air valve or constant pressure type providing a substantially constant vacuum at the venturi or induction passage and includes a main body portion 73 which defines an air horn 74 that receives atmospheric air, indicated by the arrow G, from a suitable air cleaner and/or air silencer 75. The air cleaner 75 has a filter element 76 through which air is drawn from an atmospheric air inlet 77 for filtration and silencing and delivery to the air horn 74 of the mixing device.

Since the constant vacuum carburetor-like mixing device 31 is of the air valve or constant pressure type, it has a variable venturi section. Within the framework of this specification, said carburetor-like mixing device 31 (forming the main charge regulating means) is also designated as variable venturi type carburetor (variable main jet) or SU carburetor. Such a type of carburetor enables to keep the vacuum at the venturi portion substantially constant at any amount of air flow in the induction passage (though the vacuum slightly increases there). Said mixing device 31 is provided with a sliding type of piston 78 which cooperates with an induction passage 79 formed downstream of the air horn 74 for changing the effective flow area and maintaining a constant vacuum in the induction passage at the piston 78. As is typical with this type of air valve carburetor, the sliding piston 78 is contained within a chamber 81 which receives air pressure from a point below the sliding piston 78 through a bleed port 82. A coil compression spring 83 is also provided in the chamber 82 so as to provide an opposing bias on the piston 78 toward its closed position. The opposite side of the chamber 81 is exposed to atmospheric pressure through an atmospheric air port 85. As a result, as the vacuum or pressure in the induction passage downstream of the piston 78 decreases, the piston 78 will be urged inwardly to the chamber 81 to open the flow passage and maintain a substantially constant vacuum, as is well known in this art.

A manually operated throttle valve 86 is provided in the induction passage 79 downstream of the piston 78 and supplies air to the manifold 32 and specifically its plenum chamber 33.

The piston 78 carries a metering rod or needle valve 87 that cooperates with a main metering jet 88 of a fuel supply chamber 89. The metering rod 87 will cooperate with the metering jet 88 to provide a progressively increasing flow area as the piston 78 moves to open the induction passage 79. The taper of the metering rod 87 and jet 88 are configured so as to provide the desired air/fuel ratio (λ = 1 condition), with substantially constant step value for a stepping motor of a stepping motor-controlled air bleed control valve 98, explained hereinafter.

The conduit 62 from the regulator 41 supplies the fuel chamber 89 of the mixing device 31. Another stepping motor controlled fuel control valve 91 is incorporated for providing a pre-adjustment of fuel flow from the conduit 62 into the fuel conduit 89. The fuel control valve 91 has a setting that is adjusted depending upon the type of fuel which is supplied to the engine and other characteristics including such things as flow resistance of the air cleaner 75 so as to maintain the desired air/fuel ratio. That is, it has been noted that the various forms of gaseous fuels may be employed and the fuel control valve 91 is operated so as to adjust the amount of fuel supplied depending upon the heat content of the fuel used.

The afore-indicated conditions, including the type of fuel or composition of the gaseous fuel mixture such as a butane/propane-ratio, atmospheric pressure drop in conjunction with uphill driving and vehicle use in mountains, thus loading of the filtering elements of the air filter etc., for the purposes of this application, are summarized as engine environmental conditions which are accommodated for by the first fuel supply control valve 91 controlling the flow of fuel from the fuel source into the fuel chamber 89. If a fuel supply control valve 91 would not be provided, a control range would become relatively narrow when the engine environmental conditions are changed, as the control strategy of a feedback control, described later on, in that case, would have to be based upon a moved step valve for controlling a stepping motor of the second fuel supply control valve, namely the air bleed control valve 98.

As has been noted there are various types of gaseous fuels which may be available. Since the amount of fuel supplied is controlled generally by the cooperation of the metering rod 87 with the metering jet 88, the fuel flow is primarily volumetric in nature. The heat content per cubic foot of various gaseous fuels may be quite different. Thus, fuels that have a lower heat content per cubic foot require more fuel flow to maintain the desired air/fuel ratio while fuels having a higher fuel content require a lower fuel flow. Thus, if a higher heat content fuel is employed, the valve 91 is restricted further, while if a lower heat content fuel is employed, the valve 91 is opened to provide more fuel flow. Thus, the necessary volume of the fuel for a certain amount of air for making stoichiometric mixture is different depending upon the ratio between propane and butane.

The required volume of the fuel for making stoichiometric mixture (λ = 1) with a certain amount (1000 litre) of air, is as follows:
* 100% propane:42 litre
* 100% butane :32 litre

As a result, for making stoichimetric mixture, a large amount of fuel is required when 100% propane is used, compared to a case wherein 100% butane is used. That is, the valve 91 is opened further when 100% propane is used, compared to a case wherein 100% butane is used. This is one of the reasons why the fuel control valve 91 has to be provided and adjusted.

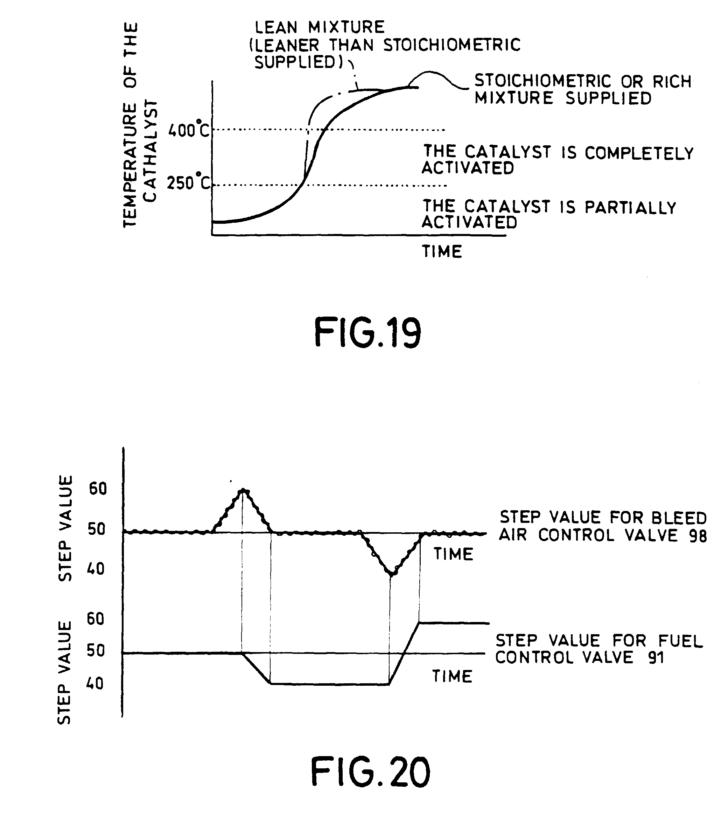

In the embodiment of Figure 1 no sensor is provided for sensing the pressure drop across the air cleaner 75. In this embodiment the amount of fuel supply metered to obtain a stoichiometric mixture is controlled automatically by controlling the opening area of the valve 91 so as to maintain an average opening area of the air bleed valve 98 substantially constant, as shown in Figure 20. In this way even without installing such a pressure drop detecting sensor a stoichiometric mixture is supplied also when the pressure across the air cleaner 75 drops. This will insure against the mixture becoming overly rich as the filter element 76 accumulates foreign particles from the air inducted. Of course also a sensing means for sensing the pressure drop across the air cleaner 75 and specifically the element 76 could be provided to change the adjustment of the valve 91 as the flow restriction increases.

In accordance with an important feature of the invention, the carburetor-type mixing device is also provided with an idle circuit that includes a passageway 92 that is supplied from the main fuel chamber 89. An adjustable needle valve 93 is incorporated in this conduit and controls the flow through an idle port 94 positioned downstream of the idle position of the throttle valve 86 so as to control idle fuel flow. In a conventional air valve or constant pressure carburetor, an idle circuit is not normally supplied. However, in connection with this invention it is extremely important to control the air/fuel ration accurately under all running conditions. If no idle circuit were supplied, the mixture would become somewhat lean when the throttle valve 86 is moved from the idle to an off idle position. The reason for this is that there is an intial range of throttle movement from the idle to an off idle position wherein the sliding piston 78 will not undergo any movement. Hence, if the mixture is at the proper mixture strength when operating at idle, as the system goes slightly off the idle it will tend to lean out.

By employing the separate idle circuit, it will be insured the appropiate fuel/air ratio can be obtained under all conditions. For example, when operating at idle and the throttle valve 86 in its full idle position, some air will be bled into the fuel chamber 89 through the metering jet 88 to assure a stoichiometric mixture to be supplied into the induction passage 79 through the idle passageway 92. However, as the throttle valve 86 moves to the off idle condition, then the manifold vacuum will be exerted at the metering jet 88 even though the piston 78 has not yet moved and the bleed air bled through the clearance between the main jet 88 and the metering rod 87 is decreased and primarily fuel supplied through the idle discharge port 94 is increased so as to avoid the leaning of the mixture which would occur in a carburetor not having an idle circuit. As a result of this, it is possible to control the air/fuel ratio as desired to be stoichiometric under idle or slight off idle conditions.

An idle bypass passageway 95 extends between the upstream and downstream sides of the throttle valve 86 when it its idle position and has an electrically controlled valve 96 for controlling the mixture bypassing the throttle valve 86 and, accordingly, adjusting the idle speed. The valve 96 is controlled by the ECU 72 so as to maintain stability in the idle speed. If the idle speed tends to fall below the desired idle speed, the valve 96 is opened so as to bypass additional mixture flow so as to increase the idle speed to the desired speed. On the other hand, if the idle speed is to high, the valve 96 will be closed to reduce the idle speed.

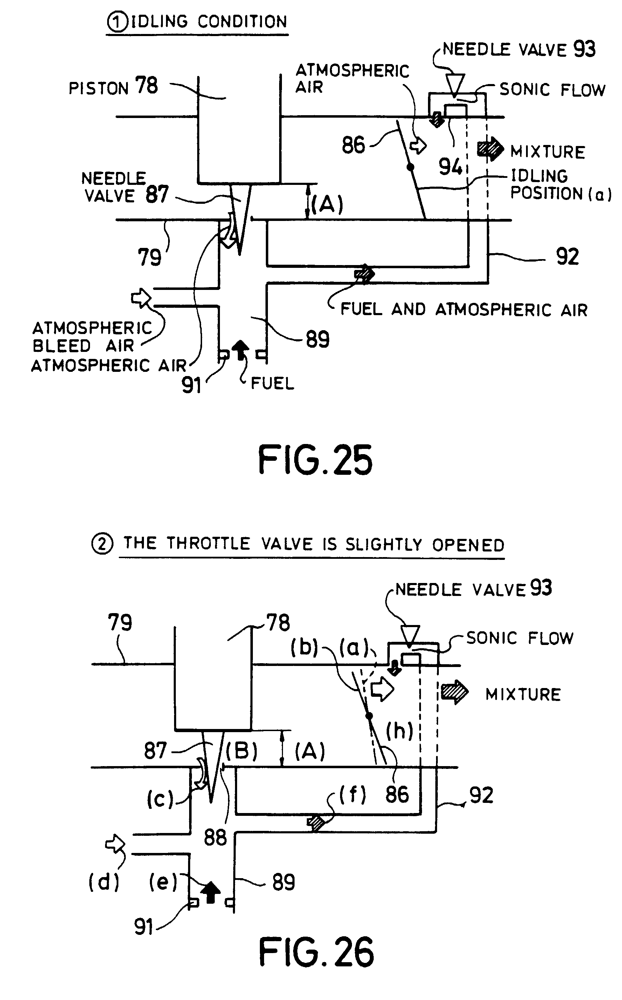

The combination of the idle circuit with the variable venturi-type carburetor 31 (mixing device), said mixing device comprising the metering rod 87 in the form of a needle valve cooperating with the main metering jet to adjust the air/fuel ratio of the charge supplied to the combustion chamber of the engine, is particularly effective, as through this combination, accurate control of the air/fuel ratio is obtained when the manually-operated load-respective throttle valve 86 is opened from its idling position. The cooperation of the different components at the throat portion of the mixing device 31, where the needle valve metering rod 87 is provided to control the flow of fuel from the fuel conduit 89 into the induction passage 79, in conjunction with bleeding air into said main fuel chamber or fuel conduit 89 and the effects of the idle passageway 92, are explained in greater detail in Figures 25 to 27 showing said area.

Figure 25 shows the idling condition of the engine. The piston 78 with the needle valve metering rod 87 assumes its most advanced position, projecting into the main fuel chamber 89. Nevertheless, a slight clearance remains between the needle valve metering rod 87 and the metering jet 88 so that atmospheric air is drawn into the fuel passage or main fuel chamber 89 because of the vacuum downstream of the manually-operating throttle valve 86. Through the idle discharge line 92 flows a fuel/air mixture under the control of the needle valve 93 to the idle port 94, downstream of the idle position of the throttle valve 86. The fuel and air (atmospheric air through said slight clearance and atmospheric bleed air controlled by the air bleed control valve 98) contributes to render stoichiometric the mixture in the induction passageway 79. By the way, in Figures 25 to 27, the idle speed control valve 93 bypassing the throttle valve 86 is not shown.

When the throttle valve 86 slightly opens from its idling position a into a slightly opened position b as shown in Figure 26, the amount of air flow at portion B is slightly increased as the amount of air flow h in the intake passage 79 is increased slightly while the piston 78 does not yet move from its most advanced position because there is a time lag until the piston 78 moves after the throttle valve 86 is opened to its off idle condition. Accordingly, the speed of the air flow in the intake passage 79 is increased.

As the result, the vacuum at portion B is slightly increased. On the other hand, when the piston 78 is slightly moved upwardly, the vacuum portion B is slightly increased. For moving the piston 78 upwardly, the spring 83 should be depressed. In this regard, slight vacuum increasing, corresponding to the spring force for depressing the spring 83 occurs at portion B. Since this increase is relatively small, it is considered that the vacuum at the portion B is kept substantially constant at any position of the piston 78. Thus, the amount of atmospheric air which flows into the idle discharge line 92 from the intake passage 79, through the main metering jet 88, is decreased. As the amount of flow f through the idle discharge line 92 is substantially constant since it is sonic flow at the control needle valve 93, the amount of fuel which flows into the idle discharge passage 92 is increased and the air/fuel ratio of the mixture supplied to a plenum chamber 32 downstream of the throttle valve 86 is maintained even though the amount of air flow h through the intake passage 79 is increased. Thus, in this way, an highly accurate control of the air/fuel ratio is performed under transitional conditions when the engine changes from an idle to an off idle state.

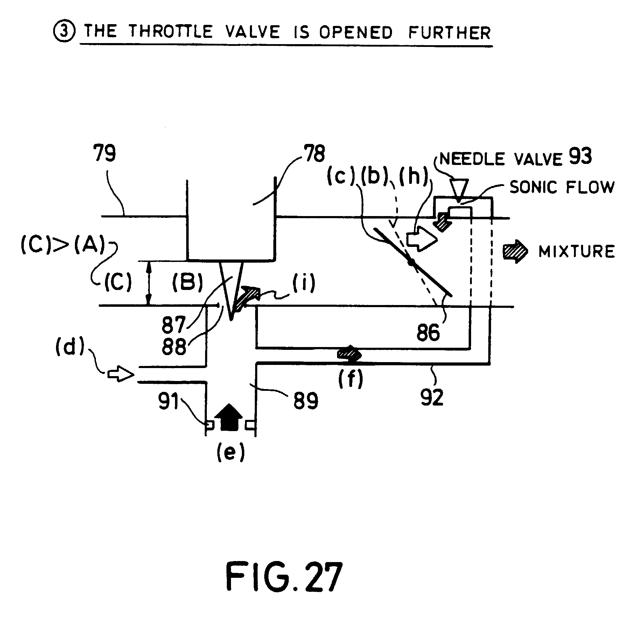

When the throttle valve 86 is opened further, as shown in Figure 27, the amount of intake air h through the intake passage 79 downstream of the throttle valve 86 is increased further and the piston 78 is retracted from its idling position. In that case, the vacuum at portion B becomes big enought for drawing a flow of atmospheric bleed air d and fuel e into the intake passage 79. Moreover, when the throttle 86 is opened further, the piston 78 and the needle valve metering rod 87 thereof that is responsible for the precise control and adjustment of the air/fuel ratio in conjunction with the main metering jet 88, retracts further so that the vacuum at the area B is kept substantially constant at any amount of air flow through the intake passage 70 which is the most characterizing feature of such a variable type of mixing device 31 (SU-carburetor).

In this stage through the drawn flow i which is drawn into the induction passage 79 through the main metering jet 88, the amount of atmospheric bleed air d and fuel e is increased as the throttle valve 86 is opened further, even if the positions of the fuel supply e controlling first fuel supply control valve 91 and of the air bleed control valve 98 are maintained unamended. When the flow i is drawn into the intake passage 79 through the main metering jet 88, the air/fuel ratio can be maintained stoichiometric due to the combination of the air bleed control valve 98 and the needle valve metering rod 87 of the mixing device 31, explained hereinafter. Moreover, through the provision of the idle discharge line 92, the air/ fuel ratio can be maintained stoichiometric steadily in a transitional period when the throttle valve 86 slightly opens from its idling position, but no flow i is drawn into the intake passage 79 through the main metering jet 88.

Accordingly, atmospheric bleed air is supplied for controlling the amount of fuel and its amount is pretty small compared with the amount of intake air h in the induction passage 79. So atmospheric bleed air has neglectible influence to the air/fuel ratio of the mixture in the induction passage 79.

As described above, in this invention, even under said transitional conditions of changing from idle condition to off idle condition wherein the throttle valve 86 is only opened slightly, a stoichiometric fuel ratio of λ = 1, is obtained since atmospheric air bleed into the idle passageway 92 contributes to an increase of the amount of fuel a whereas conventional engines in such cases tend to supply an overly lean mixture.

By the way, for the sake of clarity, the stoichiometric air/fuel mixture of λ = 1 is defined by the ratio of the actual air/fuel ratio to the theoretical stoichiometric air/fuel ratio, i.e., λ = F/F_{c} , wherein F_{c} is the stoichiometric air/fuel ratio (theoretical), whereas F is the actual air/fuel ratio. Accordingly, at stoichiometric condition, "F" is replaced with "F_{c}" and a stoichiometric mixture is always " λ = 1," irrespective of the composition of the gaseous fuel, i.e. of the ratio between butane and propane. Of course, the air/fuel ratio for the stoichiometric conditon of λ = 1 has a different value if the ratio between butane and propane is different.

For example, for 100% propane, the air/fuel ratio for stoichiometric mixture of λ = 1 is 15.7, whereas for 100% butane, the same stoichiometric mixture value is 15.5. Although this is only a slight difference, the bigger problem is that if the ratio between butane and propane differs, there is a big difference between the required volume of fuel for obtaining a stoichiometric mixture of λ = 1 with a certain amount of air.

As is well known, the cooperation of the metering rod 87 with the metering jet 88 and the idle adjusting screw 93 are designed to provide control over the air/fuel ratio supplied to the engine combustion chambers 15. This type of mixing device is extremely effective in ensuring good fuel/air control under all running conditions due to the fact that the vacuum in a throat portion of the variable venturi-type carburetor or mixing device 31 is substantially constant at any amount of air flow through the intake passage. However, the adjustment provided by the metering rod 87 and main metering jet 88 and the idle adjusting screw 93 do not permit finite adjustments to accommodate variations in air/fuel ratio as may occur during a normal running engine due to a variety of factors, specifically, under transient conditions as indicated above. Even small variations of air/fuel ratio can have significant differences in both the efficiency of operation of the catalytic convertor 25 and also the total control of exhaust gas emissions. Therefore, in accordance with an important feature of this invention, an arrangement is provided for providing an even finer adjustment in the air/fuel ratio by means of pre-controlling the amount of fuel supplied to the metering valve needle 87 of the carburetor and a control arrangement for such an adjustment. In this way, an indirect fine tuning of the air/fuel ratio, adjusting by the tapered valve needle metering rod 87, can be obtained.

This adjustment includes an arrangement for mixing air with the fuel supplied to the chamber 89 of the carburetor 37. To this end, there is provided an air bleed port 97 which opens into the air cleaner 75 downstream of the filter element 76. The air bleed port 97 supplies air to an air bleed control valve 98 which includes a valve element 99 that is operated by a stepping motor 101 under control of the ECU 72 in a manner which will be described. The valve element 99 controls the flow of air from the inlet port 97 to the chamber 89 through an air bleed passage 102. As a result, the air/fuel ratio will be indirectly influenced as atmospheric air is bled into the chamber 89 to increase or decrease the amount of fuel supplied to the main metering jet 88. Since the chamber 89 supplies fuel to both the main metering jet 88 and the idle circuit through the line 92, also the air/fuel ratio in the idle circuit will be influenced by the air bleed valve 98.

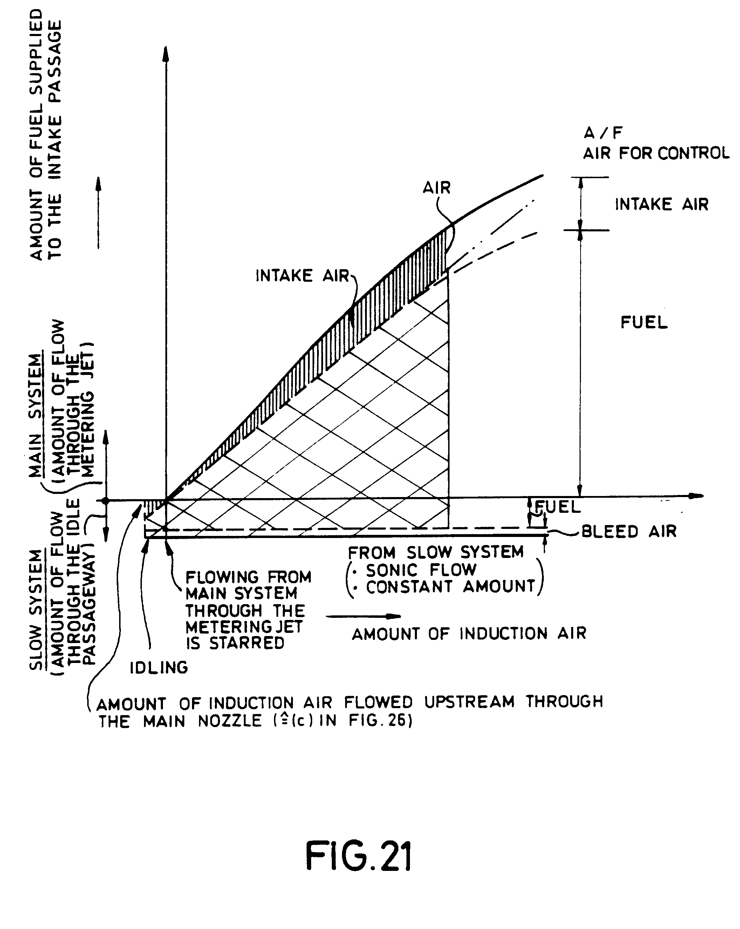

In the following, the afore-indicated structure, i.e., the inter-relationship of the air/fuel ratio adjusting main system (formed by the valve needle metering rod 87 and the main metering jet 88) and a slow system (characterized by bleeding air into a flow of fuel upstream of the main system performed by the air bleed control valve 89), which forms one of the main issues of this application, will be explained in greater detail referring to Figures 21 to 24, respectively.

Basically, the air/fuel ratio which should be as close as possible to stoichiometric during normal engine running (after the starting or warming-up phase is terminated) as determined and exclusively adjusted by means of the needle valve metering rod 87 and the main metering jet 88, i.e., the axial position of the valve needle metering rod 87 of the variable venturi-type carburetor 31. Thus, the concical shape of the metering rod 87 is chosen such that it becomes possible to maintain the desired air/fuel ratio of λ = 1 (stoichimetric) under hot engine conditions at any amount of air flow in the induction passage 79 while keeping substantially constant the valve position of the fuel supply controlling air bleed control valve 98 which pre-adjusts the amount of fuel supplied to the main metering jet 88 and, so far, indirectly influences the air/fuel ratio. Figure 21 is a diagram disclosing the composition of the fuel/air mixture in conjunction with an indication of the means responsible for adjusting said mixture. The term "main system" used in said Figure 21 means the "main adjusting valve", namely the valve needle metering rod 87 and its associated main metering jet 88, which start supplying a stoichiometric fuel/air mixture when changing over from idling to off-idling of the engine. The amount of bleed air for fuel supply controlling purposes is very small in terms of adjusting the air/fuel ratio and, practically, the amount of bleed air is too little compared to the amount of atmospheric air drawn through the intake passage 79 to influence substantially the total amount of air mixed with fuel. But the air bleed control valve 98 receives an output signal of the oxygen sensor 106 disposed in the exhaust gas arrangement to influence the adjustment of the desired air/fuel ratio by means of influencing the amount of fuel supplied to the "main system" of the carburetor 31. Thus, the amount of fuel in the fuel chamber 89, to a certain extent depending on the provision and operation of the other fuel supply control valve 91, compensating for engine environmental conditions including fuel composition, is controlled through the air bleed control valve 98.

In order to show the inherent correspondence between the diagram of Figure 21 and the afore-discussed flow condition in the area of the mixing device 31 as shown in Figures 25 to 27, it should be noted that the amount of induction air flowing through the main nozzle as derivable from the area lefthand of the ordinate and below the abscissa in Figure 21 corresponds to the amount of atmospheric air c which is drawn through the main metering jet 88. The ordinate of Figure 21 denotes the turning point from the conditions of Figure 26 to that of Figure 27 (further opening of the throttle valve 86), i.e. the left hand region from the ordinate represents a situation as shown in Fig. 26 while the right hand region from the ordinate represents a situation as shown in Fig. 27.

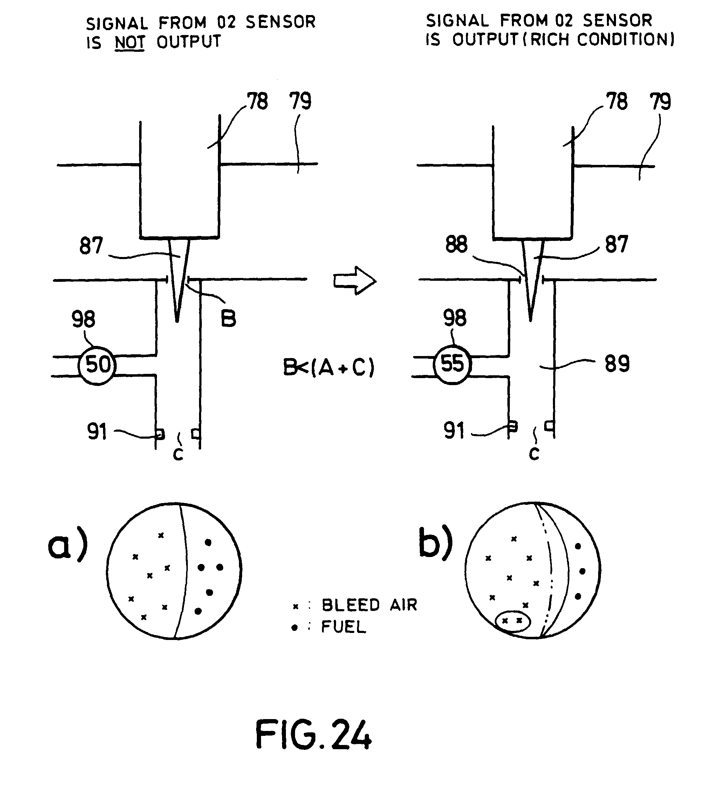

As shown in Figure 24, wherein a) indicates a condition in which the oxygen sensor 106 does not output a signal while b) shows the bleeding of additional air into the main fuel chamber 89 when the air bleeding control valve 98 receives a signal which indicates rich condition of the mixture (excess fuel), air bleeding through the air bleed passage 102 leads to an increased amount of air and correspondingly, decreased amount of fuel, when the air bleed control valve 98 is opened from a step value of 50 to 55, and vice-versa. In the rich condition as shown in the righthand sketch b, of Figure 24, since the opening area of the annular clearance between the metering rod 87 and the main jet 88 is smaller than the total opening area which corresponds to the sum of the minimal opening area of the air bleeding control valve 98 and the minimal opening area of the first fuel supply control valve 91, the amount of fuel is decreased when the amount of bleed air is increased.

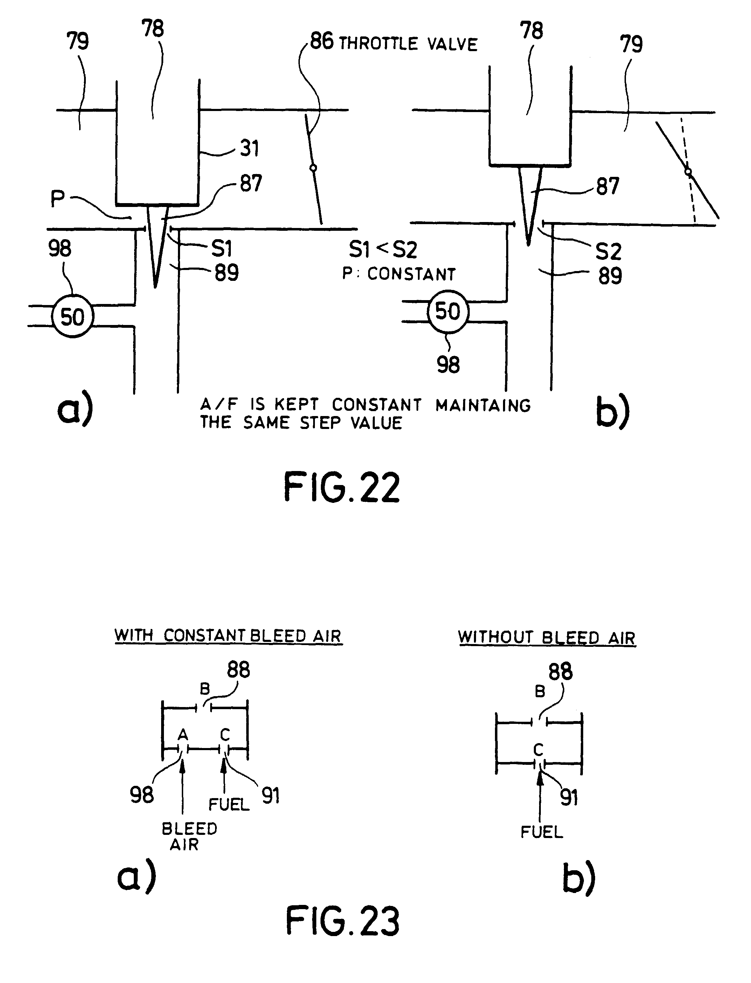

Figure 23 exemplifies the effects of the provision of the air bleed valve 98 in conjunction with the variable main jet 88 and, in partially, the provision of the engine environmental conditions compensating first fuel supply control valve 91 which is disposed to control the flow of fuel through the main fuel chamber 89 upstream of the opening of the air bleed passage 102. Considering that the opening area of "C" is small compared to the total opening area of "A" and "C", the total amount of "A" (bleed air) and "C" (fuel) is regulated by "B" (main system 87,88).

If the supply of fuel from "C" (regulated through the first fuel supply control valve 91) is increased, the amount of bleed air from "A" (from the bleed air control valve 98) is decreased and the amount of fuel supply from "B" (main metering jet 88, valve needle metering rod 87) is increased. Specifically in this case, it is not necessary to change the opening area of "C" in accordance with the opening area of "B" for controlling the amount of fuel supply under this condition (B < (A + C)) by introducing bleed air feedback control of the air/fuel ratio (said feedback control is based on the output of the oxygen sensor 106 to feed the air bleed control valve 98) is achieved quickly.

As the air bleed passage 102 comprising the air bleed control valve is provided separately from the fuel passage (the conduit 62) and A < (A + C), it is not necessay to change the opening area of "C" in accordance with the opening area of "B" (the amount of air flow in the induction passage 79) in order to control the amount of fuel supply.

In this system if the supply of bleed air from "A" (from the bleed air control valve 98) is controlled based upon the signal from the oxygen sensor 106, the amount of fuel supply from "C", namely the amount of fuel supply from "B" (main metering jet 88, valve needle metering rod 87) is controlled without changing the opening area of "C" at any opening area of "B" (at any amount of air in the induction passage 79). As the result, feedback control of the air/fuel ratio (said feedback control is based upon the output of the oxygen sensor 106) is achieved quickly.

If, otherwise, the system would be designed without bleeding air into the flow of fuel upstream of the main metering jet 88 (Figure 23b) and the first fuel supply control valve 91 were designed to be controlled through a signal from the oxygen sensor 106, it would be necessary to change the opening area of "C" (first fuel supply control valve 91) to follow the opening area of "B". Specifically, for controlling the amount of fuel being supplied it would be required to change the opening area of "C" (valve 91) if the opening area of "B" (main metering jet 88) were changed, resulting in a delay of a feedback control of the air/fuel ratio. Namely, if the opening area of "B" were changed, it would be necessary to change the opening area of "C" in order to keep the opening area of "C" less than the opening area of "B" prior to controlling the amount of fuel on the basis of a signal supplied from the oxygen sensor 106.

In the following, in conjunction with with afore-indicated system, another preferred and important aspect of the present invention will be explained, namely the inter-relationship between the first and second fuel supply valves 91, 98 in view of the operation of the variable venturi-type mixing device 31.

Namely, the needle valve metering rod 87 in conjunction with the main metering jet 88 has a configuration which enables maintaining the desired stoichiometric air/fuel ratio during normal engine running (λ = 1 condition) with substantially constant step value (opening degree) of the air bleed control valve 98 at any amount of air flow in the induction passage 79, namely at any position of the metering rod 87. i.e. the average of the step value for the feedback control of the air bleed control valve 98 is substantially constant at any amount of intake airflow through the intake passage 79 as explained in Figure 22 (see also Figure 20). As was already mentioned, the bleed air control valve 98 controls the amount of bleed air on the basis of a signal from the oxygen sensor 106. Thus, as shown in Figure 20 above, the actual step value fluctuates or changes slightly based upon the signal from the oxygen sensor 106 but its average is substantially constant. That is, as shown in Figure 22, the valve needle metering 87 and the main metering jet 88 are configurated such that the desired air/fuel ratio (λ = 1 condition) is maintained with substantially constant step value (average) of the air bleed control valve at any amount of intake air flow.

As shown in Figure 22 the air/fuel ratio is kept constant maintaining the same step value, i.e. 50 in Figure 22, despite different existing load conditions and positions of the throttle valve 86 and the piston 78. This is achieved by means of the feedback control of the air bleed control valve 98 i.e. the opening area thereof, in response to the output of the oxygen sensor 106.

Thus, according to this combination of elements of the present invention, highly accurate and, specifically important, highly responsive air/fuel ratio control is achieved since
a) the needle valve metering rod 87 in conjunction with the main metering jet 88 is configurated so as to enable maintaining the desired stoichiometric air/fuel ratio at any amount of intake airflow through the induction passage 79 with substantially constant step value (opening degree) of the air bleed control valve 98, and
b) controlling of the step motor 101 is started from the constant step value (an average midway value of 50 is chosen as the substantially constant step value for the control of the step motor 101 of the air bleed control valve 98) when the oxygen sensor 106 outputs a signal rendering the amount of necesarry movement of the air control valve 98 to be minimal so that a quick response characteristic of the air bleed valve 98 to adjust the desired step value is obtained.

Moreover, Figure 20 also shows the inter-relationship between the operation of the first and second fuel supply control valves 91, 98, namely, that the first fuel supply control valve 91 which compensates for engine environmental conditions including varying compositions of the fuel being used is also effective to compensate for greater changes of the average step value of the air bleed control valve 98, pre-adjusted to a step value of 50 (midway valve position). After occurrence of a change of the step value of the air bleed control valve 98 from 50 to 60, the step value for controlling the step motor of the first fuel supply control valve 91 is reduced correspondingly to increase the amount of fuel being fed into the main fuel chamber 89 which allows the step value of the air bleed control valve 98 to return to its pre-adjusted value of 50. If another deviation from the average pre-adjusted step value occurs on the site of the bleed air control valve 98 another compensating adjustment of the first fuel supply control valve 91 takes place as derivable from Figure 20. Namely, the first fuel supply control valve 91 controls the amount of fuel which is supplied to the fuel chamber 89 so that the average of the step value of the bleed air control valve 98 is maintained at the pre-adjusted step value 50 and fuel for the stoichiometric mixture is supplied to the induction passage 79.

The provision of the first fuel control supply valve 91 allows an accurate control of the air/fuel ratio even if various forms of gaseous fuels are used since a broad control range for depending upon the signal from the oxygen sensor and for compensating for other events is maintained. Thus, the air/fuel ratio can be maintained at λ = 1 even if engine environmental conditions as indicated above change. If the first fuel supply control valve 91 would not be provided, the control range of the air bleed control valve 98 would become considerably narrow and the response for the control would become worse when the engine environmental characteristics change as in that case the step value of the bleed air control valve 98 for maintaining stoichiometric condition ( λ = 1) would be moved to the fully opened side or the fully closed side and air feed bleed control would have to be based upon that varying value.

Thus, the air bleed control valve 98 is operated based upon the signal from the oxygen sensor 106 (the step value fluctuates around the average value as shown in the upper curve of Fig. 20) and the first fuel control valve 91 is operated for compensating the amount of fuel supplied to the charge forming device (carburetor 31) depending upon engine running and/or environmental conditions including varying compositions of the fuel used. In addition thereto the fuel control valve 91 adjusts the amount of fuel depending upon engine enviromental condition (or eventually also in response to other factors) so that the average of the step value of the air bleed control valve 98 is maintained substantially constant. As shown in Fig.20, there is a feedback control between the two valves 91 and 98 in that the first fuel supply control valve 91 is also perated in response to a movement of the valve member of the control valve 98. The compensating function of the first fule supply control valve 91 in view of varying engine environmental conditions leads to the average of the step value of the bleed control valve 98 to be substantially constant.

Under sudden decelerations caused by rapid closure of the throttle valve 86 when the engine 11 is running at high speed, the fuel which is drawn into the combustion chambers will not burn completely, but will be discharged into the catalytic convertor also. This fuel then will be burnt by the catalyst and cause over temperature conditions to exist in the catalyst. To avoid this, there is provided a fuel shut-off valve, indicated generally by the reference numeral 103 which draws atmospheric air from a source, such as through a filter element 104 or from the air cleaner 75 downstream of the filter element 76 and delivers it into the chamber 89 through a passageway 105. When a rapid deceleration condition is sensed, as may be sensed by the increase in vacuum, in the induction passage, as for example as sensed by a vacuum switch 114, the fuel shut-off valve 103 will be opened by the ECU 72.

This will cause air rather than fuel to be drawn into the induction system through the main metering jet 88 and idle jet 94 and thus in effect shut off or reduce (so far preventing the catalyst from being damaged) the supply of fuel to the engine under these conditions.

Reference has been made to the control of the air/fuel ratio and the operation of the air bleed valve 98. As indicated above, the air/fuel ratio is, in the illustrated embodiment, determined by means of the oxygen sensor 106 which is positioned in the exhaust manifold 23 immediately upstream its outlet 24 to the catalytic convertor 25. The oxygen sensor 106 is, in a preferred embodiment of the invention, of the type known as a λ sensor which senses when the air/fuel ratio is either stoichiometric or on the lean or rich side, the output voltage thereof is significantly changed when the mixture is stoichiometric. Said signal indicative of oxygen in the exhaust gases. If no oxygen is present, it is known that the engine is running at a richer than stoichiometric mixture and the sensor 106 will output a signal. If there is not output signal from the λ sensor 106, then it is known that the mixture is operating at stoichiometric or on the lean side, as is preferred.

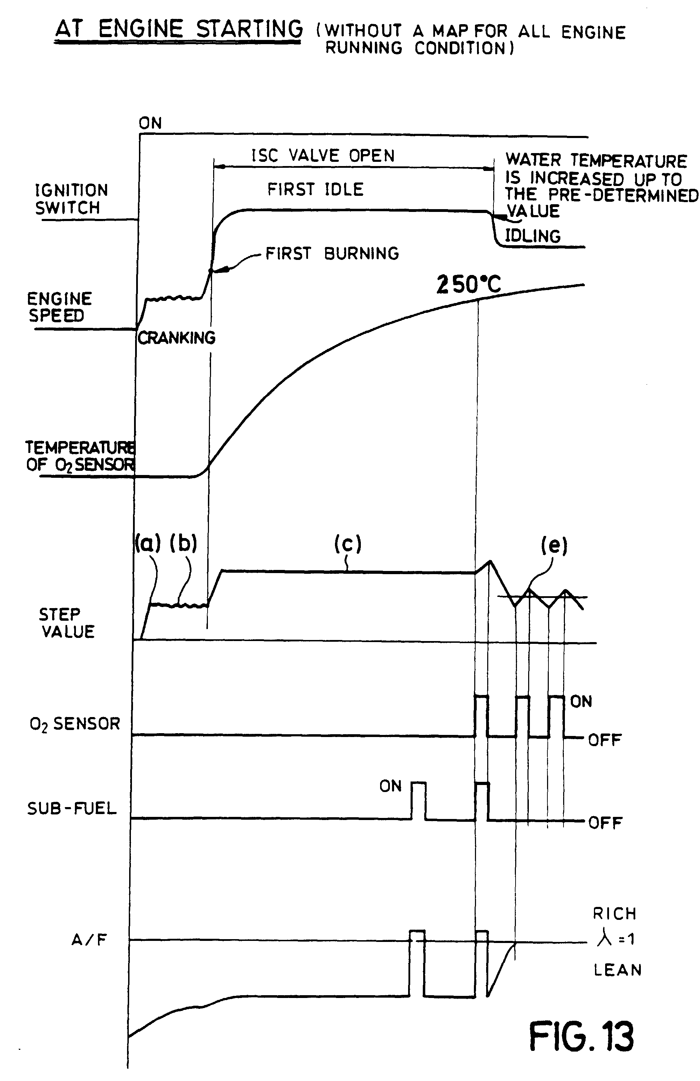

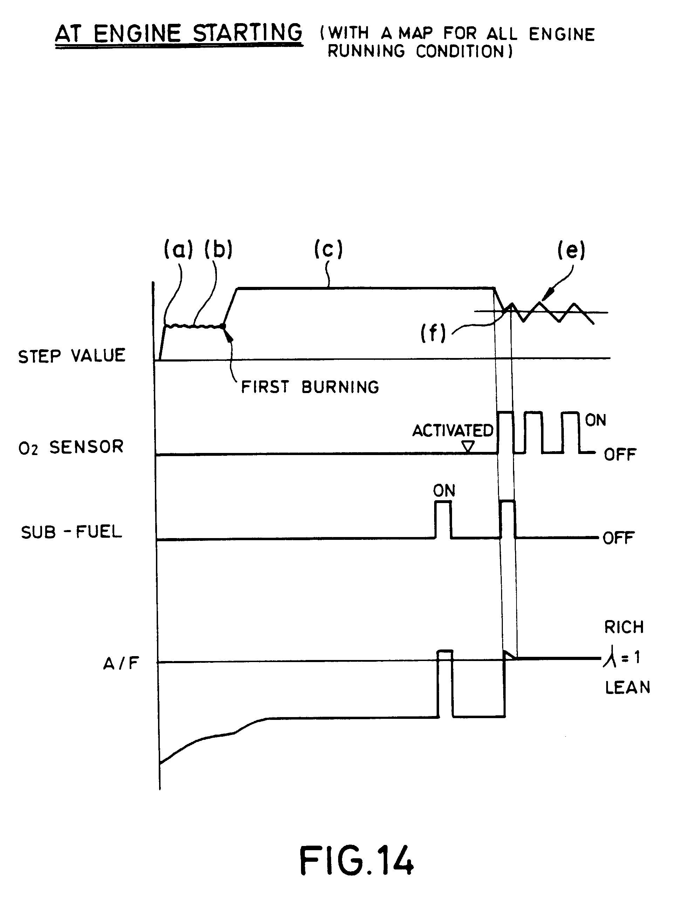

The engine 11 is also provided with an EGR system for controlling NOₓ emissions and this includes an EGR valve, indicated generally by the reference numeral 107 which controls the flow of exhaust gases through an EGR line 108 leading from the exhaust manifold 23 back to the plenum chamber 33 of the intake manifold 32 through a second EGR line 109. The EGR valve 107 may be controlled in any suitable manner and by means of any suitable strategy. As is derivable also from Figures 13 and 14, it is in any case preferred to run the hot engine with a stoichiometric mixture (λ = 1 in order to minimize harmful emissions, while during engine warming-up and cold start conditions a lean mixture is to be supplied.

As has already been noted, the ECU 72 controls a number of components of the engine including the sub-fuel supply valve 64, the idle control valve 96, the fuel shut-off valve 103, the fuel control valve 91 and the air bleed valve 98. In addition, there is provided an idle fuel cutoff valve 111 that controls the flow through the idle discharge line 92 to shut off the flow of idle fuel under certain conditions, as will be described. This valve is also controlled by by the ECU. The valve 111 functions to achieve basically the same effect as the fuel shut-off valve 103 and in some conditions it need not be necessary to supply both the idle shut-off valve 111 and the fuel shut-off valve 103.

Certain ambient and engine running conditions are supplied to the ECU 72 to implement its control strategy. These inputs are, for example, indicative of throttle position as provided for by a throttle position sensor (not shown), engine coolant temperature as supplied by a coolant temperature sensor 112 that extends into the water jacket 28 of the engine, engine speed as provided for by an engine speed sensor (no shown), the output from the λ sensor 106, and exhaust gas temperature as provided for by an exhaust temperature sensor 113 that extends into the catalytic convertor 25 which not only indicates engine exhaust gas temperature but also temperature at which the convertor 25 is operating. There is further provided a vacuum sensor or switch 114 that senses intake manifold vacuum downstream of the throttle valve 86 and outputs its signal to the ECU. In addition to these noted sensors, various other ambient or running conditions may be sensed and inputted to the ECU 72 for its engine control and operation.

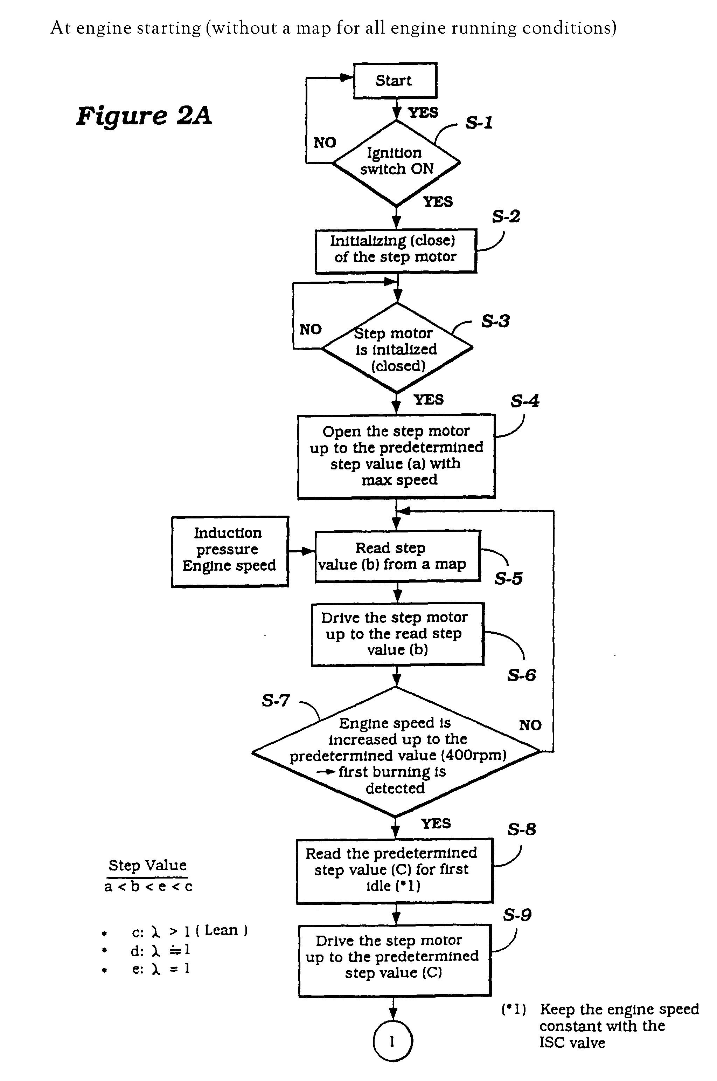

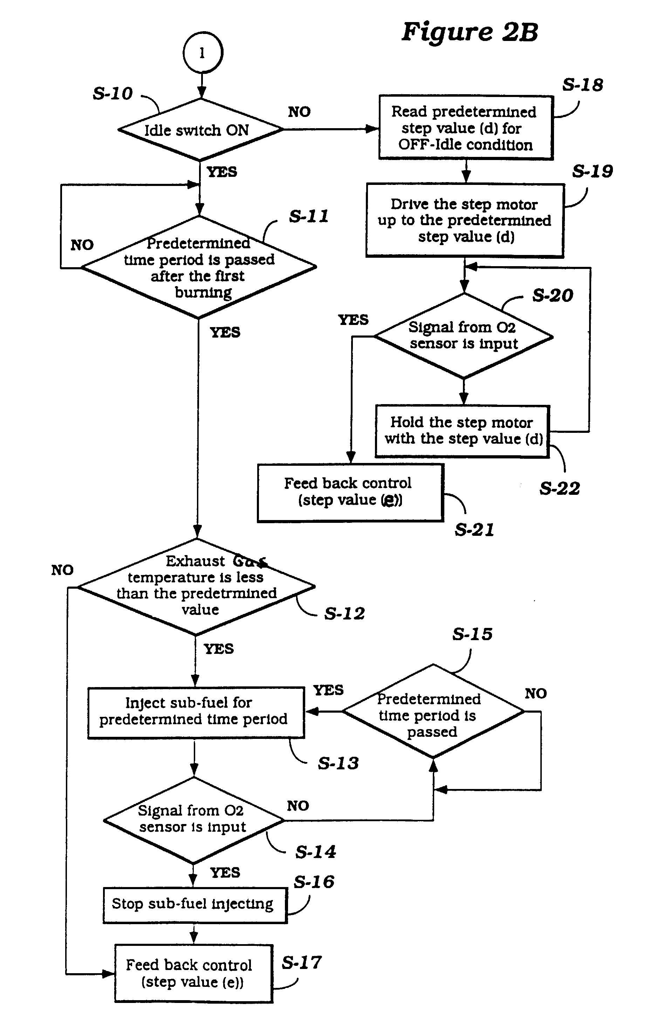

A control routine for operating the engine 11 of the embodiment of Figure 1 during initial starting will now be described by reference to Figures 2A and 2B.

A basic issue of the method according to this invention resides in the teaching to operate the engine during cranking and engine warming-up until the catalytic convertor 25 and/or the oxygen sensor 106 are heated to their working temperature (triggering the feedback control of the air/fuel ratio), with an excessive amount of air supply to assure lean mixture operation and rapid warming-up of the catalytic convertor 25 and the oxygen sensor 106.

More particularly, as with a gaseous fueled engine there is no problem of fuel condensation in the induction system, stable engine running conditions, even under cold starting operation can be obtained without supplying additional fuel under starting conditions which would cause severe emission problems. Accordingly, in the present invention a mixture which is leaner than stoichiometric is supplied, specifically at first idle position (after cranking is over and first burning occurs) maintaining a stable running engine. Of course this can also mean that at first idle operation the idle speed control valve 96 is opened for introducing additional mixture into the combustion chamber of the engine for maintaining high idling speed compared to the normal engine operation but the air/fuel ratio of the mixture is maintained on the lean side (leaner than stoichiometric). In this way the catalytic converter 25 is heated quickly to its completely activated working temperature after same has been partially activated and brought also to its partially activated temperature. Accordingly, the time until the catalyst 25 is partially and completely activated is shortened since the catalyst 25 is heated up quickly by burning the un-burned fuel in the catalyst 25 with excess oxygen in the lean mixture. Since the heat capacity of the catalyst 25 is larger than that of the oxygen sensor 106, the catalyst 25 is completely activated after the oxygen sensor 106 is heated up to a temperature which enables him to output a signal. In this regard, shortening the time until the catalyst 25 is partially activated and same is completely activated enables to us the catalyst 25 with high efficiency at once the oxygen sensor 106 starts to output signal (namely, it is started rapidly to maintain the air/fuel ratio at stoichiometric by the feedback control).

An air/fuel ratio resulting in an oxygen concentration in the exhaust gas of approximately 1% (i.e. an air/fuel ratio of about 16.5 (λ of about 1.01, λ is defined as λ = F/Fc herein F means the actual air/fuel ratio and Fc means the stoichiometric air/fuel ratio) is desirable. It can heat the catalytic convertor to its operating (partially activated) temperature and to its completely activated condition rapidly.

The oxygen sensor 106 is provided at the upstream side of the catalyst 25 in Figure 1. On the contrary, it is acceptable to provide the oxygen sensor 106 at the downstream side of the catalyst 25 (or between a plurality of catalysts). In this case, the time until the oxygen sensor 106 is heated up to a temperature which enables him to output a signal would be shortened since un-burned fuel in the catalyst would be burned with the excess oxygen rapidly increasing the temperature of the exhaust gas which flows through the catalyst towards the oxygen sensor.

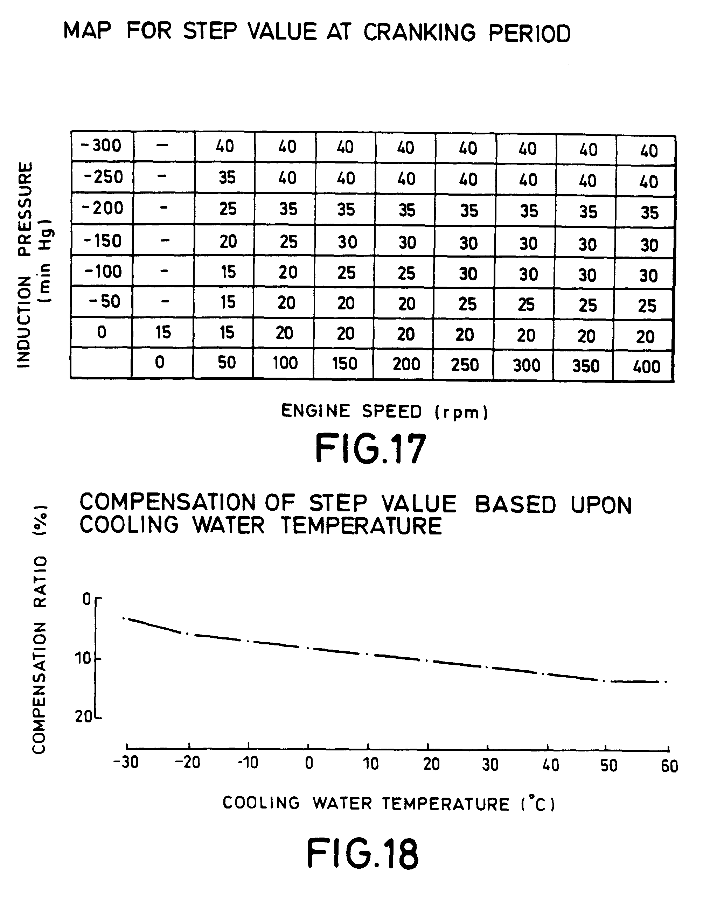

Figures 2A, 2B which correspond to the diagram of engine starting as shown in Figure 13, show a block diagram of a control routine wherein the ECU 72 is provided with a map only showing the relationship between an engine running condition (for example engine speed and induction pressure) and the step value for the bleed air control valve 98 at the cranking period as shown in Figure 17. That is, in this embodiment, there is not a map in the ECU showing said relationship in other engine running conditions.

Referring now specifically to Figures 2A, 2B when the program is started, it moves to the Step S-1 to determine if the ignition switch for the engine is turned on. If the ignition switch is not turned on, the program obviously returns to start. If, however, the ignition switch is determined to be on at the Step S-1 the program moves to the Step S-2 to intialize or close the stepping motor 101 of the air bleed valve 98.

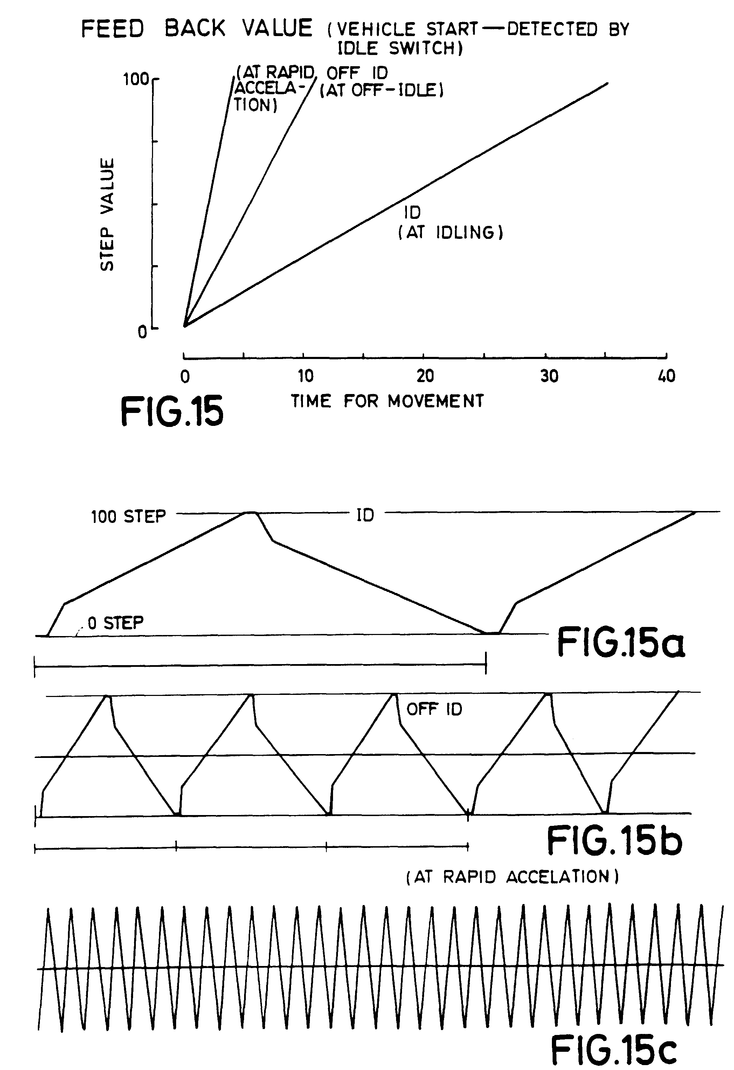

It should be noted that the stepping motor 101 of the air bleed valve 98 can operate at a variety of speeds. The faster the speed, the quicker the adjustment of the valve 98 is made. As is shown in Fig. 15 and will be described later, the stepping speed is operated at a first, lower speed ratio when the engine is operating at idle, at a faster speed ratio when the engine is operating at off idle. During initial starting of the engine, the stepping motor 101 is operated at its maximum speed so as to initially open the air bleed control valve 98 as quickly as possible and to move it then to a predetermined position.

It should be noted that at this time, the position of the main fuel control valve 91 is maintained at that one which was used before the engine was stopped. The fuel shut-off valve 103 is closed and the idle shut-off fuel valve 111 is opened at this time. In a similar manner, the idle speed control valve 96 is set at the predetermined position corresponding to a cooling water temperature so as to establish the idle speed. In addition, the sub-fuel supply valve 64 is held in a closed position. This is an important feature of this invention as, unlike conventional engines, it is a feature of the invention that no enrichment is provided during initial cranking or starting operation, regardless of the ambient condition.

With conventional engines, and particularly those operating on liquid fuels, it has been necessary to provide additional fuel enrichment durin cranking because of the problem of fuel condensation in the induction system and even in the combustion chamber. However, with a gaseous fuel this is not a problem and it will be insured that the desired fuel/air mixture will be present in the combustion chamber 15, namely, the air/fuel ratio of the mixture which is supplied into the combustion chamber is almost the same as that of the mixture which is formed at the mixing device 31, even under cold starting. Under starting, the step value of the bleed air control valve 98 is set so as to provide a mixture that is leaner than stoichiometric when it is first started.

This lean mixture supply (leaner than stoichiometric) at first idle operation (after a first burning occurred) is particularly important in that it has been found that such a lean mixture, while assuring stable engine running, will cause the catalyst 25 to be heated quickly to its operating temperature once the catalyst 25 is partially activated (see Fig. 19). Further, it is not necessary to supply additional fuel, as is required in some conventional engines, because condensation in the induction system does not occur.

The program then moves to the Step S-3 to determine if the stepping motor 101 is initialized. If not, the program continues to repeat until it is determined that the stepping motor 101 is initialized. If not, the program continues to repeat until it is determined that the stepping motor 101 is initalized and the air bleed valve 98 is fully opened. When this is determined, the program then moves to the Step S-4 to operate the stepping motor 101 so as to actuate the air bleed valve 98 to an initial setting "a" at maximal speed.

The program then moves to the Step S-5 wherein engine parameters such as induction system pressure and engine speed are read by the respective sensors, aforenoted, and another value "b" for the air bleed valve 98 is selected dependent upon these parameters. The value "b" is slightly greater than the value "a" to provide more bleed air and is chosen so as to insure that there will be adequate fuel for starting but a mixture which is leaner than stoichiometric.

The program then moves to the Step S-6 so as to actually position the stepping motor 101 so as to place the air bleed valve 98 in the "b" condition as determined by a map shown in Figure 17 only for initial idle start-up conditions based on induction system pressure and engine speed. The program then moves to the step S-7 to determine if the engine speed is greater than a predetermined value such as 400 R.P.M. This is a speed that is slightly higher than the cranking speed of the engine and will indicate that first burning of the charge in the combustion chamber 15 has been assured. If it has not, the program repeats back to the step S-5.

If, however, at the step S-7 it has been determined that the engine speed is above 400 R.P.M. and, therefore, running of the engine is assured, namely, first burning occurred, the program moves to stop the step S-8 to set the air bleed valve 98 in a value "c", which is greater than the pre-mentioned values for stoichiometric mixture and hence which provides a greater air flow and leaner air/fuel mixture from the carburetor discharge circuits.

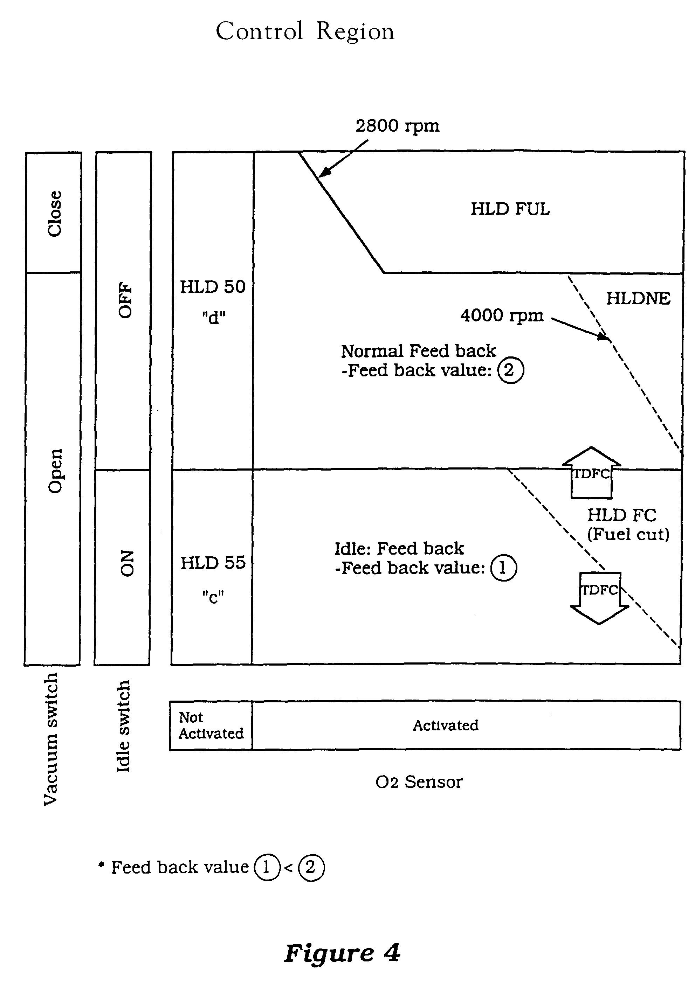

This value "c" is determined from the preprogrammed map of the ECU 72. This value "c" is shown on the chart of Figure 4 which indicates the various control regions. The value "c" may, for example, be a stepping value of 55, it is used in the control regions as "HLD 55", which is slightly more than half way open of the full movement of the air bleed valve 99, the total range being considered to be 100. This semi-midrange condition is chosen so as to insure that the air bleed valve assembly 98 will have a full range of movement within the shortest period of time so as to provide the desired air/fuel ratio control under all conditions of the engine and ambient conditions delayed assuring a superior response characteristic of the air bleed control valve 98, if the need for changes arises (see for example Figure 20.)

It should be noted that at this time, the operation of the idle air control valve 96 is initiated so as to ensure that the idle speed of the engine is maintained constant at the pre-programmed desired idle speed contained with the ECU 36. The program then moves to the Step S-9 so as to operate the stepping motor 101 so as to place the air bleed valve 99 of the air bleed control 98 in the value "c" position. The program then moves to the Step S-10 to determine that the engine is still being operated at idle speed. This is determined by a throttle position or idle position control that determines whether the throttle valve 86 in its idle position. If the throttle control is still in the idle position, then the program moves to the Step S-11 to determine if a predetermined time period, set by a counter in the ECU 72, has elapsed. This is to ensure that the engine has run for some pre-determined minimum period of time.

The program then moves to the step S-12 to determine if the exhaust gas is at a temperature which indicates that it warmed up sufficiently so that the oxygen sensor 106 will be at an adequate temperature to initiate a feedback control fo the air/fuel ratio of the charge supplied to the comustion chamber. (Said temperature is determined by testing. But the actual temperature when the oxygen sensor 106 is heated up to said adequate temperature in an acutal engine is depends upon engine running conditions). The oxygen sensor 106 (as previously noted a λ sensor) does not provide an indication of air/fuel ratio until it is at a certain predetermined temperature, about 250^{o}C. Also the catalytic converter 25 will not begin to successfully treat the un-burned fuel in the exhaust gas until it also is at a predetermined temperature at which the catalytic converter 25 is partially activated and which temperature is somewhat close to the temperature at which the oxygen sensor 106 begins to provide a signal (about 250^{o}C). The catalytic converter 25 is heated up to said predetermined temperature earlier than the oxygen sensor 106 begins to provide a signal if the mixture which is leaner than stoichiometric is supplied and the catalytic convertor 25 is heated up quickly.

If, at the time the engine is started, it is determined at the step S-12 the exhaust temperature sensed by the sensor 113 is below the value at which it may be assumed that the oxygen sensor 106 and convertor 25 are at their operating temperatures, then the program moves to the Step S-13 to inject additional fuel into the induction system by opening the enrichment valve 64 and permitting fuel to flow into the plenum chamber 33 of the intake manifold 32 and the combustion chambers 15. This additional fuel is supplied not for the purpose of enrichment but exclusively for testing purposes (for testing whether the oxygen sensor 106 is in a condition to output a signal, i.e. "initializing" of the oxygen sensor 106) to obtain immediate response from the oxygen sensor 106, to provide a fuel/air mixture which will effect an output from the oxygen sensor 106 as soon as it is at its operating temperature (see Figure 13). That is, if during normal start-up the oxygen sensor does not output a signal, this can be due to either the fact that the mixture is running lean or that the oxygen sensor is not at its operating temperature. Since the oxygen sensor 106 is of a type which senses then the air/fuel ratio is on the rich side (λ sensor) and a mixture leaner than stoichiometric is supplied into the induction passage 79 of this engine, the oxygen sensor 106 can not output signal without said additional fuel even if the oxygen sensor 106 is heated up enough for outputting signal. Thus, said brief sub-fuel supply serves to artificially create a rich air/fuel mixture for a brief movement so as to be able to detect immediately when the oxygen sensor 106 achieves its operating temperature and working condition.

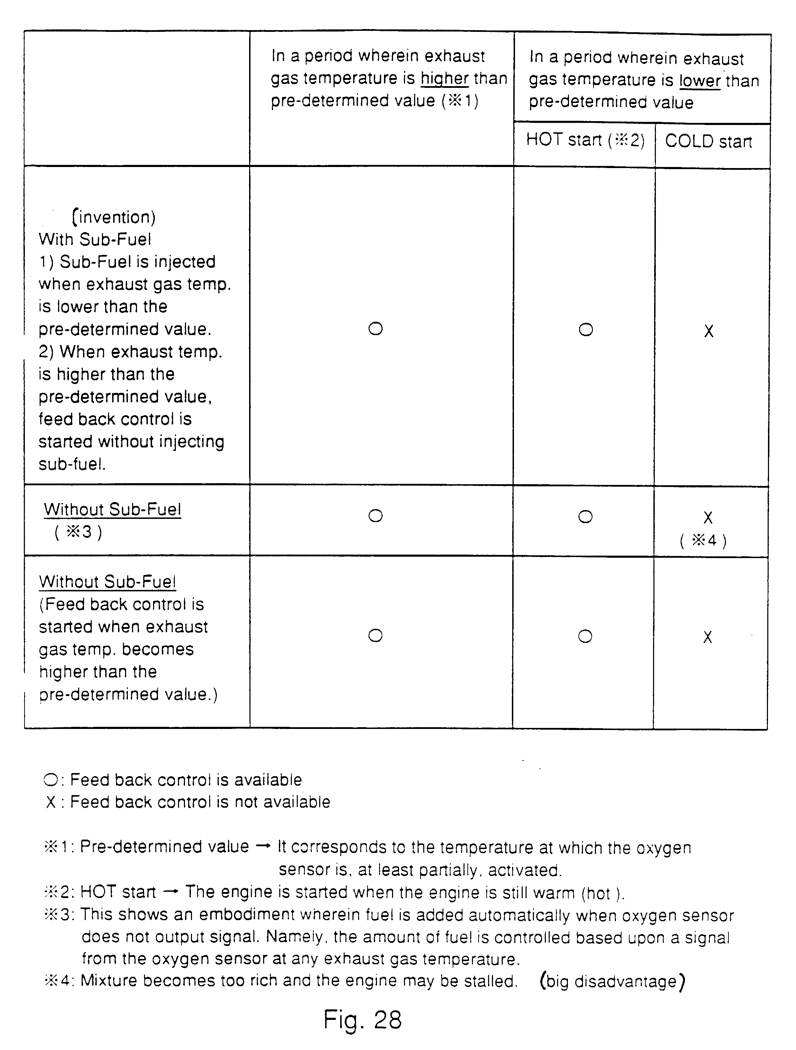

Figure 28 is a scheme once again explains the inter-relationship between hot and cold start conditions in view of sub fuel injection to test or trigger the oxygen sensor in response to the temperature of the exhaust gas. As shown in Figure 28, said additional fuel is useful not only under "Hot start" but also under "Cold start" conditions.

The program then moves to step S-14 to determine if an output signal is received by the ECU 76 from the oxygen sensor 106 indicating a rich fuel/air mixture. If no signal is sensed, the program moves to a step S-15 to determine if a predetermined time period has passed. This time period is also set by a further timer in the ECU 72 and ensures that excessive amounts of enrichment fuel will be supplied merely to detect the operation of the oxygen sensor 106. If this time period has passed, the program moves back to the step S-13 so as to initiate another injection of auxiliary enrichment fuel by opening the enrichment valve 64.

If, at the step S-14 an output signal is indicated from the oxygen sensor 106, the program moves to the step S-16 to discontinue the supply of additional enrichment fuel by closing the enrichment valve 64. The program then moves to the step S-17 to initiate feedback control of the air/ fuel ratio λ and to operate the stepping motor 98 in accordance with a feedback control, as will be described, so as to maintain the appropriate fuel/air ratio (λ = 1 under all conditions. The feedback control ranges are shown in Figure 4 and occur after the oxygen sensor is determined as being activated, as shown therein. Steps 13 to 16 allow, particularly at "Hot start" conditions, to detect immediately the timing when the oxygen sensor 106 achieves its operating temperature.

If at the step S-10 it is determined that the operator has moved the throttle valve 86 to an off idle condition, then the program moves to a step S-18 to determine what the value of the position of the air bleed valve 98 should be for that off idle condition. This off idle setting is initially set at "d" which is greater than the value "b" but less than the value "c". The value "d" is shown in Figure 4 as HLD 50 and because it is somewhat smaller than value "c", the fuel/ air mixture at off idle will tend to be slightly richer than that at idle. In the embodiment shown in Figure 4, the value "d" is set at 50 for generating stoichiometric mixture. The stepping motor 101 is then actuated at the step S-19 so as to set the air bleed valve 99.

The program then moves to the step S-20 to determine if a signal is outputted from the oxygen sensor 106. Again, this is done so as to determine if the oxygen sensor 106 is at an adequate or proper temperature for feedback control. If it is, the program moves to the step S-21 so as to assume feedback control, in a manner which will be described.

If on the other hand, at the step S-20 it is determined that there is not output from the oxygen sensor 106, the program moves to a step S-22 to hold the value of the air bleed valve 98 in the condition "d" and the program repeats back to the step S-20 to continue to hold this condition until an output signal is delivered from the oxygen sensor 106.

As has been noted, Figures 2A, 2B illustrates a control routine wherein ECU 72 does not have a map for setting the air/fuel ratio under all running conditions (the ECU 72 has a map only for cranking) in order to receive a stoichiometric mixture and reliance is made on feedback control primarily for this purpose. A graphic representation of the effects of that engine starting routine is indicated in the Figure 13 from which also the performance of the oxygen sensor 106 is derivable after same commences operation. Moreover, it is apparent that once the feedback control is started stoichiometric fuel/air ratio can be constantly assured keeping the control deviation of the step value of the air bleed control valve 98 small closely approaching an essentially constant step value.

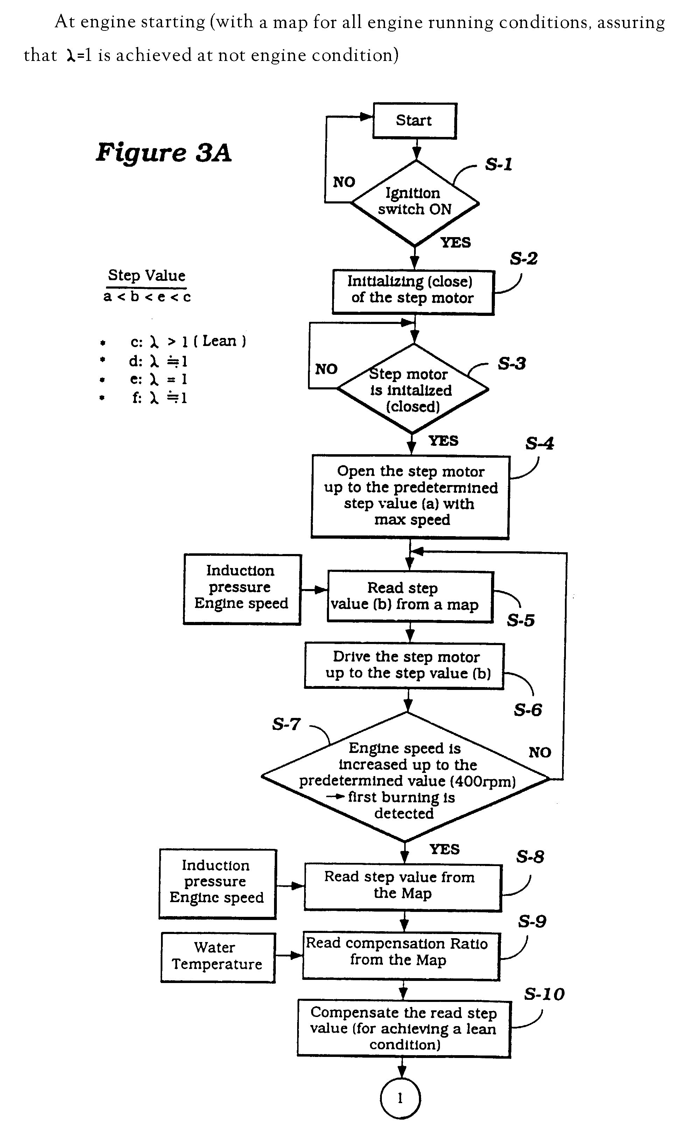

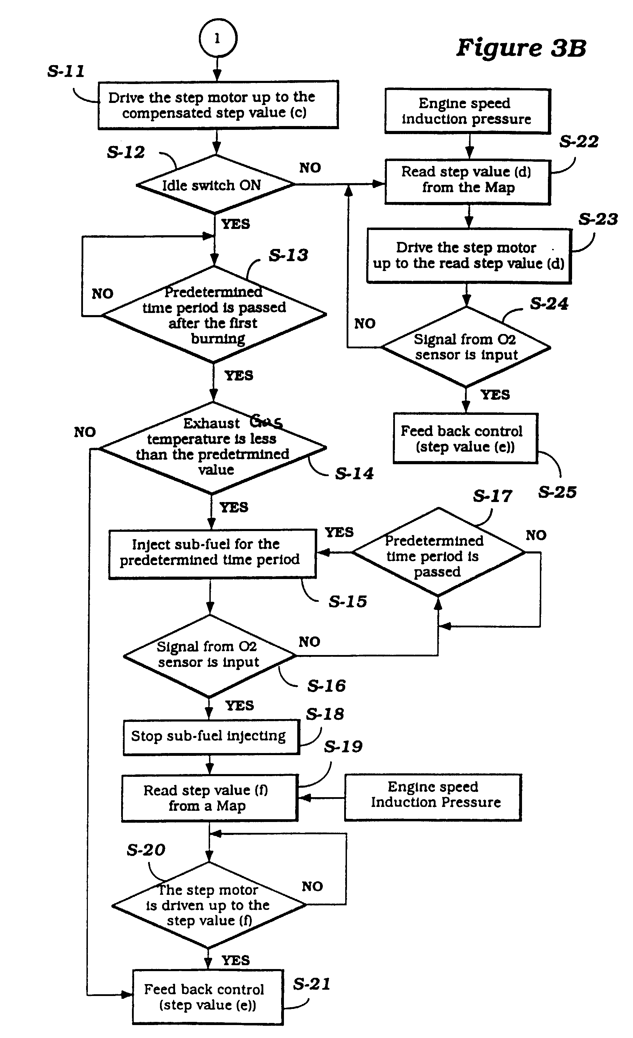

Figures 3A, 3B (please refer to Figure 14 which is similar to Figure 13 but does not show a condition of the ignition switch, a variation of engine speed and temperature of the oxygen sensor) shows a start-up control routing for an arrangement wherein the ECU 72 is provided with a map showing a relationship between induction pressure, engine speed and step value for all running conditions.

After the feedback control is started such a map is not used any longer since the air bleed control valve 98 is controlled by a signal from the oxygen sensor 106.

Referring now to these Figures 3A and 3B, the program starts and then moves to the step S-1 so as to determine whether or not the ignition switch is on. If it is not, the program obviously repeats. However, if the ignition switch is on then the program moves to the step S-2 so as to initialize the air bleed valve 98 at the most rapid speed of the stepping motor 101, At the same time, and has been previously described, the fuel shut-off valve 103 and idle fuel shut-off valve 111 will be maintained in their closed and opened positions, respectively, and the idle speed adjusting valve 96 will also be initially set.

The program then moves to the step S-3 to determine if the air bleed valve 98 has been initialized. If it has not, the program repeats.

If, however, it is determined at the step S-3 that the air bleed valve 98 has been opened then the program moves to the step S-4 so as to adjust the air bleed valve 98 to an initial pre-set map value "a" at a maximum speed. The value "a" may be the same as the value "a" previously noted.

The program then moves to the step S-5 so as to read the induction system pressure and the engine speed from the previously noted sensors and then sets a step value "b" for the air bleed valve 98 that will provided a leaner mixture. The program then moves to the step S-6 so as to drive the stepping motor 101 at its most rapid speed so as to place the air bleed valve 98 in the value "b" position.

The program then moves to the step S-7 to determine if first burning is detected and the engine is running. If it is not, the program repeats back to the Step S-5.

If, however, it is determined at the step S-7 that the engine is running, first burning detected, the program then moves to the step S-8 to read the desired stepping value for the given engine induction pressure and engine speed.

The program then moves to the step S-9 so as to sense the water temperature by the sensor 112 and read from the pre-program map a compensation value for the setting of the air bleed valve 98 from that found at the step S-8. The desired step value at the step S-8 is for stoichiometric mixture and a compensation value at the step S-9 is for compensating the mixture to lean side. The program then moves to the step S-10 to select the compensation value from the map to a lean value and then to the step S-11 to set the appropriate value by operating the stepping motor 101 of the air bleed valve 98. The compensated step value (c) is set so that lean mixture leaner than stoichiometric is supplied to the engine and is the same as the step value (c) in Figures 2a and 2B.

In accordance with this control routine the program then moves to the step S-12 to determine if the throttle valve 86 is still in its idle position as determined by the throttle position sensor, as aforenoted. If the engine is still in idle, the program moves to the step S-13 to determine if a predetermined time period has passed since initial running of the engine. If it has, then the program moves to the step S-14 to determine if the water temperature is elevated which, as aforenoted, will indicate whether or not the oxygen sensor 106 will be at its operating temperature. If the water temperature is less than a predetermined value, the program moves to the step S-15 to actuate the enrichment valve 64 and provide enrichment fuel. As previously noted, this enrichment fuel is supplied only to provide a "triggering" fuel/air mixture so as to determine if the oxygen sensor 106 is at its operating temperature.

The program then moves to the step S-16 to determine if an output signal is outputted from the oxygen sensor 106. If it is not, the program repeats to the step S-17 to determine if the predetermined time period has passed during which the enrichment valve actuator 64 is actuated. If it has and still no output is sensed from the oxygen sensor 106, the program repeats to the step S-15 to supply additional fuel until an output signal is sensed from the oxygen sensor 106 at the step S-16.

Once an output signal is sensed from the oxygen sensor at the step S-16, the program moves to the step S-18 to stop enrichment fuel by closing the enrichment device 64. The program then moves to the step S-19 where engine speed, induction pressure and other parameters are sensed and then a value "f" (for stoichiometric mixture) for the position of the air bleed valve 98 is determined from the pre-programmed map in the ECU 27. The program then moves to the step S-20 to drive the stepper motor 101 to place the air bleed valve 98 in the position of "f". This continues until the air bleed valve 98 is in this position and then the program moves to the step S-21 to go to feedback control wherein the average of the step value of the air bleed valve 98 is maintained at the position "e". (i.e. step value 50) and then feedback control is initiated.

There are two possibilites that a valve "f" is set same as a value "e" or different from a value "e". A step value "f" is read from a map based upon engine speed and induction pressure. Since, when the oxygen sensor 106 outputs the first signal based upon the additional fuel supply at the step S-15 in Figures 3A and 3B, the step value for the air bleed valve 98 is moved to a value (f) from a value (c) based upon a map, a control system with quick response is obtained. Namely, if said value (f) is not used as shown in Figure 13, when the oxygen sensor 106 outputs the first signal based upon the additional fuel supply (when the oxygen sensor 106 outputs a signal it is determined that it is in a rich condition and the step value of the air bleed valve 98 is increased so as to decrease the amount of fuel supply) a step value of the air bleed valve 98 is increased and the mixture would become lean significantly than stoichiometric temporarily.

If at the step S-12 it is determined that the engine throttle valve 86 has been moved by the operator to the off idle condition, the program moves to the step S-22 wherein engine parameters such as engine speed and induction pressure are sensed and a predetermined value "d" for stoichiometric value for the air bleed valve 98 is read from the map in the ECU 72. The program then moves to the step S-23 to operate the stepping motor 101 and place the air bleed valve 98 in the position "d" and the program then moves to the step S-24 to determine if an output signal is sensed by the oxygen sensor 106. If not, the program repeats back to the step S-22. If, however, the oxygen sensor 106 is outputting a signal, then it is known that the system is in condition for feedback control and the program moves to the step S-25 so as to initiate feedback control. The further details of the feedback control and the various control routines once feedback control has been entered into force will now be described by particular references to Figures 4 through 9. Referring first to Figure 4, this is a graphical view showing various engine running characteristics, the condition of the idle switch that determines when the throttle valve 86 is in the idle condition (ON) or in the off idle conditon (OFF), the conditions when the exhaust temperature is sensed by the temperature sensor 113 as below and above the predetermined value and also the conditon of the vacuum sensor valve 114 (in the "close" region, it is determined that the throttle valve 896 is completely opened). As will be seen there is a demarcation in the control strategies when the engine is in idle on or off condition as indicated by the horizontal line indicating the condition of the aforenoted idle switch. When the engine is operating in the idle mode, a feedback value "l" is chosen which value is lower than the feedback value when operating in off idle. By referring to a low feedback value, this indicates that the rate of change of the condition of the air bleed valve 98 and specifically its stepping motor 101 occurs at a slower rate than when operating under normal feedback in off idle when the feedback value is "2" (see also Fig. 15) other transient conditions are also present and will be described later.

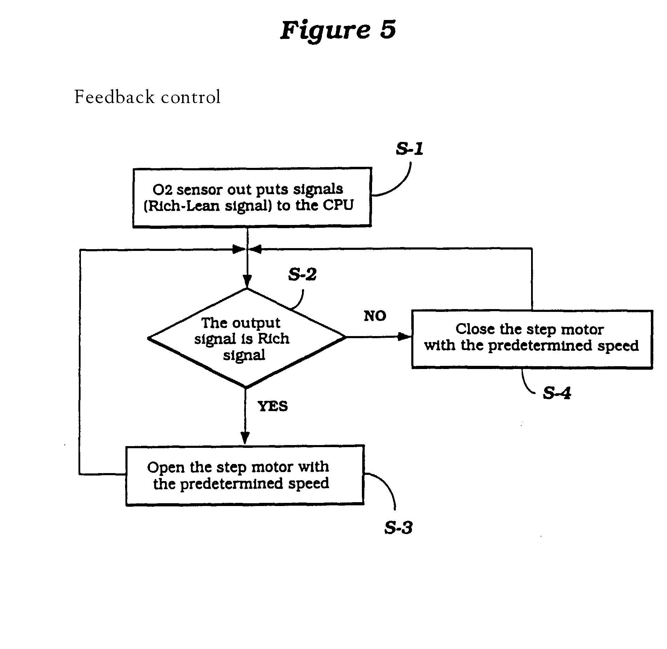

Referring now to Figure 5, this is a block diagram that shows the basic strategy of feedback control regardless of whether operating under the idle or off idle condition. As will be seen in this Figure, at the step S-1, the ECU 72 receives a signal from the oxygen sensor 106 which is indicative of whether the mixture is rich (no O₂, an output signal) or stoichiometric or lean, O₂ condition (no output signal). The output signal of the oxygen sensor 106 is actually independent of the type of fuel employed. That is, the oxygen sensor 106 will output its signal when the mixture is richer than stoichiometric regardless of the fuel being burned. On the other hand, if the mixture is stoichiometric or less, the oxygen sensor 106 will output no signal.

After the program starts the output signal of the oxygen sensor 106 is compared within the ECU at the step S-2 to determine if a rich mixture is present. If it is, then the air/fuel ratio is increased at the step S-3 by operating the stepping motor 101 of the air bleed valve 98 so as to increase the opening area of the air bleed valve 98 and to reduce the supply of fuel to the induction passage by means of introducing additional air into the carburetor fuel chamber 89.

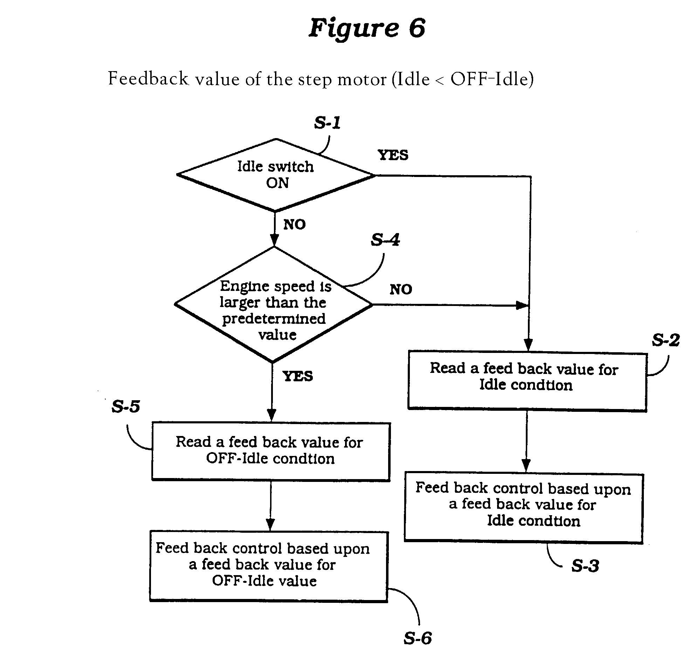

If, on the other hand, the output signal indicates the absence of a rich mixture at the step S-2, the program moves to the step S-4 so as to cause a slight richening of the fuel by closing the stepping motor 101 and air bleed valve 98 so as to enrichen the mixture. The speeds at which the stepping motor 101 are operated are, as has been previously noted, determined by whether the engine is operating in an idle or off idle condition and as is shown in Figures 4 and 15. The determination of whether the feedback value should be "1" or "2" (engine at idle or off idle) is depecited in Figure 6. In this routine, the ECU 72 performs a first step S-1 which determines whether the throttle valve 86 is in its idle or off idle condition by indicating whether an idle switch is on or the throttle position sensor indicates that the throttle valve 86 is in its idle condition. If the idle switch is on, the program moves to the step S-2 so as to read the feedback value for idle condition ("1" in the previously described condition) and the program then moves to the step S-3 so as to maintain feedback control based upon the selected idle condition feedback value.

If, however, the idle switch is not determined to be on at the step S-1, the program then moves to the step S-4 to read the engine speed. If the engine speed is, at the step S-4, determined to be still at approximately normal idle condition, the program returns to the step S-2 to maintain control at the idle feedback value. That is, under this condition it may be determined that the throttle valve has been opened but that the engine, for some reason, is still operating at or near idle speed.

If, however, at the step S-4 it is determined that the engine speed is above the predetermined speed indicating that the engine is truly operating in an off idle range, then the program moves to the step S-5 so as to read the feedback value for the off idle condition (see also Fig. 4). This may be either the value "2" as previously noted for off idle or, alternatively, a higher feedback value if an acceleration condition is sensed, as will be described by reference to Figure 15.

The program then moves to the step S-6 so as to maintain the air/fuel ratio using the feedback value selected for off idle conditions.

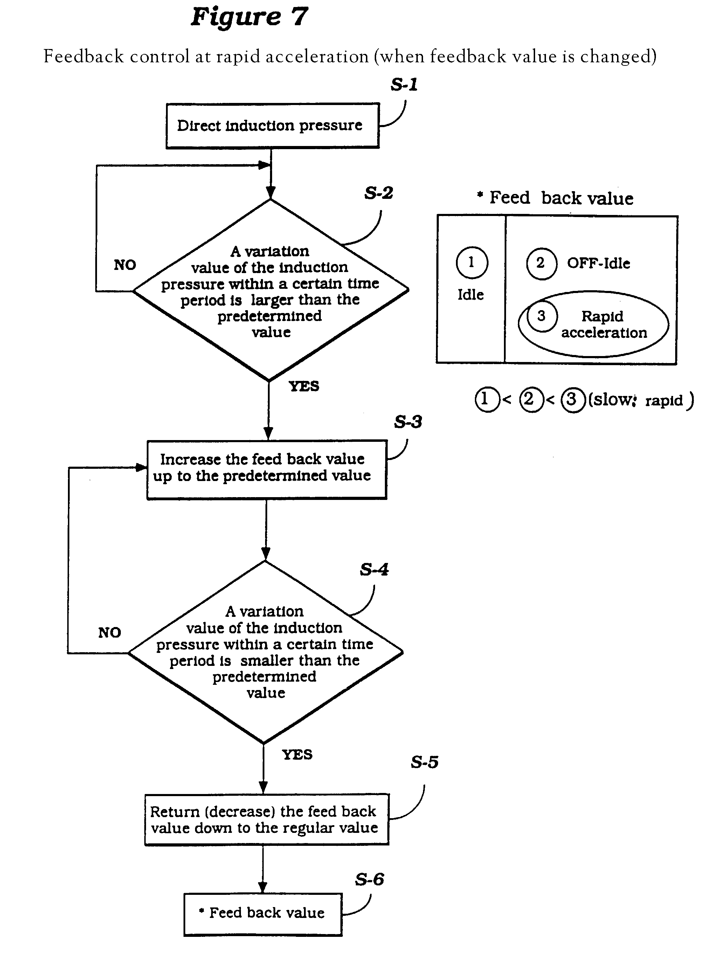

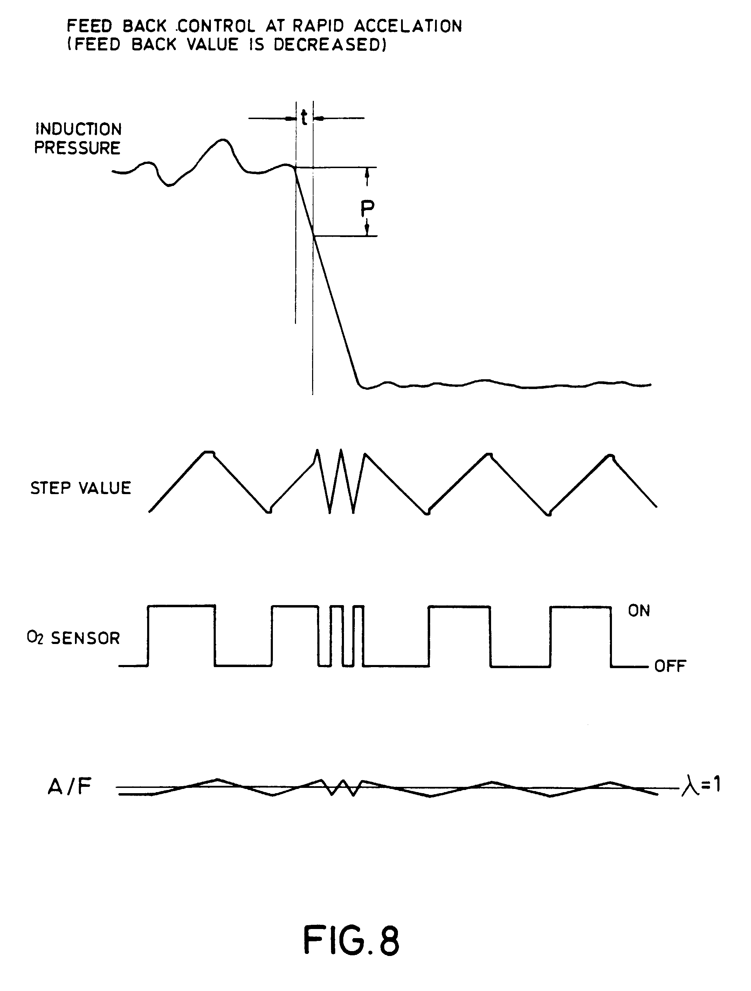

Referring now to Figures 7 and 8, the routine for controlling the air bleed valve 98 under rapid acceleration conditions will be described and the characteristics shown. These Figures show an embodiment wherein rapid acceleration conditions are determined by sensing a rapid change in induction system pressure. It should be understood that other methods may be employed for determining rapid acceleration such as rapid opening of the throttle valve 86.

In this program, the ECU 72 initially reads induction system pressure at the step S-1 and then measures induction system pressure at a further time period t at the step S-2 to determine if there is a greater than predetermined amount of induction system pressure variation in the given time period. This is an indication that the engine is being accelerated rapidly. If rapid acceleration is not determined at the step S-2, the program returns back and repeats.

If, however, it is determined at the step S-2 that the engine is rapidly accelerating due to the occurrence of more than a predetermined change in induction system pressure in a given time period the program moves to the step S-3 to increase the feedback value up to the predetermined rapid acceleration value ("3" in this embodiment). When the oxygen sensor 106 outputs a signal control of the air/fuel ratio is then achieved at this rapid feedback value. The program then moves to a step S-4 to determine if the induction system pressure is continuing to change at a rapid rate. This is determined by sensing whether the variation in the induction system pressure within a certain time period is smaller than the predetermined value applied at step S-2. If it is not, it is assumed that the engine is continuing to be accelerated and the program repeats back to the step S-3.

If, however, it is determined at the step S-4 that the induction system pressure is not varying with larger variation than the predetermined value, then it is determined that the acceleration condition has passed and the program moves to the step S-5 to decrease the feedback value down to the regular off idle value of "2" and the program then moves to the step S-6 so as to continue to control the air bleed valve 98 at this value.

In addition to the feedback value control of the air/fuel ratio as described in the control routines, there is an additional control routine which is employed so as to ensure good exhaust emission control protection of the catalyst 25 as well as good fuel economy. This is a condition when there is an extreme deceleration caused by rapid closing of throttle valve 86 from a high speed operation. If the fuel circuits are maintained open under this condition, a high vacuum will be exerted at the idle discharge port 94 provided for by the conduit 92.

Therefore, and as has been previously noted, either or both of the idle circuit cutoff valve 111 or the fuel shut-off valve 103 may be employed for shutting off the fuel flow under such conditions. This fuel cutoff mode is depicted in the are of Fig. 4 at HLD FC (Fuel Cut) wherein the throttle valve has been moved to the idle position and engine deceleration occurs and the fuel supply is cut off in the manner afore-described.

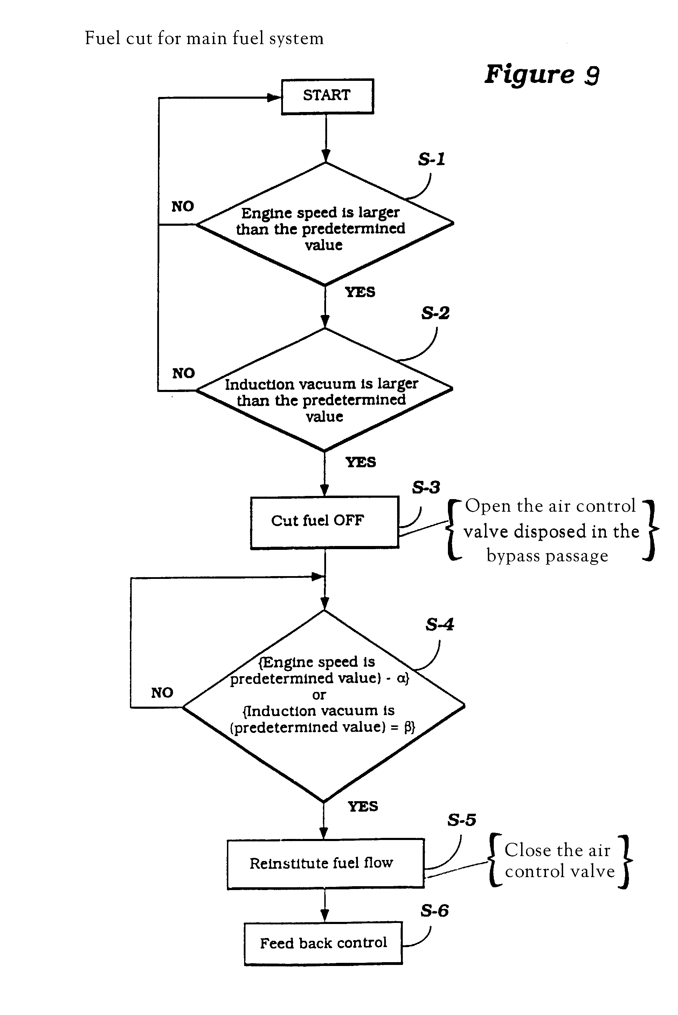

In this routine, the program in Fig. 9 starts and moves to a step S-1 to determine if the engine speed is greater than a predetermined engine speed. If it is not, it is assumed that the engine is operating at normal condition where fuel cutoff is not required and the program repeats. If, however, it is determined that the engine speed is greater than a predetermined speed, the program then moves to the step S-2 to determine if induction system vacuum is greater than a predetermined amount as sensed by the vacuum sensor or vacuum switch 114. If it is not, again it is assumed that there is a normal condition and the program repeats back to the start.

If, however, it has been determined at the steps S-1 and S-2 that the engine speed is above the predetermined speed and the induction vacuum is greater than a predetermined value then the program moves to the step S-3 to cut off the fuel supply. As has been noted, this is done by the ECU 72 either opening the fuel shut-off valve 103 so as to reduce the drawing of fuel into the chamber 89 by supplying large amount of air into the chamber 89 and/or closing the idle shut-off valve 111 depending upon whether either or both of these types of shut-off are employed.

The program then moves to the step S-4 which is a step that introduces a hysteresis in the system so that the fuel control will not be immediately reinstituted once the quick deceleration condition has passed. In the step S-4 it is determined if the engine speed has fallen below a predetermined speed which is lower than the speed determined at the step S-1 or if the induction vacuum is less than a predetermined amount either of which conditions indicate that the deceleration condition has depleted. If neither condition exists, the program repeats back to the step S-4.

If, however, the deceleration condition has been determined to have ceased by more than a predetermined amount as determined at the step S-4, the program moves to the step S-5 to reinstitute fuel flow with hystereses. This is done by closing either the fuel shut-off valve 103 or opening the idle circuit fuel control valve 111 or both if they both exist. The program then moves to the step S-6 so as to return to normal feedback control depending upon the other parameters previously noted. This is also indicated by the areas TDFC in Figure 4.

There are two additional control ranges shown in Figure 4 that should be described. These are control ranges wherein the air bleed control valve 98 is operated so as to provide a richer than normal mixture so as to protect the catalyst in the catalytic converter. The first of these ranges is indicated in Figure 4 as HLD FUL (hold full) range. Under this condition, it is determined that a rich fuel/air mixture is required in order to protect the catalyst and the air bleed valve 98 is closed to a stepping value of approximately 30 so as to provide a rich condition to protect the catalyst.

There is a further range wherein rich mixture is necessary but not quite as rich and this is shown in the area HLD NE in Figure 4 wherein a rich mixture is maintained but not quite as rich as in the HLD FUL range. This range may be a step of approximately 35.

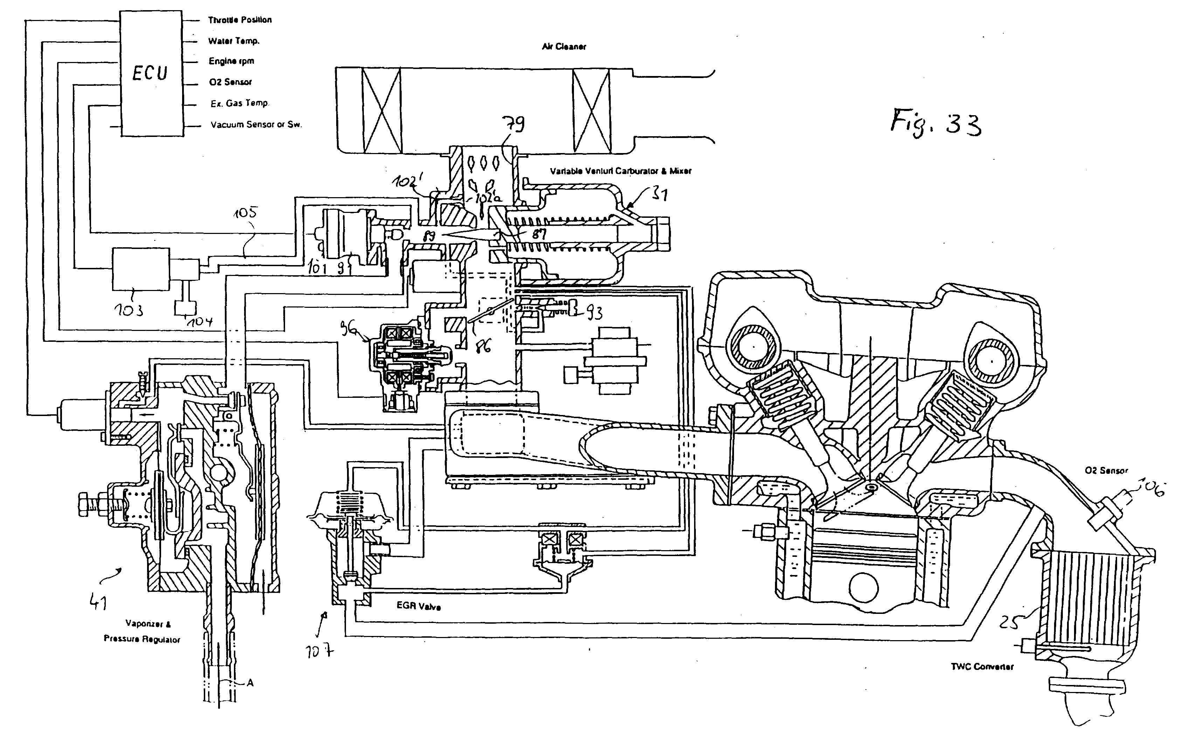

The operation of the system as thus far described has been made in conjunction with a carburetor having the auxiliary circuits and air bleeds and controls as shown in Fig. 1. It has been noted, however, that either the fuel shut-off valve 103 or the idle fuel shut-off 111 may be deleted. In some instances, both of these devices can be deleted if deceleration fuel shut-off is not required. Also, the enrichment system, which as has been noted is primarily for the sole purpose of testing the operational characteristics of the oxygen sensor 106 may be deleted. Also, as shown In Fig. 33, in some instances it may be possible to delete the use of the air bleed valve 98 and to have only a fixed air bleed into the chamber 89 through the passage 102. If this is done, the air/fuel ratio may be changed by changing the position of the fuel control valve 91, and the fuel control valve 91 is controlled so as to keep the air/fuel ratio stoichiometric.

The enrichment fuel may also be supplied to the engine at a place other than directly into the intake manifold plenum chamber 33. For example, this fuel may be introduced through a separate passage formed directly in the mixing device 31. Moreover, it is only decisive that the place where the lean mixture (leaner than stoichiometric) is supplied at first idling is at least the combustion chamber (or a spot upstream thereof). Moreover, discharging a large amount of oxygen into the exhaust passage is performed. This contributes to heat the catalyst of the catalytic convertor rapidly since the excess oxygen immediately burns residual HC in the catalytic convertor 25 to heat same rapidly.

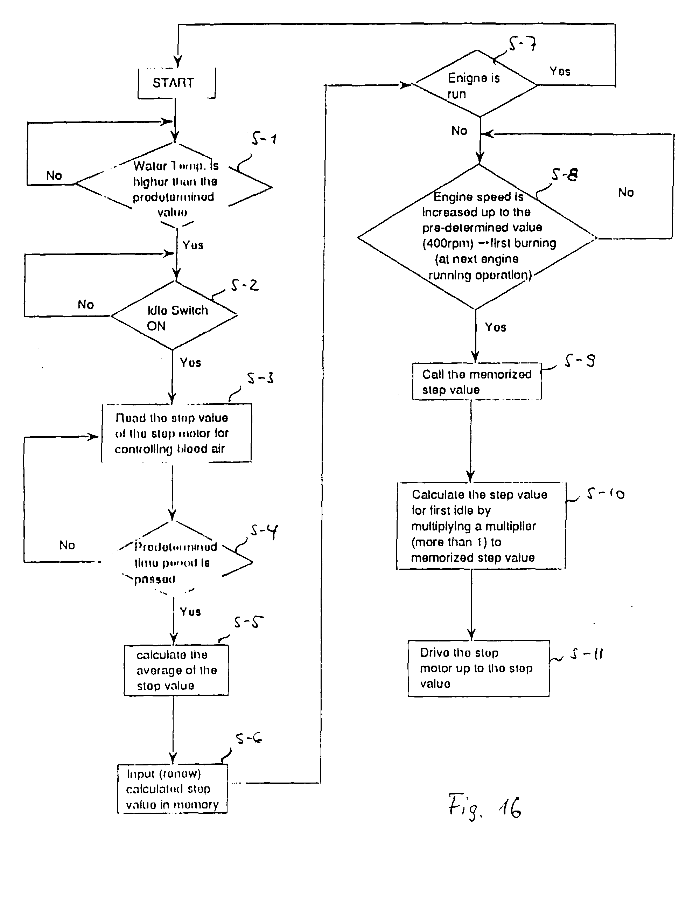

Figure 16 shows another block diagram of a control routine which serves for adjusting an appropriate step value of the stepping motor 101 of the air bleed valve 98 for first idling conditions, i.e. adjusting the step value of said stepping motor 101 after cranking on the basis of an information as to whether or not the cooling water temperature of the engine has reached a predetermined level and as to whether or not the idling switch is on (see Figs. 13 to 18, i.e. prior to the feedback control from the oxygen sensor 106 being initiated).

Namely, Figure 16 shows a learning control routine for the stepping motor 101 at engine starting. In this control routine, the fact that a step value, which is used at feed back control period, of the air bleed valve 98 is for stoichiometric mixture is taken into consideration. Within a period wherein the engine is started and feed back control is not started, a step value is used which is obtained by multiplication (factor > 1) of the step value which was used before the engine was stopped. As a result, the step value is increased (this reduced the amount of fuel supply) and the lean mixture with desired air/fuel ratio (air/fuel ratio about 16.5 is desirable) is generated certainly within a period wherein the engine is started and feed back control is not started.

The program starts moving to step S-1 in order to determine whether or not the cooling water temperature is higher than a predetermined value. If it is not, this is considered as an indication that the engine is still operated under early starting conditions such as cranking. Thus, the program returns to repeat. However, when the temperature of the cooling water is higher than the predetermined value the program moves to Step S-2 so as to determined as to whether or not the idle switch is on. If it is not, the program repeats. If it is determined that the idle switch is on and the transitional period of engine starting (cranking) is substantially terminated, i.e. the cooling water temperature becomes higher than the predetermined valued, the program moves to the step S-3 to read the step value of the stepping motor 101 for controlling the air bleed valve 98 (see also Fig. 13) as is shown in said Figure 13 (see range (a), (b), of the step value diagram). Then, the program moves to step S-4 i.e. it is determined whether the step value has been rad over a predetermined time period sufficient to calculate an average of the step value for controlling the step motor 101. If this is the case, then said average of the step value is calculated in step S-5, otherwise the program returns to step S-3.

Said average of the step value is input into the memory to update same in step S-6.

Then, the program moves to S-7 wherein it is determined whether the engine is run. Namely, it is determined whether the engine is stopped and next engine running performance is performed between the steps S-6 and S-7. If it is determined that the engine is run the cycle for compensating the step value for achieving a lean condition is performed by the program of steps S-8 to S-11 whereas, otherwise i.e. if engine does not run and first burning has not yet occurred, namely, the engine speed is not increased up to a predetermined value of approximately 400 rpm, the step S-8 is continued at the next engine running operation.

Then, the updated memorized step value is called in step S-9 and the step value for the first idle, ie. for the range (c) in the step value diagram of Fig. 14 is calculated by multiplying said memorized step value with a factor greater 1 to increase the step value during first idle (range c in Fig. 13) to proved a lean fuel/air mixture and, finally the stepping motor 101 is driven to said multiplied step value resulting in the step value diagram of Fig. 13.

In this way, in response to the induction pressure of the intake passage and based on the temperature of the cooling water a compensation of the step value during cranking (see Figs. 17 and 18) takes place and an appropriate set value for bleed air supply into the fuel supply chamber 89 takes place to assist the supply of a lean fuel/air mixture during the initial warming-up phase of the engine during cranking and after first burning of the engine under idling conditions.

As explained above the control signal the feedback control of the air/fuel ratio is issued by the oxygen sensor 106 leads to a correction value or variances of the substantially contstant step value of the stepping motor 101 of the applied control valve 98 (see Figure 20, upper diagram).

As was mentioned with respect to Figure 15 and Figures 15a to 15c the feedback value (the variation of the step value within a certain time period) of the feedback control depends on the load condition of the engine such that the feedback value is increased and the frequency of outputting said feedback signal is increased under condition of rapid acceleration (see Figs. 8 and 15, 15a to 15c). Thus, as shown in the diagram of Figure 8, under a certain rate of induction pressure reduction which represents a rapid acceleration condition, the frequency of activating the feedback control is increased, i.e. the feedback value is increased, and, accordingly, also under such conditions of normal engine operation the desired stoichiometric fuel/air mixture (λ = 1) can be met.

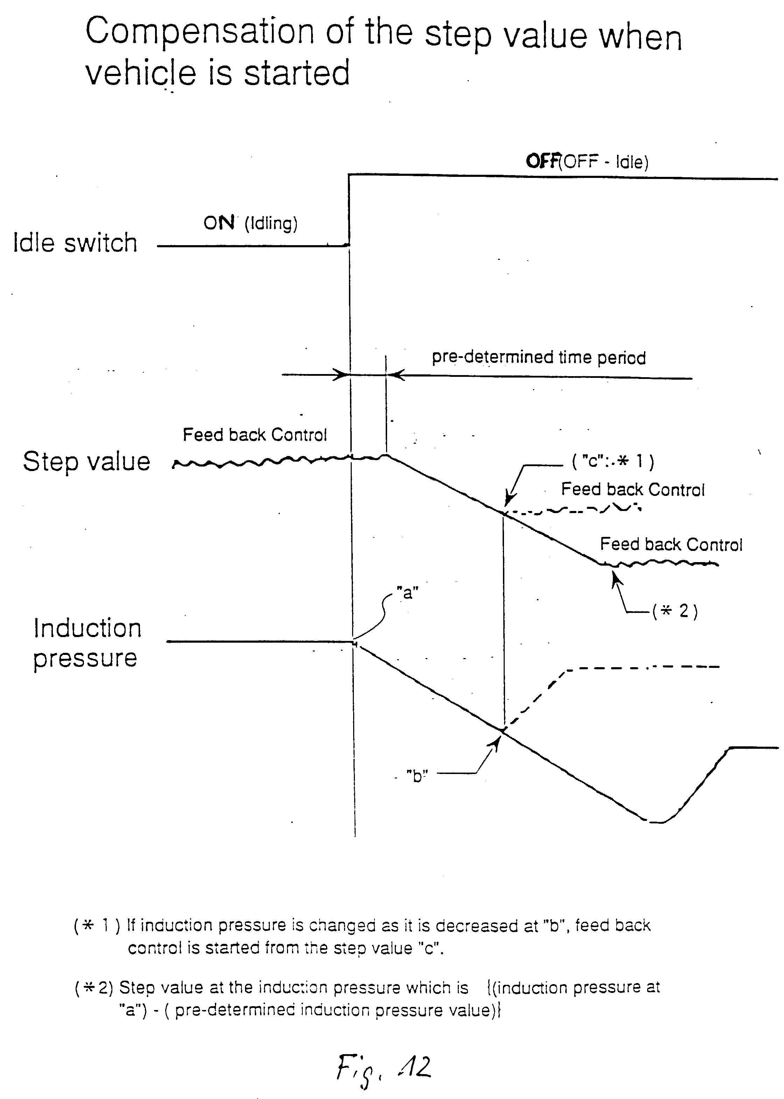

Figure 12 indicates how the value of the feedback signal is decreased under increasing load conditions when the step value of the air bleed control valve is reduced to increase the amount of fuel to be supplied when the engine running conditions change from idling to the OFF-idle condition.

The foregoing described control routines are employed with the engine induction system as shown in Figure 1 and including an air valve or constant pressure type of carburetor 29. However, it is to be understood that these control routines may also be employed with systems including conventional venturi-type carburetors. It is believed that those skilled in the art will readily understand how these control routines may be employed to any of the conventional carburetion systems. Of course the system will not have the full advantage of those employing an air valve or contstant pressure type of carburetor. Nevertheless, the application of these control routines to the arrangements shown in the various further embodiments of this application will be extremely effective in providing good exhaust emission control and fuel economy, particularly when operating on a gaseous fuel. It is to be understood, however, that certain facets of the invention may also be employed for maintaining air/fuel ratio in liquid fueled engines embodying either conventional venturi-type carburetors or air valve type of carburetors.

It is also to be understood that the invention may be employed in conjunction with carburetors of the type known as "staged carburetors". This type of carburetor has some of the attributes of a conventional carburetor and some of the attributes of an air valve type of carburetor. That is, these stage carburetors have at least a pair of barrels that are operated in staged sequence so as to provide, in effect, a varying flow area and a more uniform pressure drop across the device during engine operation.

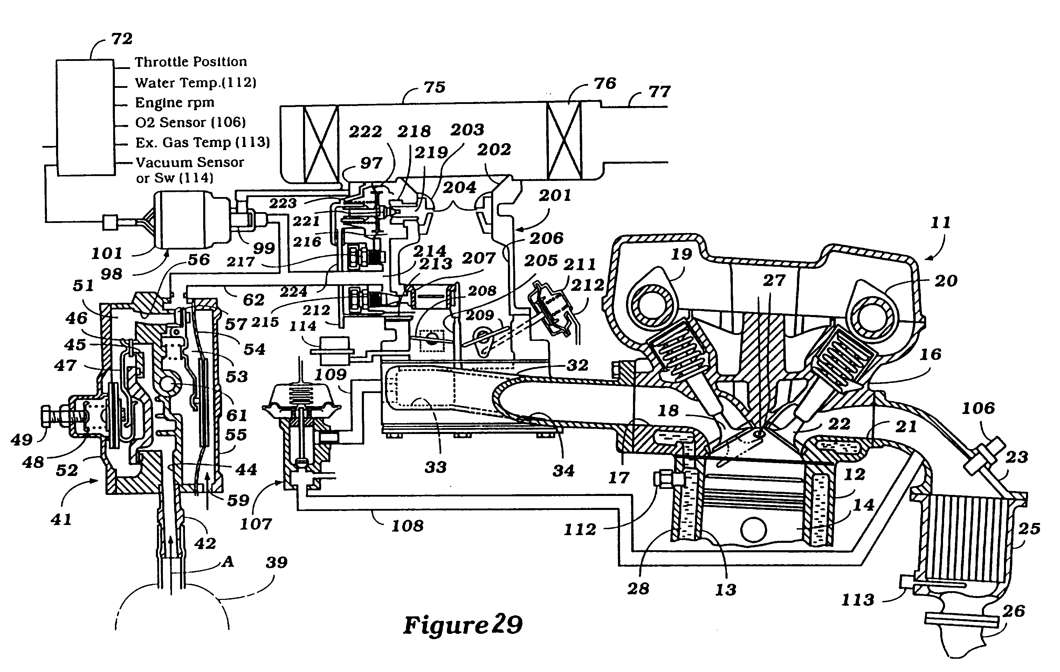

Figure 29 shows a type of stage carburetor modified to operate on a gaseous fuel and employ control routines of the type described. The embodiment of Figure 29 differs from the embodiment of Figure 1 solely in the construction of the charge former associated with the engine 11 and certain of the circuitry associated with the charge former. For that reason, components of this embodiment which are the same or substantially the same of the embodiment of Figure 1 have been identified by the same reference numerals and will not be described again in detail, except insofar as is necessary to understand the construction and operation of this embodiment.

In this embodiment, the pressure regulator 41 does not include an enrichment stage. It is to be understood, however, that this embodiment may also be provided with an enrichment stage and an enrichment strategy of the type previously described in order to assure that the oxygen sensor 106 is at is operating temperature.

In this embodiment, a charge former in the form of a two stage, two barrel carburetor, indicated generally by the reference numeral 201 is provided and receives air from the air cleaner 75 and delivers it to the intake manifold 32. The carburetor 201 has an air horn 202 in which a venturi section 203 incorporating a fuel discharge 204 is provided. The venturi section 203 serves a primary barrel 205 and a secondary barrel 206. The primary barrel 205 is provided with its own venturi section 207 that has a fuel discharge circuit which receives fuel, in a manner which will be described. A throttle valve 208 is provided in the primary barrel 205 and is operated by the accelerator pedal or throttle control in a conventional manner.

The secondary barrel 206 does not have any venturi section and all fuel that flows through this barrel is supplied by the main venturi section fuel discharges 204. A throttle valve 209 is provided in the secondary barrel 206 and is operated by a vacuum servo motor 211 which as a pressure conduit 212 that extends to a pressure pick up point 213 provided in the primary barrel 205 downstream of the venturi section 207. As is conventional with two stage carburetors, when there is adequate air flow through the primary barrel 205 to indicate the need for additional air flow, the vacuum at the pressure port 213 will rise sufficiently to cause the servo motor 211 to open the throttle valve 209.

The sub-atmospheric pressure conduit 62 leading from the regulator stage 53 delivers fuel to a fuel chamber 214 of the carburetor 201. This fuel chamber 214 registers with the fuel discharge provided in the venturi section 207 of the primary barrel 205 and a flow controlling needle valve 215 sets the initial setting for the air/fuel ratio supplied by the primary barrel 205 to the engine 11. As with the previously described embodiment, the air/fuel ratio is maintained constant by operating the air bleed valve 98 in the manner previously described. As with the previously described embodiment, the air bleed valve 98 takes air from the air cleaner port 97 downstream of the filter element 76 and mixes it with the fuel flowing through the conduit 62 to control the air/fuel ratio.

The fuel chamber 214 of the carburetor 202 also supplies the main nozzle discharge ports 204 through a second chamber 216 with the flow between the chambers 214 and 216 being controlled by an adjustable valve 217 for setting the initial air/fuel ratio. In addition, a valve seat 218 is provided for controlling the communication of the chamber 216 with a fuel passage 219 formed in the venturi section 203 and from which the discharge ports 204 extend. A controlling needle valve 221 is affixed to a diaphragm 222 and controls the opening and closing of the valve seat 218. A coil compression spring 223 normally urges the valve 221 into a closed position. The back side of the diaphragm 222 is exposed to the pressure at the pressure port 213 through a further conduit 224.

When the engine is operating a low and mid-range speeds and the throttle valve 209 is closed, there is a danger that air could be drawn into the fuel chamber 214 from the discharge ports 204 of the main venturi section 203. Under this condition, however, the coil spring 223 keeps the valve member 221 in its closed position and no air bleed will occur. However, as the engine speed and load increases and as the air flow through the primary barrel venturi section 207 increases, there will be a pressure decrease in the conduit 224 and chamber on the backside of the diaphragm 222 and the needle valve 221 will begin to open.

Under this condition, since the amount of air which passes through the main venturi section 203 and the vacuum therein are increased, fuel will be discharged through the discharge prots 204 and the air/fuel ratio of this fuel discharge is also controlled by the stepping motor 101.

Figure 29 does not show an idle circuit for the carburetor 201 but it is to be understood that the primary barrel 205 may be provided with an idle circuit similar to the idle circuit employed in the embodiment of Figure 1 and which may include a shut-off system for shutting off the supply of fuel under extreme decelerations.

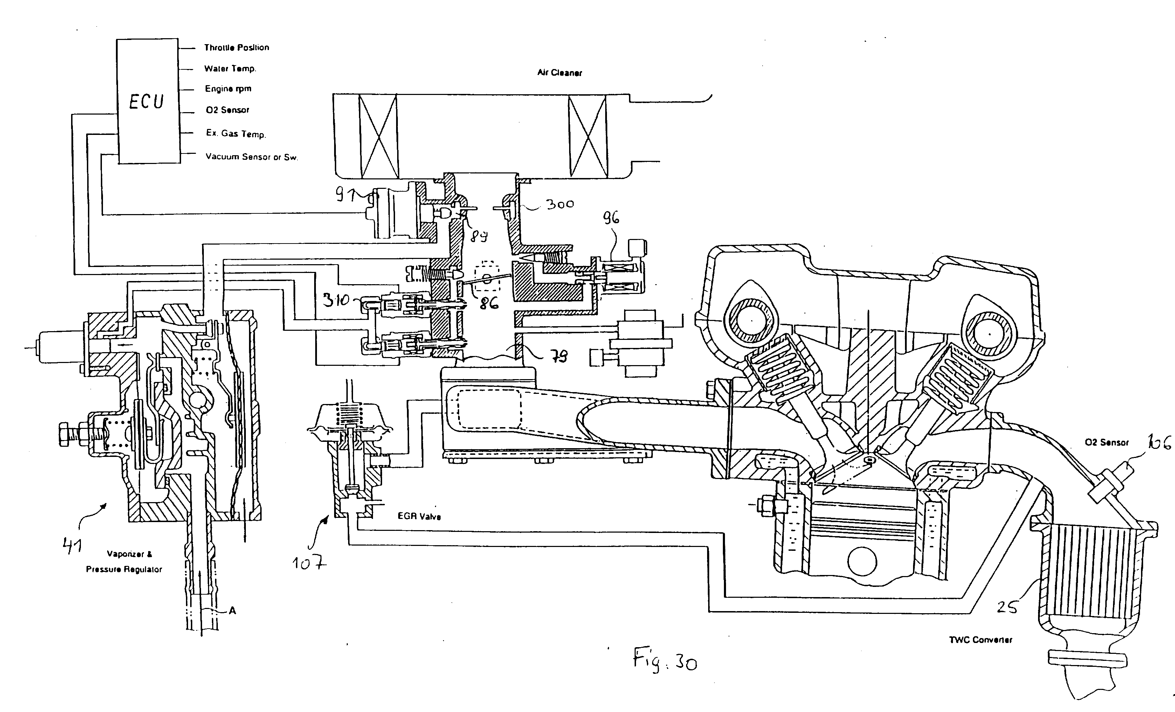

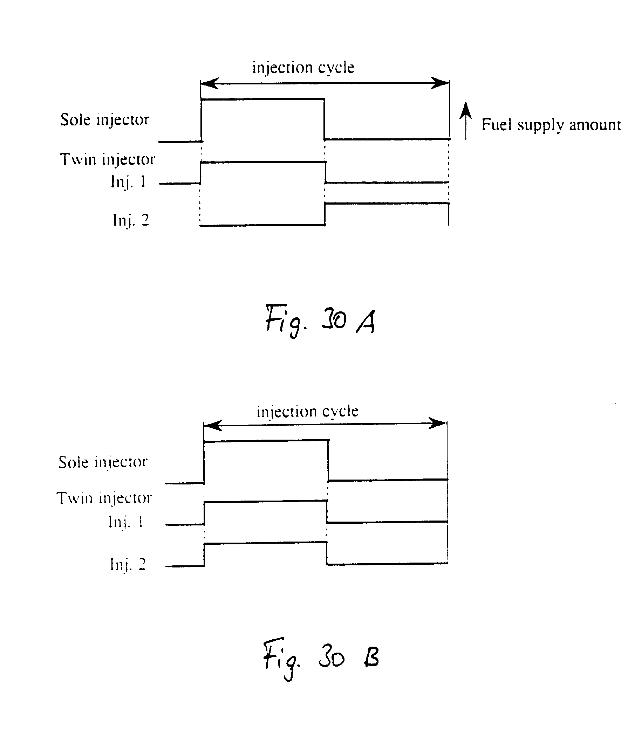

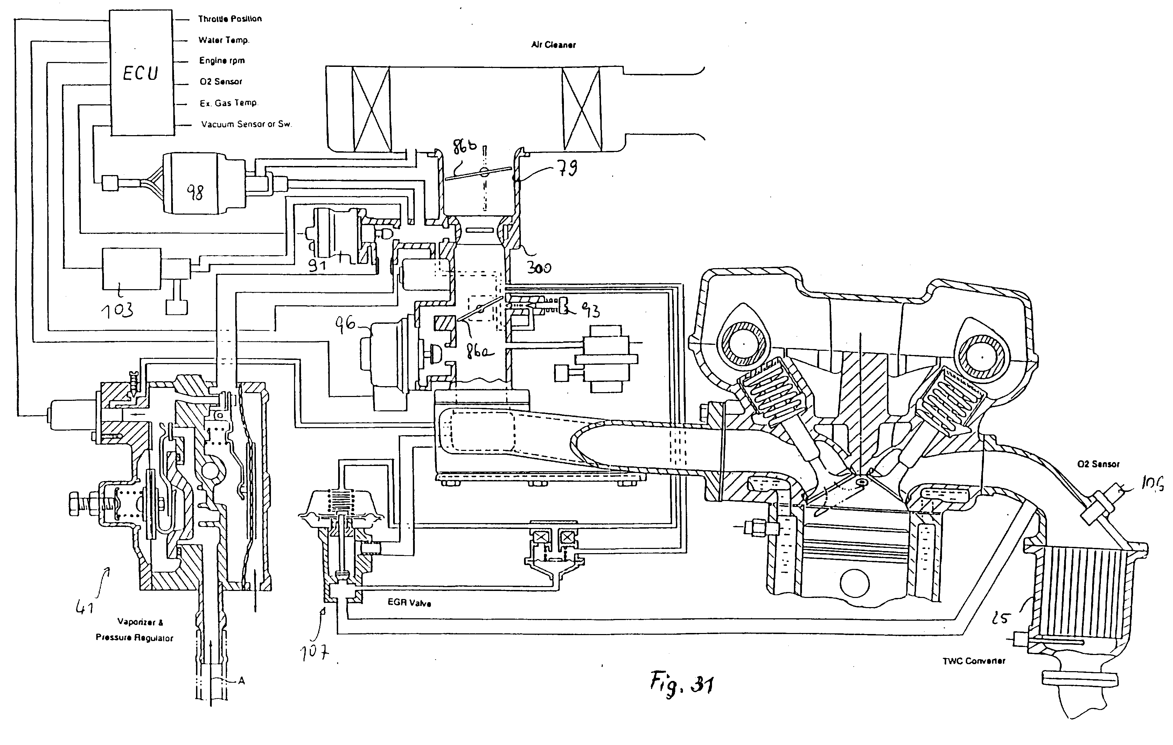

Figure 30 shows an embodiment similar to Figure 29 in that there is also a conventional fixed venturi type carbuertor 300 shown wherein the fuel supply from the fuel pressure regulator 41 to the carburetor is controlled only by means of the fuel supply control valve 91 while a preadjustment of the supply of fuel from the main fuel chamber 89 through an air bleed control valve is not provided.

In that case, additional fuel can be injected into the induction passage 74 downstream of the throttle flap 86 by means of a twin fuel injector 310 which serves to the use of a fixed type venturi carburetor 300 in that a uniformed air/fuel ratio is supplied through the intake passage 79 at each of its portions wherein each of the two fuel injectors of the twin fuel ejector 310 is controlled from the ECU to be operated alternatively or simultaneously during an injection cycle of the twin fuel ejector 310.

The twin fuel injector 310 is installed instead of the idle discharge line 92 shown in Figure 1 and it supplies fuel at idling condition wherein the throttle valve 86 is closed. For maintaining the air/fuel ratio uniformly everyhwhere in the induction passage 79, this twin injector 310 is controlled so as to inject fuel mutually (continously with both injectors) as shown in Figure 30A or to inject half amount of total amount of fuel simultaneously as shown in Figure 30B.

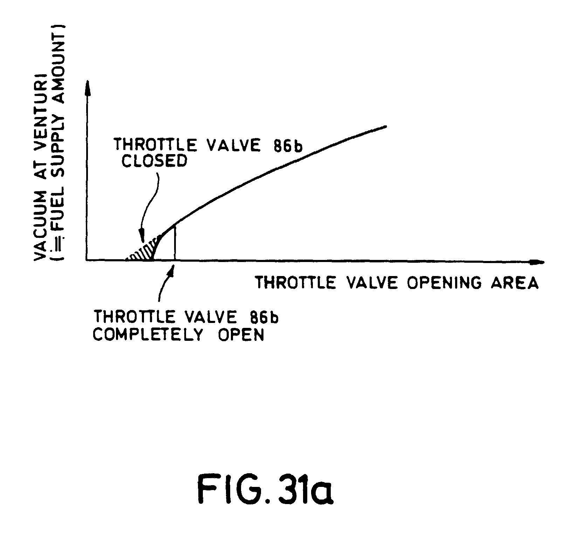

Another embodiment of the present invention is shown in Figure 31 which, with respect to the provision of the air bleed control valve 98 and the fuel supply control valve 91 the arrangement complies with that of the first embodiment but, in contrast thereto, makes use of a type of fixed venturi type carburetor 300. As is well known, such a conventional stationary type carburetor 310 frequently generates insufficient vacuum under low load conditions and, accordingly, the supply of fuel and a precise control of the air/fuel ratio is difficult to obtain. Therefore, in this embodiment, a second throttle vavle 86b is provided within an upstream portion of the intake passage 79, i.e. upstream of the carburetor 300 which is controlled in accordance with the opening area of the throttle valve 86a. Preferably there is a linkage (not shown) between the two throttle valves 86, 86b for a harmonized opening movement of the first and second throttle valves 86A, 86B.

More specifically, in order to compensate for fluctuations of fuel supply during low load conditions the second valve 86b is closed to generate higher vacuum at the venturi portion of the mixing device 300 as shown in the hatching portion in Figure 31., in the time the first throttle valve 86a starts opening while said second valve is completely opened as soon as the transition of the opening phase (low load condition) of the first throttle valve 86a is over (see Fig. 31a). This enables to supply fuel certainly corresponding to the amount of air supply and a superior control of the air/fuel ratio (to be stoichiometric) even under low load condition despite using a fixed venturi type carburetor (mixing device). Therefore, said arrangement is suited to reduce the costs for the fuel supply system of the engine as such a fixed type venturi carburetor is of course not as costly as a variable venturi type carburetor as used in the system shown in Figure 1.

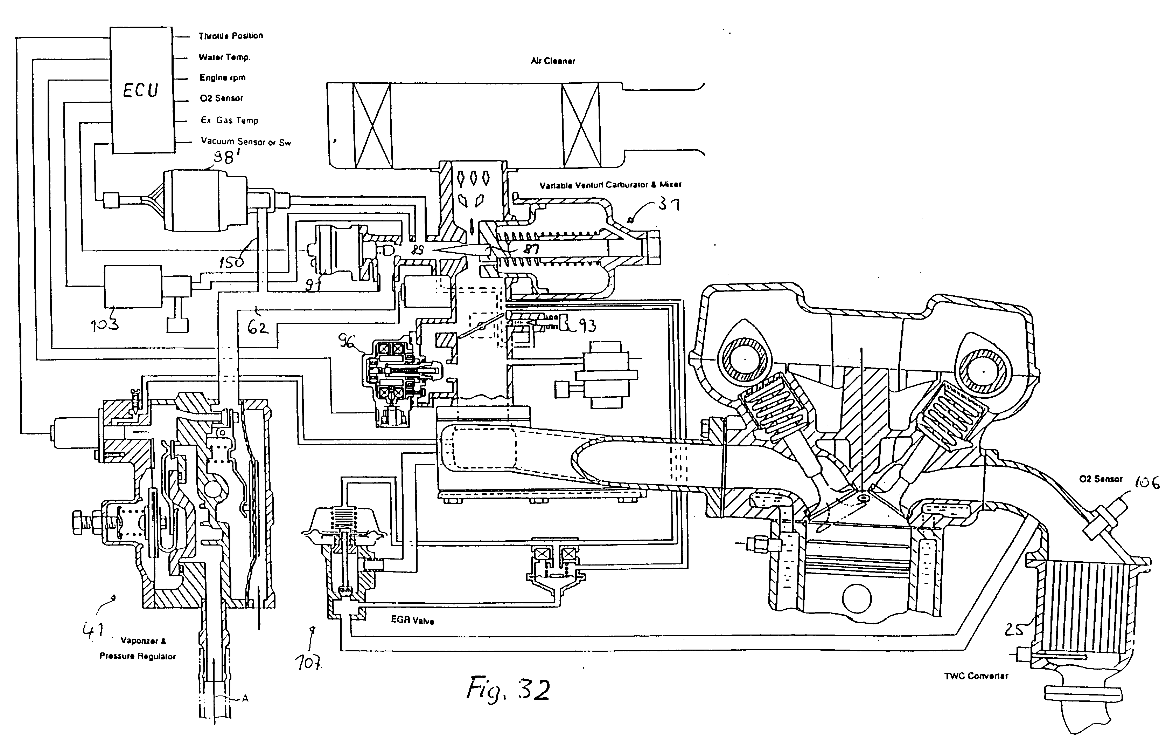

Figure 32 disclosed another modification of the embodiment of Figure 1. Accordingly, the embodiment according to Figure 32 also comprises a variable venturi type carburetor 31 and substantially complies in its layout with the system of Figure 1. However, in this case the control valve 98' is not longer effective to control the supply of fuel by means of bleeding air into said main fuel chamber 89 upstream of the needle valve 87 of the carburetor 31 as, in this embodiment the valve 98' is not an air bleed valve and there is not bleeding of air at all and a suction port 97 (see Fig 1) is not provided. Rather, the control valve 98' is a valve for directly influencing the supply of fuel by regulating the fuel bypass passage 150 branching off from the main fuel supply passage 62. Also in this way there is a feedback control of the control valve 98' from the oxygen sensor 106 to ajdust a stoichiometric fuel/air mixture under normal engine running conditions.

Namely, for adjusting the stoichiometric fuel/air mixture, the step motor 101 of the air bleed valve 98 is controlled so as to close the air bleed valve 98 and to reduce the amount of fuel supply when a signal from the oxygen sensor 106 is input into the air bleed valve 98 since its signal means that the engine is run with rich mixture.

The next embodiment of the gas engine according to Fig. 33 refers to an interesting modification of the first embodiment of Fig 1, namely in that the air bleed control valve 98 in this embodiment is missing but rather a continous flow of bleed air always flows through a bleed air passage 102' branching of from the main fuel chamber 89 and opening through a jet orifice 102'a into the intake passage 79 upstream of the needle valve 87. Therefore, a constant flow of bleed air is introduced into the upstream portion of the intake passage 74 to assist proper air/fuel ratio control. Said bleed air flowing through the bleed air passage 102' orginates from the laminar flow of air along the wall of the main fuel chamber 89 provided from the fuel shut-off valve 103 through the line 105, as said fuel shut-off valve 103 is a quick air bleed valve to introduce additional bleed air into the main fuel member 89, most specifically under transitional load conditions of rapid acceleration. Said flow of bleed air does not intensively mix up with the flow of fuel into the main fuel chamber 89 but, substantially, remains a laminar flow of air along the innter wall of the main fuel chamber and, therefore can partially enter into the bleed air passageway 102'. In this way, at least under rapid acceleration, the air/fuel control can be improved even though a separate air bleed control valve 98 is not provided.

In this embodiment of Fig. 33 a stepping motor 101 of the fuel supply control valve 91 is operated in response to a feedback control signal from the oxygen sensor 106 to perform a feedback control of the air/fuel ratio of the charge supplied to the combustion chamber of the engine (to be normally stoichiometric , λ = 1) while, on the other hand, said stepping motor 101 is also controlled in order to compensate for varying engine environmental conditions as explained above.

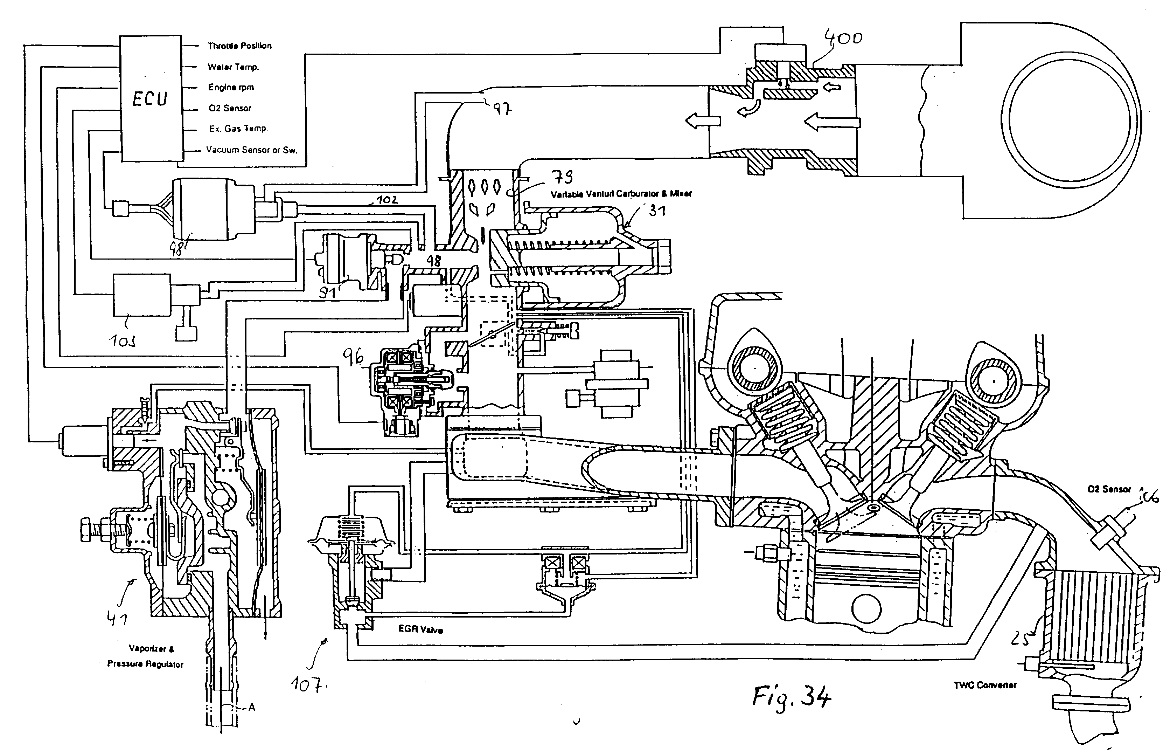

Finally, we still refer to Fig. 34 which discloses another modification of the first embodiment of the present invention having the same main components such as a variable type venturi carburetor 31, and air bleed control valve 98 a fuel supply control valve 91, main pressure regulator 41, an idle speed control valve 96 etc. However, in this case the variable type carburetor 31 does not accommodate for a main metering jet 88 and corresponding tapered valve needle 87 for adjusting the air/fuel ratio of the charge in the intake passage 79, but a specific air flow meter 400 is provided to sense the amount of air sucked into the intake passage 74. In this case the main fuel supply valve 91 is controlled additionally in response to the air flow through the intake passage 74 and, accordingly, the main fuel supply valve 91 accommodates for final adjustment of the supply of fuel to the intake passage 79 as there is not needle valve 87 provided (as is characteristic for the above-discussed embodiments using a variable type venturi carburetor 31.) Accordingly, the fuel supply to the main fuel chamber 89 is controlled by the variable main jet of the fuel control supply valve 91 based upon a signal from the air flow meter 400. In this case, the signal from the air flow meter file is also used for compensation of ignition timing and varying engine environmental conditions such as compensating for the amount of fuel under travelling conditions through mountainous regions or for compensating the amount of fuel considering a pressure drop across the air filter.

It may be easily understood that in this case the control of the stepping motor of the fuel supply control valve 91 is relatively complicated due to the additional function of finally controlling the supply of fuel into the intake passage 79 at the area of the carburetor 300.

Evidently, the afore-indicated further embodiments were only discussed in as far as they differ from the afore-mentioned embodiments of Figs. 1 and 29. The same reference numerals were used for the same parts and repeated explanation thereof is not deemed to be necessary.

In the embodiments described and particularly those employed using an air valve or contstant depression type of carburetor, the fuel/air control has been managed by, at least partially, sensing the air flow through the induction system in the charge former. It is to be understood, however, that more accurate air flow sensing may be accomplished by providing an air flow sensor of any known type upstream of the carburetor, for example in the air inlet system. In such arrangements, the output from the air flow sensor will also be be transmitted to the ECU 72 so that the ECU 72 can more accurately control the amount of fuel supplied in relation to the actual air flowing through the system. It is believed obvious to those skilled in the art how this can be done from this description.

It should be readily apparent from the aforedescribed constructions that the embodiments of the invention both illustrated and described is extremely effective in providing good fuel/air control for an engine, rapid heat up of the catalytic convertor, without supplying excess fuel, and in a way in which the operation of the oxygen sensor and its reaching its operating temperature can be easily checked without adversely affecting either performance inthe terms of the output of the engine or exhaust emission control. Of course, the foregoing descriptions is that of preferred embodiments of the invention and various changes and modifications may be made without departing from the spirit and scope of the invention, as defined by the appended claims.

## Claims

1. Method of operating an internal combustion engine which at least temporarily is fuelled with gaseous fuel,
said engine including an induction system for supplying controlled air/fuel mixture to a combustion chamber, and a catalytic converter and an oxygen sensor in its exhaust system,
wherein bleeding air being supplied to a flow of fuel thereby forming an air/fuel pre-mixture the amount of bleeding air being determined in response to control signals which in turn are determined on the basis of pre-set data and signals from said oxygen sensor, and
wherein said pre-mixture is subsequently mixed with intake air in a mixing device thereby forming an intake air/fuel mixture which is supplied to the combustion chamber,
**characterized in that**
the amount of intake mixture is controlled by a control device downstream said mixing device,
wherein during an initial warming-up period, at least until the catalytic converter commences operation, a lean intake air/fuel mixture of λ > 1 is supplied to the combustion chamber by adjusting the amount of bleeding air according to said pre-set data, and wherein upon determination of operation of said oxygen sensor feedback control of λ is started whereupon the amount of bleeding air is determined in accordance with signals from said oxygen sensor, and wherein during said warming up phase said determination is made whether or not said oxygen sensor has reached its operating temperature by enriching the intake air/fuel mixture for a brief moment and by subsequently checking whether or not the oxygen sensor provides a rich mixture output signal.

2. Method as claimed in claim 1, wherein the oxygen sensor (106), when operating, outputs a control signal for a feedback control of the supply of a stoichiometric fuel/air mixture λ = 1.

3. Method as claimed in one of claims 1, or 2, **characterized in that** the period of supplying a lean air/fuel mixture of λ > 1 is equal to the period until the catalytic converter (25) commences operation.

4. Method as claimed in one of claims 1 to 3, **characterized in that** the period of supplying a lean air/fuel mixture of λ > 1 is no longer than the period until the catalytic converter (25) commences operation.

5. Method as claimed in at least one of the preceding claims, wherein upstream of the control of an amount of fuel by bleeding air into a flow of fuel outside of the intake passage, another pre-adjustment of the amount of fuel is performed.

6. Method as claimed in at least one of the preceding claims, wherein a controlled amount of fuel is supplied continuously into the intake passage through a variable venturi-type mixing device (31), said variable mixing device (31) being controlled automatically in response to engine load.

7. Method as claimed in at least one of the preceding claims, wherein a feedback control of an air-bleed valve (98) is performed in response to the output of the oxygen sensor (106) to establish a fine tuning of bleeding air into the flow of fuel upstream of the main regulator valve (87,88) for adjusting the air/fuel ratio, while an average of an opening area of the air-bleed valve (98) is substantially kept constant.

8. Method as clamed in claim 7, wherein the main regulator valve (87,88) maintains a desired fuel/air mixture, specifically a stoichiometric mixture of λ = 1, with substantially constant step value of a stepping motor controlled air bleed control valve (98) whereas another fuel control valve (91) for compensating the amount of fuel supplied to the intake manifold depending upon engine running and/or engine environmental conditions and adjusting the amount of fuel and that an average of the step value of the step motor controlled air bleed control value (98) become substantially constant.

9. Internal combustion engine which can be at least temporarily fuelled with gaseous fuel, comprising:
an induction system for supplying a controlled air/fuel mixture to a combustion chamber,
an exhaust system including a catalytic converter (25) and an oxygen sensor (106),
an air bleed valve (98) for supplying air to a flow of fuel from a fuel source to thereby form an air/fuel pre-mixture,
a mixing device (31) for subsequently mixing said pre-mixture with intake air to thereby form an air/fuel intake mixture,
means (72) for controlling the amount of bleeding air supplied through said air bleed valve (98) in response to control signals which are determined on the basis of pre-set data and signals from said oxygen sensor (106),
**characterized in that**
a control device (86) is arranged downstream said mixing device to control the amount of intake mixture supplied to the combustion chamber, means for determining whether or not the oxygen sensor (106) has started operating are provided, where upon determination of operation of said oxygen sensor (106) a feedback control of the air/fuel ratio λ is started to control the air bleed valve (98) in accordance with signals from said oxygen sensor, whereas otherwise during an initial warming-up period a lean air/fuel mixture of λ > 1, is supplied to the combustion chamber by controlling the air bleed valve (98) in accordance with said pre-set data, wherein means (64) for enriching the intake air/fuel mixture for a brief moment during said warming up phase are provided for making said determination whether or not said oxygen sensor has reached its operating temperature by subsequently checking whether or not the oxygen sensor provides a rich mixture output signal.

10. Internal combustion engine according to claim 9, further comprising a cylinder block having a combustion chamber, an induction system for supplying a fuel/air mixture to said combustion chamber, said fuel air mixture being provided by a charge forming device having an air intake passage the upstream end of which is communicated to atmospheric air whereas the downstream end supplies the fuel/air mixture towards the combustion chamber, a driver-operated throttle valve and an air/fuel-ratio regulating main regulator means which is controlled automatically in response to a flow of atmospheric air into the intake, an exhaust gas arrangement for discharging the exhaust gas from said combustion chamber and a fuel delivery system for at least temporarily supplying gaseous fuel from a source of gaseous fuel, wherein said main regulator means comprises a variable venturi-type mixing device (31) having a displaceable valve member (87) for controlling a main metering jet (88) of a fuel supply chamber (89).

11. Internal combustion engine as claimed in claim 9 or 10, wherein said oxygen sensor (106) is disposed upstream of a catalytic converter (25) in an exhaust manifold (23).

12. Internal combustion engine as claimed in at least one of the preceding claims 9 to 11, wherein the air bleed valve (98) is adapted to control an air supply passage, opening upstream of the main metering jet (88) into the fuel supply chamber (89), said air bleed valve (98) is preset to a midway valve position which is substantially kept constant while said constant valve characteristic is superimposed by the control signal of the oxygen sensor (106).

13. Internal combustion engine as claimed in at least one of the preceding claims 9 to 12, wherein the valve member of the carburetor (31) is a needle valve (87) cooperating with the main metering jet (88), the shape of both of them is selected so as to provide the desired air/fuel-ratio.

14. Internal combustion engine as claimed in claim 13, wherein the shape of the needle valve (87) and the cooperating main metering jet (88) is designed so as to provide a substantially stoichiometric mixture at any amount of air present in the intake passage (79), in a condition wherein the adjustment of the air bleed valve (98) is maintained at a preset position.

15. Internal combustion engine as claimed in at least one of the preceding claims 9 to 14, wherein a stepping motor controlled fuel control valve (91) is provided upstream of the main metering jet (88) to adjust fuel supply to the main fuel chamber (89) in response to the engine operating conditions.

16. Internal combustion engine as claimed in at least one of the preceding claims 9 to 15, wherein an idle bypass passageway (92) is provided between the main fuel chamber (89) and an idle port (94) positioned downstream of an idle position of the load-responsive throttle valve (86) to control idle fuel flow.

17. Internal combustion engine as claimed in claim 16, wherein an idle air flow bypass passageway (95) is provided between the upstream and downstream sides of the load-responsive throttle valve (86) controlled by means of a valve which assumes an open position under idling conditions.

18. Internal combustion engine as claimed in at least one of the preceding claims 9 to 17, wherein at least one fuel shut-off valve (103) is provided for rapidly supplying additional air into the main fuel chamber (89) to provide rapid shut-off of fuel supply under certain engine running conditions.

19. Internal combustion engine according to one of claims 9 to 18 wherein mixing device (31) comprises a main fuel chamber (89) opening into said intake passage, the supply of fuel to said intake passage being controlled by first and second fuel control valves, wherein, the first fuel control valve (91) adjusts fuel supply to the main fuel chamber (89) in response to engine environmental conditions and/or a valve adjustment representing signal of the second fuel control valve while the second fuel control valve is adapted to control fuel supply to the induction passage.

20. Internal combustion engine according to claim 19, wherein the first fuel control valve (91) is controlled to compensate for any fluctuations of the engine operating and/or environmental conditions including the composition of the gaseous fuel to maintain a basic pre-adjustment of the opening area of the second fuel control valve substantially constant.

21. Internal combustion engine according to at least one of the preceding claims 19 or 20, wherein the mixing device (31) is of the variable venturi-type comprising a valve member-controlled main metering jet (88) connecting the main fuel chamber (89) to the intake passage.

## Patentansprüche

1. Verfahren zum Betreiben einer Brennkraftmaschine, die zumindest temporär mit gasförmigem Kraftstoff kraftstoffmäßig versorgt wird,
wobei die Maschine ein Ansaugsystem zum Zuführen einer gesteuerten Luft/Kraftstoff-Mischung zu einer Verbrennungskammer und einen katalytischen Wandler und einen Sauerstoffsensor in seinem Abgassystem umfaßt,
wobei Nebenluft zu einer Strömung aus Kraftstoff zugeführt wird, um dadurch eine Luft/Kraftstoff-Vormischung zu bilden, wobei die Menge an Nebenluft in Abhängigkeit von Steuersignalen bestimmt wird, die wiederum auf der Basis vorab eingestellter Daten und Signale von dem Sauerstoffsensor bestimmt werden, und
wobei die Vormischung im wesentlichen mit Einlaßluft in einer Mischvorrichtung gemischt wird, um dadurch eine Einlaß-Luft/Kraftstoff-Mischung zu bilden, die zu der Verbrennungskammer zugeführt wird,
dadurch gekennzeichnet,
daß die Menge einer Einlaßmischung durch eine Steuervorrichtung ausströmseitig der Mischvorrichtung gesteuert wird,
wobei während einer anfänglichen Aufwärmperiode, zumindest bis der katalytische Wandler seinen Betrieb beginnt, eine magere Einlaß-Luft/Kraftstoff-Mischung von λ > 1 zu der Verbrennungskammer durch Einstellen der Menge von Nebenluft gemäß den vorab eingestellten Daten zugeführt wird, und wobei unter Bestimmung eines Betriebs des Sauerstoffsensors eine Rückkopplungssteuerung von λ gestartet wird, woraufhin die Menge an Nebenluft gemäß Signalen von dem Sauerstoffsensor bestimmt wird, und wobei während der Aufwärmphase diese Bestimmung vorgenommen wird, ob der Sauerstoffsensor seine Betriebstemperatur erreicht hat oder nicht, durch Anreicherung der Einlaß-Luft/Kraftstoff-Mischung für einen kurzen Moment und durch darauffolgendes Prüfen, ob der Sauerstoffsensor ein Ausgangssignal über eine angereicherte Mischung liefert oder nicht.

2. Verfahren nach Anspruch 1, wobei der Sauerstoffsensor (106), wenn er arbeitet, ein Steuersignal für eine Rückkopplungssteuerung über die Zufuhr einer stöchiometrischen Kraftstoff/Luft-Mischung λ = 1 ausgibt.

3. Verfahren nach einem der Ansprüche 1 oder 2, dadurch gekennzeichnet, daß die Periode einer Zuführung einer mageren Luft/Kraftstoff-Mischung von λ > 1 gleich zu der Periode ist, bis der katalytische Wandler (25) seinen Betrieb beginnt.

4. Verfahren nach einem der Ansprüche 1 bis 3, dadurch gekennzeichnet, daß die Periode einer Zuführung einer mageren Luft/Kraftstoff-Mischung von λ >1 nicht länger als die Periode ist, bis der katalytische Wandler (25) seinen Betrieb beginnt.

5. Verfahren nach mindestens einem der vorhergehenden Ansprüche, wobei, einströmseitig der Steuerung einer Menge an Kraftstoff durch Nebenluft in eine Strömung von Kraftstoff außerhalb des Einlaßkanals hinein, eine andere Voreinstellung der Menge an Kraftstoff durchgeführt wird.

6. Verfahren nach mindestens einem der vorhergehenden Ansprüche, wobei eine gesteuerte Menge an Kraftstoff kontinuierlich in den Einlaßkanal über eine variable Mischvorrichtung (31) vom Venturi-Typ zugeführt wird, wobei die variable Mischvorrichtung (31) automatisch in Abhängigkeit einer Maschinenlast gesteuert wird.

7. Verfahren nach mindestens einem der vorhergehenden Ansprüche, wobei eine Rückkopplungssteuerung eines Nebenluftventils (98) in Abhängigkeit des Ausgangs des Sauerstoffsensors (106) durchgeführt wird, um eine Feinabstimmung von Nebenluft in die Strömung von Kraftstoff einströmseitig des Hauptregulatorventils (87, 88) hinein zum Einstellen des Luft/Kraftstoff-Verhältnisses einzurichten, während ein Durchschnitt eines Öffnungsflächenbereichs des Nebenluftventils (98) im wesentlichen konstant gehalten wird.

8. Verfahren nach Anspruch 7, wobei das Hauptregulatorventil (87, 88) eine erwünschte Kraftstoff/Luft-Mischung, insbesondere eine stöchiometrische Mischung von λ = 1, mit einem im wesentlichen konstanten Schrittwert eines mittels Schrittmotor gesteuerten Nebenluftsteuerventils (98) beibehält, wogegen ein anderes Kraftstoffsteuerventil (91) zum Kompensieren der Menge an Kraftstoff, der zu dem Einlaßverteiler zugeführt ist, in Abhängigkeit von Maschinenlauf- und/oder Maschinenumgebungsbedingungen und Einstellen der Menge an Kraftstoff dient, und daß ein Durchschnitt des Schrittwerts des mittels Schrittmotors gesteuerten Nebenluftsteuerventils (98) im wesentlichen konstant wird.

9. Brennkraftmaschine, die mindestens temporär mit gasförmigem Kraftstoff kraftstoffmäßig versorgt werden kann, die aufweist:
ein Ansaugsystem zum Zuführen einer gesteuerten Luft/Kraftstoff-Mischung zu einer Verbrennungskammer,
ein Abgassystem, das einen katalytischen Wandler (25) und einen Sauerstoffsensor (106) umfaßt,
ein Nebenluftventil (98) zum Zuführen von Luft zu einer Strömung aus Kraftstoff von einer Kraftstoffquelle, um dadurch eine Luft/Kraftstoff-Vormischung zu bilden,
eine Mischvorrichtung (31) zum darauffolgenden Mischen der Vormischung mit Einlaßluft, um dadurch eine Luft/Kraftstoff-Einlaßmischung zu bilden,
eine Einrichtung (72) zum Steuern der Menge an Nebenluft, die über das Nebenluftventil (98) in Abhängigkeit von Steuersignalen zugeführt wird, die auf der Basis von vorab eingestellten Daten und Signalen von dem Sauerstoffsensor (106) bestimmt sind,
dadurch gekennzeichnet, daß
eine Steuervorrichtung (86) ausströmseitig der Mischvorrichtung angeordnet ist, um die Menge einer Einlaßmischung zu steuern, die zu der Verbrennungskammer zugeführt ist, eine Einrichtung zum Bestimmen, ob der Sauerstoffsensor (106) seinen Betrieb begonnen hat oder nicht, vorgesehen ist, wobei unter Bestimmung eines Betriebs des Sauerstoffsensors (106) eine Rückkopplungssteuerung des Luft/Kraftstoff-Verhältnisses λ gestartet wird, um das Nebenluftventil (98) in Abhängigkeit von Signalen von dem Sauerstoffsensor zu steuern, wogegen ansonsten während einer anfänglichen Aufwärmperiode eine magere Luft/Kraftstoff-Mischung von λ > 1 zu der Verbrennungskammer durch Steuern des Nebenluftventils (98) gemäß den vorab eingestellten Daten zugeführt wird, wobei eine Einrichtung (64) zum Anreichern der Einlaß-Luft/Kraftstoff-Mischung für einen kurzen Augenblick während der Aufwärmphase zum Vornehmen der Bestimmung, ob der Sauerstoffsensor seine Betriebstemperatur erreicht hat oder nicht, durch darauffolgendes Prüfen, ob der Sauerstoffsensor ein Ausgangssignal über eine angereicherte Mischung liefert oder nicht, vorgesehen ist.

10. Brennkraftmaschine nach Anspruch 9, die weiterhin einen Zylinderblock, der eine Verbrennungskammer besitzt, ein Ansaugsystem zum Zuführen einer Kraftstoff/Luft-Mischung zu der Verbrennungskammer, wobei die Kraftstoff/Luft-Mischung durch eine eine Ladung bildende Vorrrichtung geliefert wird, die einen Lufteinlaßkanal besitzt, wobei das einströmseitige Ende davon mit Atmosphärenluft in Verbindung steht, wogegen das ausströmseitige Ende die Kraftstoff/Luft-Mischung zu der Verbrennungskammer hin zuführt, ein mit einem Antrieb betätigtes Drossel klappenventil und eine ein Luft/Kraftstoff-Verhältnis regulierende Hauptregulatoreinrichtung, die automatisch in Abhängigkeit einer Strömung von Atmosphärenluft in den Einlaß hinein gesteuert wird, eine Abgasanordnung zum Abgeben des Abgases von der Verbrennungskammer und ein Kraftstoffzufuhrsystem für zumindest ein temporäres Zuführen von gasförmigem Kraftstoff von einer Quelle gasförmigen Kraftstoffes, aufweist, wobei die Hauptregulatoreinrichtung eine variable Mischvorrichtung (31) vom Venturi-Typ aufweist, die ein verschiebbares Ventilteil (87) zum Steuern einer Hauptdosierdüse (88) einer Kraftstoffzufuhrkammer (89) besitzt.

11. Brennkraftmaschine nach Anspruch 9 oder 10, wobei der Sauerstoffsensor (106) einströmseitig eines katalytischen Wandlers (25) in einem Abgasverteiler (23) angeordnet ist.

12. Brennkraftmaschine nach mindestens einem der vorhergehenden Ansprüche 9 bis 11, wobei das Nebenluftventil (98) dazu angepaßt ist, einen Luftzufuhrkanal zu steuern, der sich einströmseitig der Hauptdosierdüse (88) in die Kraftstoffzufuhrkammer (89) hinein öffnet, wobei das Nebenluftventil (98) vorab auf eine mittlere Ventilposition eingestellt ist, die im wesentlichen konstant gehalten wird, während die Konstant-Ventil-Charakteristik durch das Steuersignal des Sauerstoffsensors (106) überlagert wird.

13. Brennkraftmaschine nach mindestens einem der vorhergehenden Ansprüche 9 bis 12, wobei das Ventilteil des Vergasers (31) ein Nadelventil (87) ist, das mit der Hauptdosierdüse (88) zusammenwirkt, wobei die Form von beiden so ausgewählt ist, um das gewünschte Luft/Kraftstoff-Verhältnis zu liefern.

14. Brennkraftmaschine nach Anspruch 13, wobei die Form des Nadelventils (87) und die zusammenwirkende Hauptdosierdüse (88) so ausgelegt ist, um eine im wesentlichen stöchiometrische Mischung bei irgendeiner Menge an Luft, die in dem Einlaßkanal (79) vorhanden ist, zu liefern, in einem Zustand, bei dem die Einstellung des Nebenluftventils (98) bei einer vorab eingestellten Position beibehalten wird.

15. Brennkraftmaschine nach mindestens einem der vorhergehenden Ansprüche 9 bis 14, wobei ein mittels Schrittmotor gesteuertes Kraftstoffsteuerventil (91) einströmseitig der Hauptdosierdüse (88) vorgesehen ist, um eine Kraftstoffzufuhr zu der Hauptkraftstoffkammer (89) in Abhängigkeit der Maschinenbetriebsbedingungen einzustellen.

16. Brennkraftmaschine nach mindestens einem der vorhergehenden Ansprüche 9 bis 15, wobei ein Leerlauf-Bypass-Durchgangsweg (92) zwischen der Hauptkraftstoffkammer (89) und einer Leerlauföffnung (94), positioniert ausströmseitig einer Leerlaufposition des auf eine Last ansprechenden Drosselklappenventils (86), vorgesehen ist, um eine Leerlaufkraftstoffströmung zu steuern.

17. Brennkraftmaschine nach Anspruch 16, wobei ein Leerlauf-Luft-Bypass-Durchgangsweg (95) zwischen der Einström- und Ausströmseite des auf eine Last ansprechenden Drosselklappenventils (86), gesteuert mittels eines Ventils, das eine offene Position unter Leerlaufbedingungen annimmt, vorgesehen ist.

18. Brennkraftmaschine nach mindestens einem der vorhergehenden Ansprüche 9 bis 17, wobei mindestens ein Kraftstoffabsperrventil (103) für ein schnelles Zuführen von zusätzlicher Luft in die Hauptkraftstoffkammer (89) hinein vorgesehen ist, um ein schnelles Absperren einer Kraftstoffzufuhr unter bestimmten Maschinenbetriebsbedingungen zu erreichen.

19. Brennkraftmaschine nach einem der Ansprüche 9 bis 18, wobei die Mischvorrichtung (31) eine Hauptkraftstoffkammer (89), die sich in den Einlaßkanal öffnet, aufweist, wobei die Zufuhr von Kraftstoff zu dem Einlaßkanal durch ein erstes und ein zweites Kraftstoffsteuerventil gesteuert wird, wobei das erste Kraftstoffsteuerventil (91) eine Kraftstoffzufuhr zu der Hauptkraftstoffkammer (89) in Abhängigkeit von Maschinenumgebungsbedingungen und/oder einem eine Ventileinstellung darstellenden Signal des zweiten Kraftstoffsteuerventils einstellt, während das zweite Kraftstoffsteuerventil so angepaßt ist, um eine Krafstoffzufuhr zu dem Ansaugkanal zu steuern.

20. Brennkraftmaschine nach Anspruch 19, wobei das erste Kraftstoffsteuerventil (91) so gesteuert wird, um irgendwelche Fluktuationen der Maschinenbetriebs- und/oder -umgebungsbedingungen, einschließlich der Zusammensetzung des gasförmigen Kraftstoffes, zu kompensieren, um eine Grundvoreinstellung des Öffnungsflächenbereichs des zweiten Kraftstoffsteuerventils im wesentlichen konstant beizubehalten.

21. Brennkraftmaschine nach mindestens einem der vorhergehenden Ansprüche 19 oder 20, wobei die Mischvorrichtung (31) von dem variablen Venturi-Typ ist, der eine mittels Ventilteil gesteuerte Hautpdosierdüse (88) aufweist, die die Hauptkraftstoffkammer (89) mit dem Einlaßkanal verbindet.

## Revendications

1. Procédé pour faire fonctionner un moteur à combustion interne qui est, au moins temporellement, alimenté avec un carburant gazeux,
ledit moteur incluant un système d'admission pour fournir un mélange air/carburant régulé à une chambre de combustion, et un convertisseur catalytique et un détecteur d'oxygène dans un système d'échappement,
dans lequel de l'air de purge étant fourni à un écoulement de carburant formant ainsi un pré-mélange air/carburant, la quantité d'air de purge étant déterminée en réponse aux signaux de commande qui à leur tour sont déterminés sur la base de données et de signaux pré-réglés à partir dudit détecteur d'oxygène, et
dans lequel ledit pré-mélange est ultérieurement mélangé avec l'arrivée d'air dans un dispositif de mélange formant ainsi un mélange air/carburant d'entrée qui est fourni à la chambre de combustion,
**caractérisé en ce que**
la quantité de mélange d'arrivée est régulée par un dispositif de commande en aval dudit dispositif de mélange,
dans lequel pendant une durée de chauffage initiale, au moins jusqu'à ce que le convertisseur catalytique commence à fonctionner, un mélange air/carburant d'arrivée maigre de λ > 1 est fourni à la chambre de combustion en ajustant la quantité d'air de purge selon lesdites données pré-réglées, et dans lequel après détermination de l'opération dudit détecteur d'oxygène, la commande de rétroaction de λ est commencée après quoi la quantité d'air de purge est déterminée conformément aux signaux provenant dudit détecteur d'oxygène, et dans lequel pendant ladite phase de chauffage, ladite détermination est effectuée, que ledit détecteur d'oxygène ait atteint ou non sa température de fonctionnement en enrichissant le mélange air/carburant d'arrivée pendant un bref moment et en vérifiant ultérieurement si oui ou non le détecteur d'oxygène fournit un signal de sortie de mélange riche.

2. Procédé selon la revendication 1, dans lequel le détecteur d'oxygène (106), quand il est en fonctionnement, produit un signal de commande pour une commande de rétroaction de l'alimentation en mélange carburant/air stoechiométrique λ = 1.

3. Procédé selon la revendication 1 ou 2, **caractérisé en ce que** la durée d'alimentation d'un mélange air/carburant maigre de λ > 1 est égale à la durée jusqu'à ce que le convertisseur catalytique (25) commence à fonctionner.

4. Procédé selon l'une quelconque des revendications 1, à 3, **caractérisé en ce que** la durée d'alimentation d'un mélange air/carburant maigre de λ > 1 n'est pas plus longue que la durée jusqu'à ce que le convertisseur catalytique (25) commence à fonctionner.

5. Procédé selon au moins l'une des revendications précédentes, dans lequel en amont de la commande de la quantité de carburant par sortie d'air dans un écoulement de carburant à l'extérieur du passage d'arrivée, un autre pré-ajustement de la quantité de carburant est réalisé.

6. Procédé selon au moins l'une des revendications précédentes, dans lequel une quantité régulée de carburant est fournie en continu dans le passage d'arrivée par l'intermédiaire d'un dispositif de mélange de type venturi variable (31), ledit dispositif de mélange variable (31) étant commandé automatiquement en réponse à la charge du moteur.

7. Procédé selon au moins l'une des revendications précédentes, dans lequel une commande de rétroaction de vanne de purge d'air (98) est réalisée en réponse à la sortie du détecteur d'oxygène (106) pour établir un réglage fin de purge d'air dans l'écoulement de carburant en amont de la vanne de régulation principale (87, 88) pour ajuster le rapport air/carburant, alors qu'une moyenne d'une zone d'ouverture de la vanne de purge d'air (98) est sensiblement maintenue constante.

8. Procédé selon la revendication 7, dans lequel la vanne de régulation principale (87, 88) maintient un mélange carburant/air souhaité, spécifiquement un mélange stoechiométrique de λ = 1, avec une valeur de pas sensiblement constante d'une vanne de régulation de purge d'air (98) commandée par un moteur pas-à-pas tandis qu'une autre vanne de régulation de carburant (91) pour compenser la quantité de carburant fournie au collecteur d'arrivée selon les conditions environnementales du moteur et/ou du fonctionnement du moteur et pour ajuster la quantité de carburant et qu'une moyenne de la valeur de pas de la vanne de régulation de purge d'air commandée par un moteur pas-à-pas (98) devient sensiblement constante.

9. Moteur à combustion interne qui peut être au moins temporellement alimenté par du carburant gazeux, comprenant:
- un système d'admission pour fournir un mélange air/carburant régulé à une chambre de combustion;
- un système d'échappement incluant un convertisseur catalytique (25) et un détecteur d'oxygène (106);
- une vanne de purge d'air (98) pour fournir de l'air à un écoulement de carburant à partir d'une source de carburant pour former ainsi un pré-mélange air/carburant;
- un dispositif de mélange (31) pour mélanger ultérieurement ledit pré-mélange avec l'air d'arrivée pour former ainsi un mélange d'arrivée air/carburant;
- un moyen (72) pour réguler la quantité d'air de purge fournie à travers ladite vanne de purge d'air (98) en réponse aux signaux de commande qui sont déterminés sur la base de données pré-réglées et de signaux provenant dudit détecteur d'oxygène (106);
**caractérisé en ce que**
un dispositif de commande (86) est disposé en aval dudit dispositif de mélange pour réguler la quantité de mélange d'arrivée fournie à la chambre de combustion, un moyen pour déterminer si oui ou non le détecteur d'oxygène (106) a commencé de fonctionner, sont fournis, après la détermination du fonctionnement dudit détecteur d'oxygène (106) une commande de rétroaction du rapport air/carburant λ est commencée pour commander la vanne de purge d'air (98) conformément aux signaux provenant dudit détecteur d'oxygène, tandis que sinon, pendant une durée de chauffage initiale, un mélange air/carburant maigre de λ > 1, est fourni à la chambre de combustion en commandant la vanne de purge d'air (98) conformément auxdites données pré-réglées, dans lequel le moyen (64) pour enrichir le mélange air/carburant d'arrivée pendant un bref moment pendant ladite phase de chauffage est fourni pour faire ladite détermination, que ledit détecteur d'oxygène ait atteint ou non sa température de fonctionnement en vérifiant ultérieurement si oui ou non le détecteur d'oxygène fournit un signal de production de mélange riche.

10. Moteur à combustion interne selon la revendication 9, comprenant de plus un bloc cylindre ayant une chambre de combustion, un système d'admission pour fournir un mélange carburant/air à ladite chambre de combustion, ledit mélange carburant/air étant fourni par un dispositif formant une charge ayant un passage d'arrivée d'air, dont l'extrémité en amont est en communication avec l'air atmosphérique tandis que l'extrémité en aval fournit le mélange carburant/air vers la chambre de combustion, une vanne papillon commandée par un conducteur et un moyen de régulation principal régulant le rapport air/carburant qui est régulé automatiquement en réponse à un écoulement d'air atmosphérique dans l'arrivée, une disposition de gaz d'échappement pour évacuer les gaz d'échappement de ladite chambre de combustion et un système de délivrance de carburant pour au moins fournir temporellement un carburant gazeux à partir d'une source de carburant gazeux, dans lequel ledit moyen régulateur principal comprend un dispositif de mélange de type venturi variable (31) ayant un élément de vanne déplaçable (87) pour réguler un gicleur principal (88) d'une chambre d'alimentation en carburant (89).

11. Moteur à combustion interne selon la revendication 9 ou 10, dans lequel ledit détecteur d'oxygène (106) est disposé en amont d'un convertisseur catalytique (25) dans un collecteur d'échappement (23).

12. Moteur à combustion interne selon au moins l'une des revendications 9 à 11, dans lequel la vanne de purge d'air (98) est adaptée pour commander un passage d'arrivée d'air, ouvrant en amont du gicleur principal (88) dans la chambre d'arrivée de carburant (89), ladite vanne de purge d'air (98) est pré-fixée à une position de vanne à mi-course qui est sensiblement maintenue constante alors que ladite caractéristique de vanne constante est superposée par le signal de régulation du détecteur d'oxygène (106).

13. Moteur à combustion interne selon au moins l'une des revendication 9 à 12, dans lequel l'élément de vanne du carburateur (31) est une vanne à aiguille (87) coopérant avec le gicleur principal (88), la forme des deux est choisie de façon à fournir le rapport air/carburant.

14. Moteur à combustion interne selon la revendication 13, dans lequel la forme de la vanne à aiguille (87) et du gicleur principal coopérant (88) est conçue de façon à fournir un mélange sensiblement stoechiométrique à n'importe quelle quantité d'air présent dans le passage d'arrivée (79), dans une condition dans laquelle l'ajustement de la vanne de purge d'air (98) est maintenu à une position pré-fixée.

15. Moteur à combustion interne selon au moins l'une des revendications 9 à 14, dans lequel une vanne de régulation de carburant régulée par un moteur pas-à-pas (91) est fournie en amont du gicleur principal (88) pour ajuster l'alimentation en carburant à la chambre de carburant principale (89) en réponse aux conditions de fonctionnement du moteur.

16. Moteur à combustion interne selon au moins l'une des revendications 9 à 15, dans lequel un passage de court-circuit de ralenti (92) est fourni entre la chambre de carburant principale (89) et une ouverture de ralenti (94) positionnée en aval d'une position de ralenti de la vanne papillon responsable de la charge (86) pour réguler l'écoulement de carburant au ralenti.

17. Moteur à combustion interne selon la revendication 16, dans lequel un passage de court-circuit d'écoulement d'air au ralenti (95) est fourni entre les côtés en amont et en aval de la vanne papillon responsable de la charge (86) commandé par une vanne qui suppose une position ouverte dans des conditions de ralenti.

18. Moteur à combustion interne selon au moins l'une des revendications 9 à 17, dans lequel au moins une vanne coupant le carburant (103) est fournie pour alimenter rapidement en l'air supplémentaire dans la chambre de carburant principale (89) pour fournir une coupure rapide de l'alimentation en carburant dans certaines conditions de fonctionnement du moteur.

19. Moteur à combustion interne, selon l'une quelconque des revendications 9 à 18, dans lequel un dispositif de mélange (31) comprend une chambre de carburant principale (89) s'ouvrant dans ledit passage d'arrivée, l'alimentation en carburant audit passage d'arrivée étant régulé par des première et deuxième vannes de régulation de carburant, dans lequel la première vanne de régulation de carburant (91) ajuste l'alimentation en carburant à la chambre de carburant principale (89) en réponse aux conditions environnementales du moteur et/ou un signal représentant un ajustement de vanne de la deuxième vanne de régulation du carburant alors que la deuxième vanne de régulation de carburant est adaptée pour réguler l'alimentation en carburant au passage d'admission.

20. Moteur à combustion interne selon la revendication 19, dans lequel la première vanne de régulation du carburant (91) est commander pour compenser toutes fluctuations du fonctionnement du moteur et/ou des conditions environnementales, incluant la composition du carburant gazeux pour maintenir un pré-ajustement de base de la zone d'ouverture de la deuxième vanne de régulation du carburant sensiblement constant.

21. Moteur à combustion interne selon au moins l'une des revendications 19 ou 20, dans lequel le dispositif de mélange (31) est du type venturi variable comprenant un gicleur principal (88) régulé par un élément de vanne reliant la chambre de carburant principale (89) au passage d'arrivée.
